(19) Europäisches Patentamt

European Patent Office

Office européen des brevets

(11) **EP 4 538 241 A1**

(12) **EUROPEAN PATENT APPLICATION**
published in accordance with Art. 153(4) EPC

(43) Date of publication:
**16.04.2025 Bulletin 2025/16**

(21) Application number: **23819773.5**

(22) Date of filing: **02.06.2023**

(51) International Patent Classification (IPC):
**C03C 3/085** (2006.01)    **C03C 3/093** (2006.01)
**C03C 3/097** (2006.01)    **C03C 10/02** (2006.01)

(52) Cooperative Patent Classification (CPC):
**C03C 3/085; C03C 3/093; C03C 3/097; C03C 10/00**

(86) International application number:
**PCT/JP2023/020637**

(87) International publication number:
**WO 2023/238793 (14.12.2023 Gazette 2023/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.06.2022 JP 2022092818
24.03.2023 JP 2023047597
14.04.2023 JP 2023066361**

(71) Applicant: **Nippon Electric Glass Co., Ltd.
Otsu-shi, Shiga 520-8639 (JP)**

(72) Inventors:
• **YOKOTA Yuki
  Otsu-shi Shiga 520-8639 (JP)**
• **WAKAI Yutaro
  Otsu-shi Shiga 520-8639 (JP)**
• **TAKAHASHI Takahiro
  Otsu-shi Shiga 520-8639 (JP)**

(74) Representative: **Tetzner, Michael
Tetzner & Partner mbB
Patent- und Rechtsanwälte
Van-Gogh-Strasse 3
81479 München (DE)**

(54) **ZNO-AL2O3-SIO2 GLASS AND METHOD FOR PRODUCING SAME**

(57)    Provided is, as an alternative to $Li_2O$-$Al_2O_3$-$SiO_2$-based crystallized glasses, a glass having excellent translucency, thermal resistance, and thermal shock resistance. A $ZnO$-$Al_2O_3$-$SiO_2$-based glass contains, in terms of % by mass, 40 to 90% $SiO_2$, 5 to 35% $Al_2O_3$, more than 0 to 35% $ZnO$, and 0 to 5% $Li_2O$+$Na_2O$+$K_2O$.

**EP 4 538 241 A1**

**Description**

[Technical Field]

The present invention relates to $ZnO$-$Al_2O_3$-$SiO_2$-based glasses and $ZnO$-$Al_2O_3$-$SiO_2$-based crystallized glasses each having low thermal expansion characteristics.

[Background Art]

Conventionally, a crystallized glass is used as a material for front windows of oil stoves, wood stoves and the like, setters for firing electronic components, furnace core tubes for producing semiconductors, dimension measurement members, communication members, construction members, chemical reaction containers, electromagnetic cooker top plates, heat-resistant tableware, heat-resistant covers, fireproof door windows, members for astrometric telescopes, linear thermal expansion coefficient adjusting members, and so on. For example, Patent Literatures 1 to 3 disclose crystallized glasses in which $Li_2O$-$Al_2O_3$-$SiO_2$-based crystals, such as a β-quartz solid solution ($Li_2O \cdot Al_2O_3 \cdot nSiO_2$ [where $2 \leq n \leq 4$]) or a β-spodumene solid solution ($Li_2O \cdot Al_2O_3 \cdot nSiO_2$ [where $n \geq 4$]) are precipitated as a major crystalline phase.

These crystallized glasses have a low coefficient of linear thermal expansion and high mechanical strength and therefore have excellent thermal characteristics. In addition, the type of crystals to be precipitated therein can be controlled by appropriately adjusting heat treatment conditions in a crystallization process and, thus, a crystallized glass having translucency can be easily produced.

[Citation List]

[Patent Literature]

[PTL 1]
JP-B-S39-21049
[PTL 2]
JP-B-S40-20182
[PTL 3]
JP-A-H01-308845

[Summary of Invention]

[Technical Problem]

Meanwhile, the raw material price of lithium is rising recently with widespread use of lithium-ion batteries, which makes it difficult to stably produce $Li_2O$-$Al_2O_3$-$SiO_2$-based crystallized glasses and stably supply them to the market.

Because of this situation, there has been demand for a low thermal expansion material having translucency and excellent thermal characteristics as an alternative to $Li_2O$-$Al_2O_3$-$SiO_2$-based crystallized glasses.

An object of the present invention is to provide, as an alternative to $Li_2O$-$Al_2O_3$-$SiO_2$-based crystallized glasses, a $ZnO$-$Al_2O_3$-$SiO_2$-based glass having excellent translucency and thermal characteristics, particularly having thermal resistance and thermal shock resistance.

[Solution to Problem]

The inventors conducted intensive studies and, as a result, found that appropriately designing a glass composition enables a low thermal expansion glass having a low coefficient of linear thermal expansion and excellent translucency, thermal resistance, and thermal shock resistance to be obtained. In the present invention, $ZnO$-$Al_2O_3$-$SiO_2$-based glasses are treated as compositions consisting mainly of $ZnO$, $Al_2O_3$, and $SiO_2$.

A $ZnO$-$Al_2O_3$-$SiO_2$-based glass according to the present invention contains, in terms of % by mass, 40 to 90% $SiO_2$, 5 to 35% $Al_2O_3$, more than 0 to 35% $ZnO$, and 0 to 5% $Li_2O$+$Na_2O$+$K_2O$.

The $ZnO$-$Al_2O_3$-$SiO_2$-based glass according to the present invention preferably contains, in terms of % by mass, more than 0% $Fe_2O_3$.

The $ZnO$-$Al_2O_3$-$SiO_2$-based glass according to the present invention preferably contains, in terms of % by mass, not more than 10% $HfO_2$.

The ZnO-Al$_2$O$_3$-SiO$_2$-based glass according to the present invention preferably contains not more than 30 ppm Pt and not more than 30 ppm Rh.

The ZnO-Al$_2$O$_3$-SiO$_2$-based glass according to the present invention preferably contains, in terms of % by mass, more than 0% MoO$_3$.

The ZnO-Al$_2$O$_3$-SiO$_2$-based glass according to the present invention preferably contains, in terms of % by mass, more than 0% SnO$_2$.

The ZnO-Al$_2$O$_3$-SiO$_2$-based glass according to the present invention preferably contains, in terms of % by mass, more than 0% Cr$_2$O$_3$.

In the ZnO-Al$_2$O$_3$-SiO$_2$-based glass according to the present invention, a ratio Al$_2$O$_3$/ZnO between Al$_2$O$_3$ and ZnO contained therein is preferably 0.14 to 2300 in terms of mass ratio.

In the ZnO-Al$_2$O$_3$-SiO$_2$-based glass according to the present invention, a ratio ZnO/(SiO$_2$+B$_2$O$_3$) is preferably more than 0 to 0.75 in terms of mass ratio.

In the ZnO-Al$_2$O$_3$-SiO$_2$-based glass according to the present invention, a ratio (Li$_2$O+Na$_2$O+K$_2$O)/Fe$_2$O$_3$ is preferably not more than 10000 in terms of mass ratio.

In the ZnO-Al$_2$O$_3$-SiO$_2$-based glass according to the present invention, a content of ZnO+B$_2$O$_3$+P$_2$O$_5$ is preferably more than 0 to 55% in terms of % by mass.

In the ZnO-Al$_2$O$_3$-SiO$_2$-based glass according to the present invention, a ratio (ZnO+B$_2$O$_3$+P$_2$O$_5$)/ZnO is preferably not less than 1.001 in terms of mass ratio.

The ZnO-Al$_2$O$_3$-SiO$_2$-based glass according to the present invention preferably has a coefficient of linear thermal expansion of not more than $60 \times 10^{-7}$/°C at 30 to 750°C.

The ZnO-Al$_2$O$_3$-SiO$_2$-based glass according to the present invention preferably has a transmittance of not less than 0.1% at a thickness of 4 mm and a wavelength of 555 nm.

The ZnO-Al$_2$O$_3$-SiO$_2$-based glass according to the present invention preferably has a Young's modulus of not less than 65 Gpa.

The ZnO-Al$_2$O$_3$-SiO$_2$-based glass according to the present invention may be a crystallized glass. In the present invention, when the ZnO-Al$_2$O$_3$-SiO$_2$-based glass is a crystallized glass, the crystallized glass is also referred to as a "ZnO-Al$_2$O$_3$-SiO$_2$-based crystallized glass".

A method for producing a ZnO-Al$_2$O$_3$-SiO$_2$-based glass according to the present invention is a method for producing any one of the above-described glasses and includes the steps of: melting a glass raw material to obtain a molten glass; and forming the molten glass into shape, wherein a process of forming the molten glass into shape is at least one selected from among an overflow process, a float process, a down-draw process, a slot down process, a redraw process, a containerless process, a blow process, a press forming process, a roll process, a bushing process, and a tube draw process.

The method for producing a ZnO-Al$_2$O$_3$-SiO$_2$-based glass according to the present invention may further include the step of subjecting a glass obtained in the step of forming the molten glass into shape to heat treatment to crystallize the glass.

The ZnO-Al$_2$O$_3$-SiO$_2$-based glass according to the present invention is preferably used for a cooker top plate, a fireproof window, a heat-resistant tableware or a construction member.

[Advantageous Effects of Invention]

The present invention enables provision of, as an alternative to Li$_2$O-Al$_2$O$_3$-SiO$_2$-based crystallized glasses, a ZnO-Al$_2$O$_3$-SiO$_2$-based glass having excellent translucency, thermal resistance, and thermal shock resistance.

[Description of Embodiments]

A ZnO-Al$_2$O$_3$-SiO$_2$-based glass (hereinafter, also referred simply as a "glass") according to the present invention contains, in terms of % by mass, 40 to 90% SiO$_2$, 5 to 35% Al$_2$O$_3$, more than 0 to 35% ZnO, and 0 to 5% Li$_2$O+Na$_2$O+K$_2$O. Reasons why the contents and characteristics of the components are limited as just described will be described below. In the following description of the respective contents of components, "%" refers to "% by mass" unless otherwise stated.

SiO$_2$ is a component that forms part of a glass network. Furthermore, SiO$_2$ is also a component that can be particularly involved in the likelihood of phase separation. The content of SiO$_2$ is 40 to 90%, preferably 50 to 90%, 45 to 85%, 40 to 82%, 41 to 80%, 50 to 80%, 52% to 79%, 53% to 78%, or 53.5 to 77%, particularly preferably 54 to 76%. If the content of SiO$_2$ is too small, the coefficient of linear thermal expansion tends to increase and, therefore, a glass having excellent thermal resistance and thermal shock resistance is less likely to be obtained. In addition, the chemical durability tends to decrease. On the other hand, if the content of SiO$_2$ is too large, the homogeneity of glass melt is likely to decrease. In addition, scum having a large content of SiO$_2$ is likely to be produced on the surface of the glass melt, devitrified matter, such as cristobalite, is likely to precipitate from the scum, and, therefore, the production load is likely to increase.

$Al_2O_3$ is a component that forms part of a glass network. Furthermore, $Al_2O_3$ is also a component that can be involved in the likelihood of phase separation or the like. The content of $Al_2O_3$ is 5 to 35%, preferably 7 to 33%, 9 to 30%, or 10 to 28%, and particularly preferably 11 to 25%. If the content of $Al_2O_3$ is too small, the coefficient of linear thermal expansion tends to increase and, therefore, a glass having excellent thermal resistance and thermal shock resistance is less likely to be obtained. In addition, the chemical durability is likely to decrease to alter the glass surface. As a result, the surface irregularities become worse and, thus, a desired translucency is less likely to be obtained. On the other hand, if the content of $Al_2O_3$ is too large, the homogeneity of glass melt is likely to decrease. In addition, mullite crystals or other crystals tend to precipitate to devitrify the glass and the glass becomes susceptible to breakage.

ZnO is a component that reduces the viscosity of glass to increase the meltability and formability of the glass. Furthermore, ZnO is also a component for controlling the coefficient of linear thermal expansion and refractive index of glass. Moreover, ZnO is a component that can be involved in phase separation of glass and a constituent of Zn-containing crystals, such as $ZnAl_2O_4$ (gahnite). The content of ZnO is more than 0 to 35%, preferably 1 to 35%, 3 to 35%, 5 to 35%, 7 to 35%, 9 to 35%, 9 to 32%, 9 to 28%, 9 to 25%, or 9 to 23%, and particularly preferably 9 to 21%. If the content of ZnO is too small, mullite crystals or other crystals tend to precipitate to devitrify the glass. In addition, the homogeneity of glass melt is likely to decrease. On the other hand, if the content of ZnO is too large, the coefficient of linear thermal expansion becomes too high, which make it difficult to obtain a glass having excellent thermal resistance and thermal shock resistance. In addition, the homogeneity of glass melt is likely to decrease. Furthermore, the chemical durability of the glass is likely to decrease to alter the glass surface. As a result, the surface irregularities become worse and, thus, a desired translucency is less likely to be obtained.

Zn cations, Al cations, and O anions may be coordinated to compensate for charges in a glass and a crystallized glass. Thus, when an electrically neutral conformation is formed and a highly covalent chemical bond is formed, the glass is likely to be particularly chemically stabilized. Such a glass having a chemically stable conformation structure has excellent chemical resistance and high thermal shock resistance. Therefore, the ratio $Al_2O_3/ZnO$ (the value obtained by dividing the content of $Al_2O_3$ by the content of ZnO) is, in terms of mass ratio, preferably 0.14 to 2300, 0.14 to 1000, 0.14 to 500, 0.1 to 100, 0.1 to 100, 0.14 to 4.5, 0.14 to 4, 0.14 to 3.5, 0.14 to 3, 0.14 to 2.5, 0.14 to 2, 0.3 to 2, 0.5 to 2, 0.6 to 2, or 0.6 to 1.9, and particularly preferably 0.7 to 1.9.

Each of $Li_2O$, $Na_2O$, and $K_2O$ is a component that reduces the viscosity of glass to increase the meltability and formability of the glass. Furthermore, these components are also components that can be involved in phase separation of glass. The content of $Li_2O+Na_2O+K_2O$ (the total content of $Li_2O$, $Na_2O$, and $K_2O$) is 0 to 5%, preferably 0 to 4.5%, 0 to 4%, 0 to 3.5%, 0 to 3%, 0 to 2.5%, 0 to 2%, 0 to 1.5%, 0 to 1%, 0 to 0.9%, 0 to 0.8%, 0 to 0.7%, 0 to 0.6%, 0 to 0.5%, 0 to 0.4%, 0 to 0.35%, 0 to 0.3%, 0 to 0.2%, or 0 to 0.1%, and particularly preferably 0 to 0.05%. The content of $Li_2O+Na_2O+K_2O$ is too large, the coefficient of linear thermal expansion becomes too high, which make it difficult to obtain a glass having excellent thermal resistance and thermal shock resistance. In addition, the homogeneity of glass melt is likely to decrease. Furthermore, the chemical durability of the glass is likely to decrease to alter the glass surface. As a result, the surface irregularities become worse and, thus, a desired translucency is less likely to be obtained. Meanwhile, $Li_2O$, $Na_2O$, and $K_2O$ are likely to be mixed as impurities into the glass. Therefore, if complete removal of these components is pursued, the raw material batch tends to be expensive to increase the production cost. In reducing the increase in production cost, the lower limit of the content of $Li_2O+Na_2O+K_2O$ is preferably more than 0%, more preferably not less than 0.0001%, even more preferably not less than 0.0003%, still even more preferably not less than 0.0005%, and particularly preferably not less than 0.001%.

$Li_2O$ is a component that reduces the viscosity of glass to increase the meltability and formability of the glass. Furthermore, $Li_2O$ is also a component that can be involved in phase separation of glass. The content of $Li_2O$ is preferably 0 to 5%, 0 to 4.5%, 0 to 4%, 0 to 3.5%, 0 to 3%, 0 to 2.5%, 0 to 2%, 0 to 1.5%, 0 to 1%, 0 to 0.9%, 0 to 0.8%, 0 to 0.7%, 0 to 0.6%, 0 to 0.5%, or 0 to 0.4%, and particularly preferably 0 to 0.39%. If the content of $Li_2O$ is too large, the coefficient of linear thermal expansion becomes too high, which make it difficult to obtain a glass having excellent thermal resistance and thermal shock resistance. In addition, the homogeneity of glass melt is likely to decrease. Furthermore, the chemical durability of the glass is likely to decrease to alter the glass surface. As a result, the surface irregularities become worse and, thus, a desired translucency is less likely to be obtained. Meanwhile, $Li_2O$ is likely to be mixed as impurities into the glass. Therefore, if complete removal of $Li_2O$ is pursued, the raw material batch tends to be expensive to increase the production cost. Therefore, in order to reduce the increase in production cost, the lower limit of the content of $Li_2O$ is preferably more than 0%, not less than 0.0001%, not less than 0.0002%, not less than 0.0003%, not less than 0.0004%, or not less than 0.0005%, and particularly preferably not less than 0.001%.

$Na_2O$ is a component that reduces the viscosity of glass to increase the meltability and formability of the glass. Furthermore, $Na_2O$ is also a component for controlling the coefficient of linear thermal expansion and refractive index of glass and a component that can be involved in phase separation of glass. The content of $Na_2O$ is preferably 0 to 5%, 0 to 4.5%, 0 to 4%, 0 to 3.5%, 0 to 3%, 0 to 2.5%, 0 to 2%, 0 to 1.5%, 0 to 1%, 0 to 0.9%, 0 to 0.8%, 0 to 0.7%, 0 to 0.6%, 0 to 0.5%, or 0 to 0.4%, and particularly preferably 0 to 0.39%. If the content of $Na_2O$ is too large, the coefficient of linear thermal expansion becomes too high, which make it difficult to obtain a glass having excellent thermal resistance and thermal shock resistance. In addition, the homogeneity of glass melt is likely to decrease. Furthermore, the chemical durability of the glass is likely to decrease to alter the glass surface. As a result, the surface irregularities become worse and, thus, a desired translucency is less likely to be obtained. Meanwhile, $Na_2O$ is likely to be mixed as impurities into the glass. Therefore, if complete removal of $Na_2O$ is pursued, the raw material batch tends to be expensive to increase the production cost. In reducing the increase in production cost, the lower limit of the content of $Na_2O$ is preferably more than 0%, not less than 0.0001%, not less than 0.0003%, not less than 0.0005%, not less than 0.001%, not less than 0.002%, not less than 0.004%, not less than 0.006%, or not less than 0.008%, and particularly preferably not less than 0.01%.

$K_2O$ is a component that reduces the viscosity of glass to increase the meltability and formability of the glass. Furthermore, $K_2O$ is also a component for controlling the coefficient of linear thermal expansion and refractive index of glass and a component that can be involved in phase separation of glass. The content of $K_2O$ is preferably 0 to 5%, 0 to 4.5%, 0 to 4%, 0 to 3.5%, 0 to 3%, 0 to 2.5%, 0 to 2%, 0 to 1.5%, 0 to 1%, 0 to 0.9%, 0 to 0.8%, 0 to 0.7%, 0 to 0.6%, 0 to 0.5%, or 0 to 0.4%, and particularly preferably 0 to 0.39%. If the content of $K_2O$ is too large, the coefficient of linear thermal expansion becomes too high, which make it difficult to obtain a glass having excellent thermal resistance and thermal shock resistance. In addition, the homogeneity of glass melt is likely to decrease. Furthermore, the chemical durability of the glass is likely to decrease to alter the glass surface. As a result, the surface irregularities become worse and, thus, a desired translucency is less likely to be obtained. Meanwhile, $K_2O$ is likely to be mixed as impurities into the glass. Therefore, if complete removal of $K_2O$ is pursued, the raw material batch tends to be expensive to increase the production cost. In reducing the increase in production cost, the lower limit of the content of $K_2O$ is preferably more than 0%, more preferably not less than 0.0001%, even more preferably not less than 0.0003%, still even more preferably not less than 0.0005%, and particularly preferably not less than 0.001%.

The $ZnO$-$Al_2O_3$-$SiO_2$-based glass according to the present invention may contain, in addition to the above components, the following components.

$Fe_2O_3$ is a component that, when contained in an appropriate amount into the composition, reduces the viscosity of glass to increase the meltability and formability of the glass. Furthermore, $Fe_2O_3$ is a component that releases an oxygen-based gas by redox reaction and also a component that can be involved in the clarity of glass. Moreover, $Fe_2O_3$ is a coloring component of glass that absorbs light of various wavelengths and also a component that can be involved in phase separation of glass. The content of $Fe_2O_3$ is preferably more than 0%, not less than 0.0001%, not less than 0.0003%, not less than 0.0005%, not less than 0.0007%, not less than 0.0009%, not less than 0.0011%, not less than 0.0013%, not less than 0.0015%, not less than 0.002%, not less than 0.003%, not less than 0.004%, not less than 0.005%, not less than 0.006%, not less than 0.0.007%, not less than 0.008%, or not less than 0.009%, and particularly preferably not less than 0.01%. On the other hand, if the content of $Fe_2O_3$ is too large, the glass is easily colored and is therefore less likely to obtain a desired translucency. Furthermore, devitrified matter containing $Fe$ is likely to precipitate and, thus, the production load is likely to increase. Therefore, the content of $Fe_2O_3$ is preferably not more than 20%, not more than 15%, not more than 10%, not more than 5%, not more than 1%, or not more than 0.5%, and particularly preferably not more than 0.1%. In accordance with the application of the glass according to the present invention, the content of $Fe_2O_3$ may be controlled to adjust the translucency. For example, in the case where a colored (for example, black) appearance is required for a cooker top plate or the like, the content of $Fe_2O_3$ may be not less than 0.05%, not less than 0.08%, not less than 0.1%, not less than 0.2%, or particularly not less than 0.3%.

Each of $Li_2O$, $Na_2O$, and $K_2O$ is a component that reduces the viscosity of glass to increase the meltability and formability of the glass. Furthermore, these components are involved in the optical basicity of glass and the glass tends to increase the optical basicity as it contains a larger amount of $Li_2O$, $Na_2O$, and/or $K_2O$. Meanwhile, $Fe_2O_3$ is a coloring component of glass that absorbs light of various wavelengths. When the optical basicity of the glass is high, $Fe$ ions are likely to be present in a trivalent state. When the optical basicity of the glass is low, $Fe$ ions are likely to be present in a divalent state. Trivalent $Fe$ ions are likely to absorb light in the ultraviolet to visible region, while divalent $Fe$ ions are likely to absorb light in the infrared region. The respective transmittancies in the ultraviolet, visible, and infrared regions need to be adjusted according to the application of the glass according to the present invention, in which case it is preferred to suitably control the optical basicity of the glass and the valence of $Fe$ ions. Therefore, the ratio $(Li_2O+Na_2O+K_2O)/Fe_2O_3$ (the value obtained by dividing the total content of $Li_2O$, $Na_2O$, and K2 by the content of $Fe_2O_3$) is preferably not less than 0, not less than 0.1, not less than 0.2, not less than 0.3, or not less than 0.4, and particularly preferably not less than 0.5. By doing so, the respective transmittancies in the ultraviolet, visible, and infrared regions can be easily adjusted while the viscosity of glass is reduced. Furthermore, the ratio $(Li_2O+Na_2O+K_2O)/Fe_2O_3$ is preferably not more than 10000, not more than 1000, not more than 100, not more than 50, not more than 40, not more than 30, or not more than 25, and particularly preferably not more than 15. By doing so, the glass can be kept from being excessively reduced in viscosity and can be easily formed into shape.

$HfO_2$ is a component that increases the Young's modulus, modulus of rigidity, and so on of glass and also a component that reduces the viscosity of glass to increase the meltability and formability of the glass. Furthermore, $HfO_2$ is also a component that can be involved in phase separation of glass. In accordance with the application of the glass according to the present invention, the composition needs to be designed to control the content of $HfO_2$ to give the glass a desired strength. If the content of $HfO_2$ is too large, the mechanical strength of the glass or crystallized glass becomes excessively high, which makes processing or the like difficult and thus makes it difficult to obtain a desired surface condition and, eventually, a desired excellent translucency. Furthermore, the raw material for $HfO_2$ is expensive, leading to an increased production cost. In view of the above, the content of $HfO_2$ is preferably not more than 10%, not more than 9%, not more than 8%, not more than 7%, not less than 6%, not more than 5%, not more than 4%, not more than 3%, not more than 2%, not more than 1%, not more than 0.5%, not more than 0.4%, or not more than 0.3%, and particularly preferably not more than 0.2%. The lower limit of the content of $HfO_2$ is not particularly limited and not less than 0%. However, $HfO_2$ is a component that can be mixed into the glass from raw materials used and the amount of $HfO_2$ mixed varies depending on the composition of the raw materials. Therefore, actually, it is acceptable for the glass to contain $HfO_2$ in an amount of not less than 0.0001%, not less than 0.0003%, and particularly not less than 0.0005%.

Pt is a component that can be mixed in the ionic, colloidal, metallic or other states into glass and causes the glass to develop a yellowish to ginger color. Furthermore, Pt is also a component that can be involved in phase separation of glass. The content of Pt is preferably not more than 30 ppm, not more than 28 ppm, not more than 26 ppm, not more than 24 ppm, not more than 22 ppm, not more than 20 ppm, not more than 18 ppm, not more than 16 ppm, not more than 14 ppm, not more than 12 ppm, not more than 10 ppm, not more than 8 ppm, not more than 6 ppm, not more than 4 ppm, not more than 2 ppm, not more than 1.6 ppm, not more than 1.4 ppm, not more than 1.2 ppm, not more than 1 ppm, not more than 0.9 ppm, not more than 0.8 ppm, not more than 0.7 ppm, not more than 0.6, not more than 0.5 ppm, not more than 0.45 ppm, not more than 0.4 ppm, or not more than 0.35 ppm, and particularly preferably not more than 0.3 ppm. If the content of Pt is too large, devitrified matter containing Pt is likely to precipitate, and, therefore, the production load is likely to increase. Meanwhile, the lower limit of the content of Pt is not particularly limited and may be 0 ppm. However, there may be a case where, with the use of general melting facilities, Pt members need to be used in order to obtain a homogeneous glass. Therefore, if complete removal of Pt is pursued, the production cost tends to increase. In the absence of any adverse effect on coloring, for the purpose of reducing the increase in production cost, the lower limit of the content of Pt is preferably not less than 0.0001 ppm, not less than 0.001 ppm, not less than 0.005 ppm, not less than 0.01 ppm, not less than 0.03 ppm, not less than 0.05 ppm, and particularly preferably not less than 0.07 ppm.

Rh is a component that can be mixed in the ionic, colloidal, metallic or other states into glass and causes the glass to develop a yellowish to ginger color. Furthermore, Rh is also a component that can be involved in phase separation of glass. The content of Rh is preferably not more than 30 ppm, not more than 28 ppm, not more than 26 ppm, not more than 24 ppm, not more than 22 ppm, not more than 20 ppm, not more than 18 ppm, not more than 16 ppm, not more than 14 ppm, not more than 12 ppm, not more than 10 ppm, not more than 8 ppm, not more than 6 ppm, not more than 4 ppm, not more than 2 ppm, not more than 1.6 ppm, not more than 1.4 ppm, not more than 1.2 ppm, not more than 1 ppm, not more than 0.9 ppm, not more than 0.8 ppm, not more than 0.7 ppm, not more than 0.5 ppm, not more than 0.4 ppm, or not more than 0.35 ppm, and particularly preferably not more than 0.3 ppm. If the content of Rh is too large, devitrified matter containing Rh is likely to precipitate, and, therefore, the production load is likely to increase. Meanwhile, the lower limit of the content of Rh is not particularly limited and may be 0 ppm. However, there may be a case where, with the use of general melting facilities, Rh members need to be used in order to obtain a homogeneous glass. Therefore, if complete removal of Rh is pursued, the production cost tends to increase. In the absence of any adverse effect on coloring, for the purpose of reducing the increase in production cost, the lower limit of the content of Rh is preferably not less than 0.0001 ppm, not less than 0.001 ppm, not less than 0.005 ppm, not less than 0.01 ppm, not less than 0.03 ppm, not less than 0.04 ppm, not less than 0.05 ppm, and particularly preferably not less than 0.07 ppm.

Furthermore, the content of Pt+Rh (the total content of Pt and Rh) is preferably not more than 60 ppm, not more than 56 ppm, not more than 52 ppm, not more than 48 ppm, not more than 44 ppm, not more than 42 ppm, not more than 38 ppm, not more than 34 ppm, not more than 30 ppm, not more than 26 ppm, not more than 22 ppm, not more than 18 ppm, not more than 14 ppm, not more than 10 ppm, not more than 6 ppm, not more than 4.5 ppm, not more than 4 ppm, not more than 3.75 ppm, not more than 3.5 ppm, not more than 3 ppm, not more than 2.75 ppm, not more than 2.5 ppm, not more than 2.25 ppm, not more than 2 ppm, not more than 1.75 ppm, not more than 1.25 ppm, not more than 1 ppm, not more than 0.9 ppm, not more than 0.8 ppm, not more than 0.7 ppm, not more than 0.6 ppm, not more than 0.5 ppm, or not more than 0.4 ppm, and particularly preferably not more than 0.3 ppm. The lower limit of the content of Pt+Rh is not particularly limited and may be 0 ppm. However, there may be a case where, with the use of general melting facilities, Pt members and Rh members need to be used in order to obtain a homogeneous glass. Therefore, if complete removal of Pt and Rh is pursued, the production cost tends to increase. In the absence of any adverse effect on coloring, for the purpose of reducing the increase in production cost, the lower limit of the content of Pt+Rh is preferably not less than 0.0001 ppm, not less than 0.001 ppm, not less than 0.005 ppm, not less than 0.01 ppm, not less than 0.03 ppm, not less than 0.05 ppm, and particularly preferably not less than 0.07 ppm.

$MoO_3$ is a component that, when contained in an appropriate amount into the composition, reduces the viscosity of glass to increase the meltability and formability of the glass. Furthermore, $MoO_3$ is also a coloring component of glass that absorbs light of various wavelengths. Moreover, $MoO_3$ is also a component that can be involved in phase separation of glass. The content of $MoO_3$ is preferably more than 0% and particularly preferably not less than 0.0001%. On the other hand, if the content of $MoO_3$ is too large, the glass is easily colored and is therefore less likely to obtain a desired translucency. Furthermore, devitrified matter containing Mo is likely to precipitate and, thus, the production load is likely to increase. Therefore, the content of $MoO_3$ is preferably not more than 20%, not more than 15%, not more than 10%, not more than 5%, not more than 1%, or not more than 0.5%, and particularly preferably not more than 0.1%. In accordance with the application of the glass according to the present invention, the content of $MoO_3$ may be controlled to adjust the translucency. For example, in the case where a colored appearance is required for a cooker top plate or the like, the content of $MoO_3$ may be not less than 0.01%, not less than 0.05%, not less than 0.08%, not less than 0.1%, not less than 0.2%, or particularly not less than 0.3%.

$SnO_2$ is a component acting as a fining agent. Furthermore, $SnO_2$ is also a component for controlling the coefficient of linear thermal expansion and refractive index of glass or crystallized glass. Moreover, $SnO_2$ is also a component that can be involved in phase separation of glass. The content of $SnO_2$ is preferably not less than 0%, more than 0%, not less than 0.0001%, not less than 0.001%, not less than 0.005%, not less than 0.01%, not less than 0.03%, not less than 0.05%, not less than 0.1%, or not less than 0.15%, and particularly preferably not less than 0.2%. If the content of $SnO_2$ is too large, the coefficient of linear thermal expansion becomes too high, which make it difficult to obtain a glass having excellent thermal resistance and thermal shock resistance. In addition, the homogeneity of glass melt is likely to decrease. Furthermore, the chemical durability of the glass is likely to decrease to alter the glass surface. As a result, the surface irregularities become worse and, thus, a desired translucency is less likely to be obtained. The upper limit of the content of $SnO_2$ is not particularly limited, but is actually 20%. If the glass contains more than 20% $SnO_2$, devitrified matter containing Sn is likely to precipitate and, thus, the production load is likely to increase.

$Cr_2O_3$ is a component that, when contained in an appropriate amount into the composition, reduces the viscosity of glass to increase the meltability and formability of the glass. Furthermore, $Cr_2O_3$ is also a coloring component of glass that absorbs light of various wavelengths. Moreover, $Cr_2O_3$ is also a component that can be involved in phase separation of glass. The content of $Cr_2O_3$ is preferably more than 0%, more preferably not less than 0.00001%, even more preferably not less than 0.00005%, still even more preferably not less than 0.0001%, and particularly preferably not less than 0.0005%. On the other hand, if the content of $Cr_2O_3$ is too large, devitrified matter containing Cr is likely to precipitate, and, therefore, the production load is likely to increase. In addition, the glass is easily colored and is therefore less likely to obtain a desired translucency. Therefore, the content of $Cr_2O_3$ is preferably not more than 20%, not more than 15%, not more than 10%, not more than 5%, not more than 1%, or not more than 0.5%, and particularly preferably not more than 0.1%. In accordance with the application of the glass according to the present invention, the content of $Cr_2O_3$ may be controlled to adjust the translucency. For example, in the case where a colored appearance is required for a cooker top plate or the like, the content of $Cr_2O_3$ may be, in addition to the above preferred range, not less than 0.01%, not less than 0.05%, not less than 0.08%, not less than 0.1%, not less than 0.15%, not less than 0.18%, not less than 0.2%, not less than 0.25%, not less than 0.3%, not less than 0.4%, not less than 0.5%, not less than 0.6%, or particularly not less than 0.7%.

$B_2O_3$ is a component that reduces the viscosity of glass to increase the meltability and formability of the glass. Furthermore, $B_2O_3$ is also a component that can be particularly involved in the likelihood of phase separation. The content of $B_2O_3$ is preferably 0 to 30%, more than 0 to 30%, more than 0 to 25%, 1 to 25%, 2 to 20%, 2.5 to 19%, 3 to 18%, 3.5 to 17%, or 4 to 16%, and particularly preferably 4.5 to 15%. If the content of $B_2O_3$ is too large, the amount of $B_2O_3$ evaporated during melting becomes large and, thus, scum having a small content of $B_2O_3$ and a relatively large content of $SiO_2$ is likely to be produced on the surface of the glass melt. As a result, devitrified matter, such as cristobalite, is likely to precipitate from the scum, and, therefore, the production load increases. In addition, the chemical durability of the glass is likely to decrease to alter the glass surface, which makes the surface irregularities worse and makes it difficult to obtain a desired translucency.

ZnO, $SiO_2$, and $B_2O_3$ are components involved in the likelihood of phase separation of glass. By suitably controlling the ratio between the contents of these components, phase separation via binodal decomposition can be easily developed and, as a result, a desired translucency can be easily obtained. The reasons why a desired translucency can be easily obtained when phase separation via binodal decomposition is developed will be described hereinafter. The ratio $ZnO/(SiO_2+B_2O_3)$ (the value obtained by dividing the content of ZnO by the total content of $SiO_2$ and $B_2O_3$) is preferably more than 0 to 0.75, more than 0 to 0.7, more than 0 to 0.65, more than 0 to 0.6, or 0.05 to 0.6, and particularly preferably 0.1 to 0.6.

MgO is a component that reduces the viscosity of glass to increase the meltability and formability of the glass. Furthermore, MgO is also a component for decreasing the coefficient of linear thermal expansion of low thermal expansion glass and controlling the refractive index thereof. Moreover, MgO is also a component that can be involved in phase separation of glass. The content of MgO is preferably 0 to 30%, 0 to 25%, 0 to 20%, 0 to 15%, 0 to 10%, 0 to 9%, 0 to 8%, 0 to 7%, 0 to 6%, 0 to 5%, 0 to 4%, 0 to 3%, 0 to 2%, 0 to 1.5%, 0 to 1%, 0 to 0.5%, or 0 to 0.25%, and particularly preferably 0 to 0.1%. If the content of MgO is too large, contrariwise, the coefficient of linear thermal expansion becomes too high, which make it difficult to obtain a glass having excellent thermal resistance and thermal shock resistance. Furthermore, the chemical durability of the glass is likely to decrease to alter the glass surface. As a result, the surface irregularities become worse and, thus, a desired translucency is less likely to be obtained. Meanwhile, MgO is likely to be mixed as impurities into the glass. Therefore, if complete removal of MgO is pursued, the raw material batch tends to be expensive to increase the production cost. In reducing the increase in production cost, the lower limit of the content of MgO is preferably not less than 0.0001%, not less than 0.0003%, not less than 0.0005%, not less than 0.001%, not less than 0.003%, not less than 0.005%, not less than 0.007%, or not less than 0.009%, and particularly preferably not less than 0.01%. Depending on the application of the glass according to the present invention, MgO may be positively contained in the glass. For example, when the appearance of a cooker top plate or the like is colored, influences on the translucency due to worsening of the surface irregularities are acceptable. Therefore, the content of MgO may be not less than 0.5%, not less than 1%, not less than 2%, not less than 3%, not less than 4%, not less than 5%, or particularly not less than 5.5%.

$B_2O_3$ is a component involved in the likelihood of phase separation of glass. Meanwhile, it is known that the electric field intensity of Mg ions is higher than the other cations and glass containing $B_2O_3$ and MgO is likely to cause phase separation. By suitably controlling the ratio between these components, phase separation via binodal decomposition can be easily developed and, as a result, a desired translucency can be easily obtained. Thus, for example, in the case where the glass is desired to have a colored appearance for use in a cooker top plate or so on, the color derived from a coloring component added into the glass is likely to be reflected on the appearance of the glass. Therefore, the tone of the glass can be easily adjusted and, thus, a colored glass having even higher aesthetic quality can be easily obtained. Hence, the ratio $MgO/(MgO+B_2O_3)$ (the value obtained by dividing the content of MgO by the total content of MgO and $B_2O_3$) is preferably more than 0 to 0.99, more than 0 to 0.95, more than 0 to 0.90, more than 0 to 0.85, 0.01 to 0.8, 0.1 to 0.8, or 0.25 to 0.8, and particularly preferably 0.3 to 0.8. The reasons why a desired translucency can be easily obtained when phase separation via binodal decomposition is developed will be described hereinafter.

CaO is a component that reduces the viscosity of glass to increase the meltability and formability of the glass. Furthermore, CaO is also a component for controlling the coefficient of linear thermal expansion and refractive index of low thermal expansion glass. Moreover, CaO is also a component that can be involved in phase separation of glass. The content of CaO is preferably 0 to 30%, 0 to 25%, 0 to 20%, 0 to 15%, 0 to 10%, 0 to 9%, 0 to 8%, 0 to 7%, 0 to 6%, 0 to 5%, 0 to 4%, 0 to 3%, 0 to 2%, 0 to 1.5%, 0 to 1%, 0 to 0.5%, or 0 to 0.25%, and particularly preferably 0 to 0.1%. If the content of CaO is too large, the coefficient of linear thermal expansion becomes too high, which make it difficult to obtain a glass having excellent thermal resistance and thermal shock resistance. In addition, the homogeneity of glass melt is likely to decrease. Furthermore, the chemical durability of the glass is likely to decrease to alter the glass surface. As a result, the surface irregularities become worse and, thus, a desired translucency is less likely to be obtained. Meanwhile, CaO is likely to be mixed as impurities into the glass. Therefore, if complete removal of CaO is pursued, the raw material batch tends to be expensive to increase the production cost. In reducing the increase in production cost, the lower limit of the content of CaO is preferably not less than 0.0001%, not less than 0.0003%, not less than 0.0005%, not less than 0.001%, not less than 0.003%, not less than 0.005%, not less than 0.007%, or not less than 0.009%, and particularly preferably not less than 0.01%.

SrO is a component that reduces the viscosity of glass to increase the meltability and formability of the glass. Furthermore, SrO is also a component for controlling the coefficient of linear thermal expansion and refractive index of low thermal expansion glass. Moreover, SrO is also a component that can be involved in phase separation of glass. The content of SrO is preferably 0 to 30%, 0 to 25%, 0 to 20%, 0 to 15%, 0 to 10%, 0 to 9%, 0 to 8%, 0 to 7%, 0 to 6%, 0 to 5%, 0 to 4%, 0 to 3%, 0 to 2%, 0 to 1.5%, 0 to 1%, 0 to 0.5%, or 0 to 0.25%, and particularly preferably 0 to 0.1%. If the content of SrO is too large, the coefficient of linear thermal expansion becomes too high, which make it difficult to obtain a glass having excellent thermal resistance and thermal shock resistance. In addition, the homogeneity of glass melt is likely to decrease. Furthermore, the chemical durability of the glass is likely to decrease to alter the glass surface. As a result, the surface irregularities become worse and, thus, a desired translucency is less likely to be obtained. Meanwhile, SrO is likely to be mixed as impurities into the glass. Therefore, if complete removal of SrO is pursued, the raw material batch tends to be expensive to increase the production cost. In reducing the increase in production cost, the lower limit of the content of SrO is preferably not less than 0.0001%, not less than 0.0003%, not less than 0.0005%, not less than 0.001%, not less than 0.003%, not less than 0.005%, not less than 0.007%, or not less than 0.009%, and particularly preferably not less than 0.01%.

BaO is a component that reduces the viscosity of glass to increase the meltability and formability of the glass. Furthermore, BaO is also a component for controlling the coefficient of linear thermal expansion and refractive index of low thermal expansion glass. Moreover, BaO is also a component that can be involved in phase separation of glass. The content of BaO is preferably 0 to 30%, 0 to 25%, 0 to 20%, 0 to 15%, 0 to 10%, 0 to 9%, 0 to 8%, 0 to 7%, 0 to 6%, 0 to 5%, 0 to 4%, 0 to 3%, 0 to 2%, 0 to 1.5%, 0 to 1%, 0 to 0.5%, or 0 to 0.25%, and particularly preferably 0 to 0.1%. If the content of BaO is too large, the coefficient of linear thermal expansion becomes too high, which make it difficult to obtain a glass having excellent thermal resistance and thermal shock resistance. In addition, the meltability of glass is likely to decrease. Furthermore, the chemical durability of the glass is likely to decrease to alter the glass surface. As a result, the surface irregularities become worse and, thus, a desired translucency is less likely to be obtained. Meanwhile, BaO is likely to be mixed as impurities into the glass. Therefore, if complete removal of BaO is pursued, the raw material batch tends to be expensive to increase the production cost. In reducing the increase in production cost, the lower limit of the content of BaO is preferably not less than 0.0001%, not less than 0.0003%, not less than 0.0005%, not less than 0.001%, not less than 0.003%, not less than 0.005%, not less than 0.007%, or not less than 0.009%, and particularly preferably not less than 0.01%.

$ZrO_2$ is a component that increases the Young's modulus, modulus of rigidity, and so on of glass. Furthermore, $ZrO_2$ is also a component for controlling the coefficient of linear thermal expansion and refractive index of low thermal expansion glass. Moreover, $ZrO_2$ is also a component that can be involved in phase separation of glass. The content of $ZrO_2$ is preferably 0 to 10%, 0 to 9%, 0 to 8%, 0 to 7%, 0 to 6%, 0 to 5%, 0 to 4%, 0 to 3%, 0 to 2%, 0 to 1.5%, 0 to 1%, 0 to 0.5%, 0 to 0.25%, or 0 to 0.1%, and particularly preferably 0 to 0.01%. If the content of $ZrO_2$ is too large, the coefficient of linear thermal expansion becomes too high, which make it difficult to obtain a glass having excellent thermal resistance and thermal shock resistance. In addition, the homogeneity of glass melt is likely to decrease to make the glass less meltable, the viscosity of glass melt increases to make the glass difficult to clarify, and the glass is difficult to form into shape, which makes it likely that the productivity decreases. Meanwhile, $ZrO_2$ is likely to be mixed as impurities into the glass. Therefore, if complete removal of $ZrO_2$ is pursued, the raw material batch tends to be expensive to increase the production cost. In reducing the increase in production cost, the lower limit of the content of $ZrO_2$ is preferably not less than 0.0001%, not less than 0.0003%, not less than 0.0005%, not less than 0.001%, not less than 0.003%, not less than 0.005%, not less than 0.007%, or not less than 0.009%, and particularly preferably not less than 0.01%.

$TiO_2$ is a component that, when contained in an appropriate amount into the composition, reduces the viscosity of glass to increase the meltability and formability of the glass. Furthermore, $TiO_2$ is also a coloring component of glass that absorbs light of various wavelengths. It is known that, particularly, in the case of coexistence of titanium and iron, coloring like ilmenite ($FeTiO_3$) develops. It is also known that the coexistence of titanium and tin intensifies the yellowish color of glass. Furthermore, $TiO_2$ is also a component that can be particularly involved in the likelihood of phase separation. The content of $TiO_2$ is preferably 0 to 20%, 0 to 19%, 0 to 18%, 0 to 17%, 0 to 16%, 0 to 15%, 0 to 14%, 0 to 13%, 0 to 12%, 0 to 11%, 0 to 10%, 0 to 9%, 0 to 8%, 0 to 7%, 0 to 6%, 0 to 5%, 0 to 1%, or 0 to 0.5%, and particularly preferably 0 to 0.1%. If the content of $TiO_2$ is too large, the meltability of glass is likely to decrease. In addition, the glass is easily colored and is therefore less likely to obtain a desired translucency. Meanwhile, $TiO_2$ is likely to be mixed as impurities into the glass. Therefore, if complete removal of $TiO_2$ is pursued, the raw material batch tends to be expensive to increase the production cost. In reducing the increase in production cost, the lower limit of the content of $TiO_2$ is preferably not less than 0.0003%, not less than 0.0005%, not less than 0.001%, not less than 0.005%, or not less than 0.01%, and particularly preferably not less than 0.02%. In accordance with the application of the glass according to the present invention, the content of $TiO_2$ may be controlled to adjust the translucency. For example, in the case where a colored appearance is required for a cooker top plate or the like, the content of $TiO_2$ may be not less than 0.01%, not less than 0.05%, not less than 0.08%, not less than 0.1%, not less than 0.2%, or particularly not less than 0.3%.

$P_2O_5$ is a component for decreasing the coefficient of linear thermal expansion of low thermal expansion glass and controlling the refractive index thereof. Furthermore, $P_2O_5$ is a component that can be particularly involved in phase separation of glass. The content of $P_2O_5$ is preferably 0 to 20%, more than 0 to 20%, 0.1 to 20%, 0.5 to 20%, 1 to 19%, 2 to 18%, 3 to 17%, 4 to 16%, 5 to 15%, or 6 to 14%, and particularly preferably 7 to 14%. If the content of $P_2O_5$ is too large, contrariwise, the coefficient of linear thermal expansion becomes too high, which make it difficult to obtain a glass having excellent thermal resistance and thermal shock resistance. In addition, the homogeneity of glass melt is likely to decrease. Furthermore, the chemical durability of the glass is likely to decrease to alter the glass surface. As a result, the surface irregularities become worse and, thus, a desired translucency is less likely to be obtained. Meanwhile, $P_2O_5$ is likely to be mixed as impurities into the glass. Therefore, if complete removal of $P_2O_5$ is pursued, the raw material batch tends to be expensive to increase the production cost. In reducing the increase in production cost, the lower limit of the content of $P_2O_5$ is preferably not less than 0.0001%, not less than 0.0003%, not less than 0.0005%, not less than 0.001%, not less than 0.003%, not less than 0.005%, not less than 0.007%, or not less than 0.009%, and particularly preferably not less than 0.01%.

$ZnO$, $B_2O_3$, and $P_2O_5$ are components that reduce the viscosity of glass to increase the meltability and formability of the glass. Therefore, in order to increase the meltability and formability of glass and concurrently develop phase separation via binodal decomposition to achieve a desired translucency, the content of $ZnO+B_2O_3+P_2O_5$ (the total content of $ZnO$, $B_2O_3$, and $P_2O_5$) is preferably more than 0%, not less than 0.1%, not less than 0.5%, not less than 1%, not less than 2%, not less than 3%, not less than 4%, not less than 5%, not less than 6%, not less than 7%, or not less than 8%, and particularly preferably not less than 9%. On the other hand, if the content of $ZnO+B_2O_3+P_2O_5$ is too large, the chemical durability of the glass is likely to decrease to alter the glass surface, which makes the surface irregularities worse and makes it difficult to obtain a desired translucency. Therefore, the content of $ZnO+B_2O_3+P_2O_5$ is preferably not more than 55%, not more than 50%, not more than 40%, not more than 30%, not more than 20%, not more than 19%, not more than 18%, not more than 17%, not more than 16%, not more than 15%, not more than 14%, not more than 13%, or not more than 12%, and particularly preferably not more than 11%.

Zn cations, B cations, P cations, and O anions may be coordinated to compensate for charges of each other in a glass and a crystallized glass. Thus, when an electrically neutral conformation is formed and a highly covalent chemical bond is formed, the glass is likely to be particularly chemically stabilized. Such a glass having a chemically stable conformation structure has high chemical resistance and thermal shock resistance. Furthermore, each of $ZnO$, $B_2O_3$, and $P_2O_5$ is a component that reduces the viscosity of glass to increase the meltability and formability of the glass. In view of the above, by suitably controlling the ratio between these components, the productivity can be increased while the chemical resistance and thermal shock resistance of the glass can be increased. Therefore, the ratio $(ZnO+B_2O_3+P_2O_5)/ZnO$ (the value obtained by dividing the total content of $ZnO$, $B_2O_3$, and $P_2O_5$ by the content of $ZnO$) is preferably not less than 1.001, not less than 1.05, not less than 1.1, not less than 1.2, not less than 1.3, not less than 1.5, not less than 2, or not less than 5, and particularly preferably not less than 10, preferably not more than 2000, not more than 1600, not more than 1000, or not more than 600, and particularly preferably not more than 100.

$Y_2O_3$ is a component that reduces the viscosity of glass to increase the meltability and formability of the glass. Furthermore, $Y_2O_3$ is also a component for increasing the Young's modulus of low thermal expansion glass and controlling the coefficient of linear thermal expansion and refractive index thereof. Moreover, $Y_2O_3$ is also a component that can be involved in phase separation of glass. The content of $Y_2O_3$ is preferably 0 to 10%, 0 to 9%, 0 to 8%, 0 to 7%, 0 to 6%, 0 to 5%, 0 to 4.5%, 0 to 4%, 0 to 3.5%, 0 to 3%, 0 to 2.5%, or 0 to 2%, and particularly preferably 0 to 1.5%. If the content of $Y_2O_3$ is too large, the coefficient of linear thermal expansion becomes too high, which make it difficult to obtain a glass having excellent thermal resistance and thermal shock resistance. In addition, the homogeneity of glass melt is likely to decrease. Furthermore, the chemical durability of the glass is likely to decrease to alter the glass surface. As a result, the surface irregularities become worse and, thus, a desired translucency is less likely to be obtained. Meanwhile, $Y_2O_3$ is likely to be mixed as impurities into the glass. Therefore, if complete removal of $Y_2O_3$ is pursued, the raw material batch tends to be expensive to increase the production cost. In reducing the increase in production cost, the lower limit of the content of $P_2O_5$ is preferably not less than 0.0001%, not less than 0.0003%, not less than 0.0005%, not less than 0.001%, not less than 0.003%, not less than 0.005%, not less than 0.007%, or not less than 0.009%, and particularly preferably not less than 0.01%.

$As_2O_3$ and $Sb_2O_3$ are highly toxic and may contaminate the environment, for example, during the production process of glass or during treatment of waste glass. Therefore, $Sb_2O_3+As_2O_3$ (the total content of $Sb_2O_3$ and $As_2O_3$) is preferably not more than 2%, not more than 1%, not more than 0.7%, less than 0.7%, not more than 0.65%, not more than 0.6%, not more than 0.55%, not more than 0.5%, not more than 0.45%, not more than 0.4%, not more than 0.35%, not more than 0.3%, not more than 0.25%, not more than 0.2%, not more than 0.15%, not more than 0.1%, not more than 0.05%, not more than 0.04%, not more than 0.03%, not more than 0.02%, not more than 0.01%, not more than 0.005%, not more than 0.003%, not more than 0.002%, not more than 0.001%, not more than 0.0005%, not more than 0.0003%, or not more than 0.0001%, and particularly preferably substantially free of them (specifically, less than 0.0001%).

$NiO$ is a component that, when contained in an appropriate amount into the composition, reduces the viscosity of glass to increase the meltability and formability of the glass. Furthermore, $NiO$ is also a coloring component of glass that absorbs light of various wavelengths. Moreover, $NiO$ is also a component that can be involved in phase separation of glass. The content of $NiO$ is preferably 0 to 20%, 0 to 15%, 0 to 10%, 0 to 8%, 0 to 6%, 0 to 4%, 0 to 2%, 0 to 1%, 0 to 0.5%, 0 to 0.25%, 0 to 0.1%, or 0 to 0.01%, and particularly preferably 0 to 0.005%. If the content of $NiO$ is too large, the meltability of glass is likely to decrease. In addition, the glass is easily colored and is therefore less likely to obtain a desired translucency. Meanwhile, $NiO$ is likely to be mixed into the glass from SUS members or the like in the production process. Therefore, if complete removal of $NiO$ is pursued, the raw material batch tends to be expensive to increase the production cost. In reducing the increase in production cost, the lower limit of the content of $NiO$ is preferably more than 0, more preferably not less than 0.0001%, even more preferably not less than 0.0002%, and particularly preferably not less than 0.0003%. In accordance with the application of the glass according to the present invention, the content of $NiO$ may be controlled to adjust the translucency. For example, in the case where a colored appearance is required for a cooker top plate or the like, the content of $NiO$ may be not less than 0.01%, not less than 0.05%, not less than 0.08%, not less than 0.1%, not less than 0.2%, or particularly not less than 0.3%.

$MnO_2$ is a component that, when contained in an appropriate amount into the composition, reduces the viscosity of glass to increase the meltability and formability of the glass. Furthermore, $MnO_2$ is also a coloring component of glass that absorbs light of various wavelengths. Moreover, $MnO_2$ is also a component that can be involved in phase separation of glass. The content of $MnO_2$ is preferably 0 to 20%, 0 to 15%, 0 to 10%, 0 to 8%, 0 to 6%, 0 to 4%, 0 to 2%, 0 to 1%, 0 to 0.5%, 0 to 0.25%, 0 to 0.1%, or 0 to 0.01%, and particularly preferably 0 to 0.005%. If the content of $MnO_2$ is too large, the meltability of glass is likely to decrease. In addition, the glass is easily colored and is therefore less likely to obtain a desired translucency. Meanwhile, $MnO_2$ is likely to be mixed as impurities into the glass. Therefore, if complete removal of $MnO_2$ is pursued, the raw material batch tends to be expensive to increase the production cost. In reducing the increase in production cost, the lower limit of the content of $MnO_2$ is preferably more than 0, more preferably not less than 0.0001%, even more preferably not less than 0.0002%, and particularly preferably not less than 0.0003%. In accordance with the application of the glass according to the present invention, the content of $MnO_2$ may be controlled to adjust the translucency. For example, in the case where a colored appearance is required for a cooker top plate or the like, the content of $MnO_2$ may be not less than 0.01%, not less than 0.05%, not less than 0.08%, not less than 0.1%, not less than 0.2%, or particularly not less than 0.3%.

$V_2O_5$ is a component that, when contained in an appropriate amount into the composition, reduces the viscosity of glass to increase the meltability and formability of the glass. Furthermore, $V_2O_5$ is also a coloring component of glass that absorbs light of various wavelengths. Moreover, $V_2O_5$ is also a component that can be involved in phase separation of glass. The content of $V_2O_5$ is preferably 0 to 20%, 0 to 15%, 0 to 10%, 0 to 8%, 0 to 6%, 0 to 4%, 0 to 2%, 0 to 1%, 0 to 0.5%, 0 to 0.25%, 0 to 0.1%, or 0 to 0.01%, and particularly preferably 0 to 0.005%. If the content of $V_2O_5$ is too large, the meltability of glass is likely to decrease. In addition, the glass is easily colored and is therefore less likely to obtain a desired translucency. Meanwhile, $V_2O_5$ is likely to be mixed as impurities into the glass. Therefore, if complete removal of $V_2O_5$ is pursued, the raw material batch tends to be expensive to increase the production cost. In reducing the increase in production cost, the lower limit of the content of $V_2O_5$ is preferably more than 0, more preferably not less than 0.0001%, even more preferably not less than 0.0002%, and particularly preferably not less than 0.0003%. In accordance with the application of the glass according to the present invention, the content of $V_2O_5$ may be controlled to adjust the translucency. For example, in the case where a colored appearance is required for a cooker top plate or the like, the content of $V_2O_5$ may be not less than 0.01%, not less than 0.05%, not less than 0.1%, not less than 0.2%, not less than 0.25%, not less than 0.3%, not less than 0.4%, not less than 0.5%, not less than 0.6%, not less than 0.7%, or particularly not less than 0.75%.

$Cr_2O_3$ and $V_2O_5$ are components that, when contained in an appropriate amount into the composition, reduce the viscosity of glass to increase the meltability and formability of the glass. Furthermore, these components are also coloring components of glass that absorb light of various wavelengths. In the case where a glass having a black appearance is desired for use in a cooker top plate or the like, it can be considered to allow the glass to contain a plurality of coloring components. $Cr_2O_3$ and $V_2O_5$ are components particularly contributable to black coloring of the glass and can further increase the jet blackness of the glass. Therefore, in order to increase the jet blackness of the glass, $Cr_2O_3 + V_2O_5$ (the total content of $Cr_2O_3$ and $V_2O_5$) is preferably not less than 0.05%, not less than 0.1%, not less than 0.2%, not less than 0.3%, not less than 0.4%, not less than 0.5%, not less than 0.6%, not less than 0.7%, not less than 0.8%, and particularly preferably not less than 0.9%. However, if the content of $Cr_2O_3 + V_2O_5$ is too large, the meltability of glass is likely to decrease. Therefore, the content of $Cr_2O_3 + V_2O_5$ is preferably not more than 20%, not more than 10%, not more than 5%, not more than 3%, or not more than 2%, and particularly preferably not more than 1%.

CoO is a component that, when contained in an appropriate amount into the composition, reduces the viscosity of glass to increase the meltability and formability of the glass. Furthermore, CoO is also a coloring component of glass that absorbs light of various wavelengths. Moreover, CoO is also a component that can be involved in phase separation of glass. The content of CoO is preferably 0 to 20%, 0 to 15%, 0 to 10%, 0 to 8%, 0 to 6%, 0 to 4%, 0 to 2%, 0 to 1%, 0 to 0.5%, 0 to 0.25%, 0 to 0.1%, or 0 to 0.01%, and particularly preferably 0 to 0.005%. If the content of CoO is too large, the meltability of glass is likely to decrease. In addition, the glass is easily colored and is therefore less likely to obtain a desired translucency. Meanwhile, CoO is likely to be mixed as impurities into the glass. Therefore, if complete removal of CoO is pursued, the raw material batch tends to be expensive to increase the production cost. In reducing the increase in production cost, the lower limit of the content of CoO is preferably more than 0, more preferably not less than 0.0001%, even more preferably not less than 0.0002%, and particularly preferably not less than 0.0003%. In accordance with the application of the glass according to the present invention, the content of CoO may be controlled to adjust the translucency. For example, in the case where a colored appearance is required for a cooker top plate or the like, the content of CoO may be not less than 0.01%, not less than 0.05%, not less than 0.08%, not less than 0.1%, not less than 0.2%, or particularly not less than 0.3%.

CuO is a component that, when contained in an appropriate amount into the composition, reduces the viscosity of glass to increase the meltability and formability of the glass. Furthermore, CuO is also a coloring component of glass that absorbs light of various wavelengths. Moreover, CuO is also a component that can be involved in phase separation of glass. The content of CuO is preferably 0 to 20%, 0 to 15%, 0 to 10%, 0 to 8%, 0 to 6%, 0 to 4%, 0 to 2%, 0 to 1%, 0 to 0.5%, 0 to 0.25%, 0 to 0.1%, or 0 to 0.01%, and particularly preferably 0 to 0.005%. If the content of CuO is too large, the meltability of glass is likely to decrease. In addition, the glass is easily colored and is therefore less likely to obtain a desired translucency. Meanwhile, CuO is likely to be mixed as impurities into the glass. Therefore, if complete removal of CuO is pursued, the raw material batch tends to be expensive to increase the production cost. In reducing the increase in production cost, the lower limit of the content of CuO is preferably more than 0, more preferably not less than 0.0001%, even more preferably not less than 0.0002%, and particularly preferably not less than 0.0003%. In accordance with the application of the glass according to the present invention, the content of CuO may be controlled to adjust the translucency. For example, in the case where a colored appearance is required for a cooker top plate or the like, the content of CuO may be not less than 0.01%, not less than 0.05%, not less than 0.08%, not less than 0.1%, not less than 0.2%, or particularly not less than 0.3%.

$Nd_2O_3$ is a component that, when contained in an appropriate amount into the composition, reduces the viscosity of glass to increase the meltability and formability of the glass. Furthermore, $Nd_2O_3$ is also a coloring component of glass that absorbs light of various wavelengths. Moreover, $Nd_2O_3$ is also a component that can be involved in phase separation of glass. The content of $Nd_2O_3$ is preferably 0 to 20%, 0 to 15%, 0 to 10%, 0 to 8%, 0 to 6%, 0 to 4%, 0 to 2%, 0 to 1%, 0 to 0.5%, 0 to 0.25%, 0 to 0.1%, or 0 to 0.01%, and particularly preferably 0 to 0.005%. If the content of $Nd_2O_3$ is too large, the glass is easily colored and is therefore less likely to obtain a desired translucency. In accordance with the application of the glass according to the present invention, the content of $Nd_2O_3$ may be controlled to adjust the translucency. For example, in the case where a colored appearance is required for a cooker top plate or the like, the content of $Nd_2O_3$ may be not less than 0.01%, not less than 0.05%, not less than 0.08%, not less than 0.1%, not less than 0.2%, or particularly not less than 0.3%.

$WO_3$ is a component that, when contained in an appropriate amount into the composition, reduces the viscosity of glass to increase the meltability and formability of the glass. Furthermore, $WO_3$ is also a coloring component of glass that absorbs light of various wavelengths. Moreover, $WO_3$ is also a component that can be involved in phase separation of glass. The content of $WO_3$ is preferably 0 to 20%, 0 to 15%, 0 to 10%, 0 to 8%, 0 to 6%, 0 to 4%, 0 to 2%, 0 to 1%, 0 to 0.5%, 0 to 0.25%, 0 to 0.1%, or 0 to 0.01%, and particularly preferably 0 to 0.005%. If the content of $WO_3$ is too large, the glass is easily colored and is therefore less likely to obtain a desired translucency. In accordance with the application of the glass according to the present invention, the content of $WO_3$ may be controlled to adjust the translucency. For example, in the case where a colored appearance is required for a cooker top plate or the like, the content of $WO_3$ may be not less than 0.01%, not less than 0.05%, not less than 0.08%, not less than 0.1%, not less than 0.2%, or particularly not less than 0.3%.

$Fe_2O_3$, $TiO_2$, $NiO$, $MoO_3$, $Cr_2O_3$, $MnO_2$, $V_2O_5$, $CoO$, $CuO$, $Nd_2O_3$, and $WO_3$ are components that, when contained in an appropriate amount into the composition, reduce the viscosity of glass to increase the meltability and formability of the glass. Furthermore, these components are also coloring components of glass that absorb light of various wavelengths. In accordance with the application of the glass according to the present invention, the total content of $Fe_2O_3$, $TiO_2$, $NiO$, $MoO_3$, $Cr_2O_3$, $MnO_2$, $V_2O_5$, $CoO$, $CuO$, $Nd_2O_3$, and $WO_3$ ($Fe_2O_3+TiO_2+NiO+MnO_3+Cr_2O_3+MnO_2+V_2O_5+CoO+CuO+Nd_2O_3+WO_3$) needs to be controlled to adjust the translucency. Particularly, in the case where a colored appearance is required for a cooker top plate or the like, $Fe_2O_3+TiO_2+NiO+MoO_3+Cr_2O_3+MnO_2+V_2O_5+CoO+CuO+Nd_2O_3+WO_3$ is preferably more than 0, not less than 0.0001%, not less than 0.0002%, not less than 0.0003%, not less than 0.05%, not less than 0.1%, not less than 0.2%, not less than 0.3%, not less than 0.5%, not less than 0.7%, and particularly preferably not less than 0.9%. However, if the content of $Fe_2O_3+TiO_2+NiO+MoO_3+Cr_2O_3+MnO_2+V_2O_5+CoO+CuO+Nd_2O_3+WO_3$ is too large, the meltability of glass is likely to decrease. Therefore, the content of $Fe_2O_3+TiO_2+NiO+MoO_3+Cr_2O_3+MnO_2+V_2O_5+CoO+CuO+Nd_2O_3+WO_3$ is preferably not more than 20%, not more than 10%, not more than 5%, not more than 3%, or not more than 2%, and particularly preferably not more than 1%.

$SiO_2$ and $Al_2O_3$ are components that form part of a glass network. On the other hand, $Fe_2O_3$, $TiO_2$, $NiO$, $MoO_3$, $Cr_2O_3$, $MnO_2$, $V_2O_5$, $CoO$, $CuO$, $Nd_2O_3$, and $WO_3$ are components that reduce the viscosity of glass to increase the meltability and formability of the glass. Furthermore, these components are also coloring components of glass that absorb light of various wavelengths. In accordance with the application of the glass according to the present invention, the total content of $Fe_2O_3$, $TiO_2$, $NiO$, $MoO_3$, $Cr_2O_3$, $MnO_2$, $V_2O_5$, $CoO$, $CuO$, $Nd_2O_3$, and $WO_3$ needs to be controlled to adjust the translucency. Meanwhile, it is necessary to control the viscosity of molten glass to form it into a desired shape. Particularly, in the case where a colored appearance is required for a cooker top plate or the like, in order to adjust molten glass to a viscosity at which the molten glass can be easily formed by various forming methods, the ratio between the total content of $SiO_2$ and $Al_2O_3$ ($SiO_2+Al_2O_3$) and the total content of $Fe_2O_3$, $TiO_2$, $NiO$, $MoO_3$, $Cr_2O_3$, $MnO_2$, $V_2O_5$, $CoO$, $CuO$, $Nd_2O_3$, and $WO_3$ ($Fe_2O_3+TiO_2+NiO+MoO_3$, $Cr_2O_3+MnO_2+V_2O_5+CoO+CuO+Nd_2O_3+WO_3$) is preferably suitably controlled. The ratio ($SiO_2+Al_2O_3$) / ($Fe_2O_3+TiO_2+NiO+MoO_3$, $Cr_2O_3+MnO_2+V_2O_5+CoO+CuO+Nd_2O_3+WO_3$) is preferably more than 0, not less than 5, not less than 10, not less than 15, not less than 20, not less than 25, not less than 30, not less than 35, or not less than 40, and particularly preferably not less than 45, preferably not more than 10000, more preferably not more than 5000, and particularly preferably not more than 3000.

The glass according to the present invention may further contain, in addition to the above components, $SO_3$, $Cl_2$, $La_2O_3$, $Ta_2O_5$, $Nb_2O_5$, $RfO_2$, and so on up to 10% in total so far as the chemical durability, desired translucency, desired thermal resistance, desired thermal shock resistance, and so on of the glass can be obtained. However, the raw material batch of the above components is expensive and, thus, the production cost tends to increase. Therefore, these components may not be incorporated into glass unless the circumstances are exceptional. The total content of these components is, in terms of % by mass, preferably not more than 5%, not more than 4%, not more than 3%, not more than 2%, not more than 1%, not more than 0.5%, not more than 0.4%, not more than 0.3%, not more than 0.2%, not more than 0.1%, not more than 0.05%, less than 0.05%, not more than 0.049%, not more than 0.048%, not more than 0.047%, or not more than 0.046%, and particularly preferably not more than 0.045%.

The glass according to the present invention may further contain, in addition to the above components, minor components, such as, for example, $H_2$, $CO_2$, $CO$, $H_2O$, $He$, $Ne$, $Ar$, and $N_2$, each up to 0.1% so far as the chemical durability, desired translucency, desired thermal resistance, desired thermal shock resistance, and so on of the glass can be obtained. Furthermore, when Ag, Au, Pd, Ir, Sc, Ce, Pr, Pm, Sm, Eu, Gd, Tb, Dy, Ho, Er, Tm, Yb, Lu, Ac, Th, Pa, U or so on is deliberately added into glass, the raw material cost increases and, as a result, the production cost tends to increase. However, when glass containing Ag, Au and/or so on is subjected to light irradiation or heat treatment, agglomerates of these components are formed and crystallization can be deliberately promoted based on these agglomerates. Moreover, Pd and so on have various catalytic actions. When glass contains these components, the glass can be given specific functions. In view of the above circumstances, when being aimed at giving the function of promoting crystallization or other functions, the glass may contain each of the above components in an amount of not more than 1%, not more than 0.5%, not more than 0.3%, or not more than 0.1%. When not particularly aimed at the above goals, the content of each of the above components is preferably not more than 500 ppm, not more than 300 ppm, or not more than 100 ppm, and particularly preferably not more than 10 ppm.

The glass according to the present invention may be a crystallized glass. The respective ranges of contents of the components in this case are the same as those described above. Examples of the type of crystals in the crystallized glass include $ZnAl_2O_4$ (gahnite), $Al_2SiO_5$, and $ZrO_2$.

The glass according to the present invention preferably contains, in terms of % by mass, 40 to 90% $SiO_2$, 5 to 35% $Al_2O_3$, more than 0 to 35% ZnO, 0 to 5% $Li_2O+Na_2O+K_2O$, and more than 0% $Fe_2O_3$.

More preferably, the glass contains, in terms of % by mass, 40 to 90% $SiO_2$, 5 to 35% $Al_2O_3$, more than 0 to 35% ZnO, 0% to 5% $Li_2O+Na_2O+K_2O$, more than 0% $Fe_2O_3$, and 0 to 5% $HfO_2$.

Even more preferably, the glass contains, in terms of % by mass, 40 to 90% $SiO_2$, 5 to 35% $Al_2O_3$, more than 0 to 35% ZnO, 0% to 5% $Li_2O+Na_2O+K_2O$, more than 0% $Fe_2O_3$, 0 to 5% $HfO_2$, not more than 5 ppm Pt, and not more than 5 ppm Rh, wherein the ratio $Al_2O_3$/ZnO is 0.14 to 2 and the ratio ZnO/ $(SiO_2+B_2O_3)$ is 0.05 to 0.7.

Still even more preferably, the glass contains, in terms of % by mass, 45 to 85% $SiO_2$, 5 to 35% $Al_2O_3$, 6 to 35% ZnO, 0.001 to 3% $Li_2O+Na_2O+K_2O$, not less than 0.002% $Fe_2O_3$, 0 to 0.5% $HfO_2$, not more than 5 ppm Pt, and not more than 5 ppm Rh, wherein the ratio $Al_2O_3$/ZnO is 0.14 to 2 and the ratio ZnO/ $(SiO_2+B_2O_3)$ is 0.05 to 0.7.

Yet still even more preferably, the glass contains, in terms of % by mass, 45 to 85% $SiO_2$, 5 to 35% $Al_2O_3$, 12 to 35% ZnO, 0.001 to 1% $Li_2O+Na_2O+K_2O$, not less than 0.002% $Fe_2O_3$, 0 to 0.5% $HfO_2$, not more than 5 ppm Pt, and not more than 5 ppm Rh, wherein the ratio $Al_2O_3$/ZnO is 0.14 to 2 and the ratio ZnO/ $(SiO_2+B_2O_3)$ is 0.05 to 0.7.

Yet still even more preferably, the glass contains, in terms of % by mass, 45 to 85% $SiO_2$, 5 to 35% $Al_2O_3$, 18 to 35% ZnO, 0.001 to 0.5% $Li_2O+Na_2O+K_2O$, not less than 0.002% $Fe_2O_3$, 0 to 0.5% $HfO_2$, not more than 5 ppm Pt, and not more than 5 ppm Rh, wherein the ratio $Al_2O_3$/ZnO is 0.14 to 2 and the ratio ZnO/ $(SiO_2+B_2O_3)$ is 0.05 to 0.7.

Yet still even more preferably, the glass contains, in terms of % by mass, 45 to 85% $SiO_2$, 5 to 35% $Al_2O_3$, 18 to 35% ZnO, 0.001 to 0.39% $Li_2O+Na_2O+K_2O$, not less than 0.002% $Fe_2O_3$, 0 to 0.5% $HfO_2$, not more than 5 ppm Pt, and not more than 5 ppm Rh, wherein the ratio $Al_2O_3$/ZnO is 0.14 to 2 and the ratio ZnO/ $(SiO_2+B_2O_3)$ is 0.05 to 0.7.

Yet still even more preferably, the glass contains, in terms of % by mass, 45 to 85% $SiO_2$, 5 to 35% $Al_2O_3$, 18 to 35% ZnO, 0.001 to 0.39% $Li_2O+Na_2O+K_2O$, not less than 0.002% $Fe_2O_3$, 0 to 0.5% $HfO_2$, not more than 5 ppm Pt, not more than 5 ppm Rh, more than 0% $MoO_3$, more than 0% $SnO_2$, and more than 0% $Cr_2O_3$, wherein the ratio $Al_2O_3$/ZnO is 0.14 to 2 and the ratio ZnO/ $(SiO_2+B_2O_3)$ is 0.05 to 0.7.

Yet still even more preferably, the glass contains, in terms of % by mass, 45 to 85% $SiO_2$, 5 to 35% $Al_2O_3$, 18 to 35% ZnO, 0.001 to 0.39% $Li_2O+Na_2O+K_2O$, not less than 0.002% $Fe_2O_3$, 0 to 0.5% $HfO_2$, not more than 5 ppm Pt, not more than 5 ppm Rh, not less than 0.0001% $MoO_3$, not less than 0.01% $SnO_2$, and more than 0% $Cr_2O_3$, wherein the ratio $Al_2O_3$/ZnO is 0.14 to 2 and the ratio ZnO/$(SiO_2+B_2O_3)$ is 0.05 to 0.7.

Yet still even more preferably, the glass contains, in terms of % by mass, 45 to 85% $SiO_2$, 5 to 35% $Al_2O_3$, 18 to 35% ZnO, 0.001 to 0.39% $Li_2O+Na_2O+K_2O$, not less than 0.002% $Fe_2O_3$, 0 to 0.5% $HfO_2$, not more than 5 ppm Pt, not more than 5 ppm Rh, not less than 0.0001% $MoO_3$, not less than 0.1% $SnO_2$, and not less than 0.0001% $Cr_2O_3$, wherein the ratio $Al_2O_3$/ZnO is 0.14 to 2, the ratio ZnO/ $(SiO_2+B_2O_3)$ is 0.05 to 0.7, the ratio $(ZnO+B_2O_3+P_2O_5)$/ZnO is not less than 1.001, the content of $Fe_2O_3+TiO_2+NiO+MoO_3$, $Cr_2O_3+MnO_2+V_2O_5+CoO+CuO+Nd_2O_3+WO_3$ is more than 0%, and the ratio $(SiO_2+Al_2O_3)$ / $(Fe_2O_3+TiO_2+NiO+MoO_3+Cr_2O_3+MnO_2+V_2O_5+CoO+CuO+Nd_2O_3+W O_3)$ is not less than 10.

The glass according to the present invention having the above composition can easily achieve low thermal expansion and desired translucency, thermal resistance, and thermal shock resistance.

Also in the case where the glass according to the present invention is a crystallized glass, it can easily achieve low thermal expansion and desired translucency, thermal resistance, and thermal shock resistance as so far as it has the above composition.

In the glass according to the present invention, the $\beta$-OH value is preferably more than 0 to 2/mm, 0.001 to 2/mm, 0.01 to 1.5/mm, 0.02 to 1.5/mm, 0.03 to 1.2/mm, 0.04 to 1.5/mm, 0.05 to 1.4/mm, 0.06 to 1.3/mm, 0.07 to 1.2/mm, 0.08 to 1.1/mm, 0.08 to 1/mm, 0.08 to 0.9/mm, 0.08 to 0.85/mm, 0.08 to 0.8/mm, 0.08 to 0.75/mm, 0.08 to 0.74/mm, 0.08 to 0.73/mm, 0.08 to 0.72/mm, or 0.08 to 0.71/mm, and particularly preferably 0.08 to 0.7/mm. When the $\beta$-OH value is in the above range, the glass quality is less likely to decrease. Specifically, if the $\beta$-OH value is too small, the amount of water vapor produced during melting of the glass batch reduces. Therefore, the effect of stirring the glass batch due to production of water vapor is reduced, which makes it less likely that the initial reaction of the glass batch is promoted and, thus, makes it likely that the production load increases. On the other hand, if the $\beta$-OH value is too large, bubbles are likely to be produced at the interface between a metallic member, such as Pt, or a refractory member and glass melt, which makes it likely that the quality of a glass product decreases. In addition, the glass transition point, the deformation point, the strain point, the annealing point, and the softening point may decrease or the coefficient of linear thermal expansion may increase, which deteriorates the thermal resistance and the thermal shock resistance and, therefore, makes the glass unsuitable for use under high temperature. The $\beta$-OH value changes depending on the raw material used, the melting atmosphere, the melting temperature, the melting time, and so on and can be controlled by changing these conditions as necessary. For example, by increasing the amount of hydroxide in the raw material, melting the raw material by heating it with a burner or increasing the melting temperature, the $\beta$-OH value can be increased. Alternatively, the $\beta$-OH value can be increased by lengthening the melting time under a sealed condition or shortening the melting time under an unsealed condition.

In the glass according to the present invention, the coefficient of linear thermal expansion at 30 to 380°C is preferably not more than $60 \times 10^{-7}$/°C, not more than $56 \times 10^{-7}$/°C, not more than $52 \times 10^{-7}$/°C, not more than $48 \times 10^{-7}$/°C, not more than $44 \times 10^{-7}$/°C, not more than $40 \times 10^{-7}$/°C, not more than $36 \times 10^{-7}$/°C, not more than $34 \times 10^{-7}$/°C, not more than $32 \times 10^{-7}$/°C, not more than $29.5 \times 10^{-7}$/°C, not more than $27.5 \times 10^{-7}$/°C, not more than $25.5 \times 10^{-7}$/°C, not more than $23.5 \times 10^{-7}$/°C, not more than $21.5 \times 10^{-7}$/°C, not more than $19.5 \times 10^{-7}$/°C, not more than $18 \times 10^{-7}$/°C, not more than $17.5 \times 10^{-7}$/°C, not more than $17 \times 10^{-7}$/°C, not more than $16.5 \times 10^{-7}$/°C, not more than $15.5 \times 10^{-7}$/°C, not more than $15 \times 10^{-7}$/°C, not more than $14.5 \times 10^{-7}$/°C, or not more than $14 \times 10^{-7}$/°C, and particularly preferably not more than $13.5 \times 10^{-7}$/°C.

In the glass according to the present invention, the coefficient of linear thermal expansion at 30 to 750°C is preferably not more than $60 \times 10^{-7}$/°C, not more than $56 \times 10^{-7}$/°C, not more than $52 \times 10^{-7}$/°C, not more than $48 \times 10^{-7}$/°C, not more than $44 \times 10^{-7}$/°C, not more than $40 \times 10^{-7}$/°C, not more than $36 \times 10^{-7}$/°C, not more than $34 \times 10^{-7}$/°C, not more than $32 \times 10^{-7}$/°C, not more than $29.5 \times 10^{-7}$/°C, not more than $27.5 \times 10^{-7}$/°C, not more than $25.5 \times 10^{-7}$/°C, not more than $23.5 \times 10^{-7}$/°C, not more than $21.5 \times 10^{-7}$/°C, not more than $19.5 \times 10^{-7}$/°C, not more than $18 \times 10^{-7}$/°C, not more than $17.5 \times 10^{-7}$/°C, not more than $17 \times 10^{-7}$/°C, not more than $16.5 \times 10^{-7}$/°C, not more than $15.5 \times 10^{-7}$/°C, not more than $15 \times 10^{-7}$/°C, not more than $14.5 \times 10^{-7}$/°C, or not more than $14 \times 10^{-7}$/°C, and particularly preferably not more than $13.5 \times 10^{-7}$/°C. If the coefficient of linear thermal expansion is too high, the thermal resistance and the thermal shock resistance are low, which makes the glass difficult to use under high temperature. Furthermore, the glass is difficult to use in applications requiring positional stability. Particularly when the glass is assumed to be used in a cooker top plate, the coefficient of linear thermal expansion is preferably as low as possible in order to avoid breakage due to heat or strain. Although he lower limit of the coefficient of linear thermal expansion is not particularly limited, actually, the coefficient of linear thermal expansion at 30 to 380°C is $-70 \times 10^{-7}$/°C and the coefficient of linear thermal expansion at 30 to 750°C is $-60 \times 10^{-7}$/°C.

The transmittance of the glass according to the present invention should be controlled suitably from wavelength to wavelength according to application. Specifically, in applications requiring high translucency in the ultraviolet region, the transmittance at a thickness of 4 mm and a wavelength of 300 nm is preferably not less than 0.1%, not less than 1%, not less than 5%, not less than 10%, not less than 20%, not less than 24%, not less than 28%, not less than 30%, not less than 40%, not less than 43%, or not less than 44%, and particularly preferably not less than 45%. Particularly, with use in applications for UV hardening (UV curing) of resin, fluorescent detection of printed matters, insect attraction, and so on, the higher the transmittance at a wavelength of 300 nm, the more preferred it is. On the other hand, in applications requiring low translucency in the ultraviolet region, the transmittance at a thickness of 4 mm and a wavelength of 300 nm is preferably not more than 50%, not more than 40%, not more than 30%, not more than 20%, not more than 10%, not more than 5%, not more than 4%, not more than 3%, or not more than 2%, and particularly preferably not more than 1%. Particularly when the glass is required to have an ability to filter out UV rays in a chemical container, an optical filter or so on, the lower the transmittance at a wavelength of 300 nm, the more preferred it is. However, the preferred transmittance varies depending on application and is therefore not limited to the above-mentioned specific ranges of values.

In applications requiring high translucency in the near-ultraviolet region, the transmittance of the glass according to the present invention at a thickness of 4 mm and a wavelength of 380 nm is preferably not less than 0.1%, not less than 1%, not less than 5%, not less than 10%, not less than 20%, not less than 30%, not less than 36%, not less than 40%, not less than 50%, not less than 60%, not less than 70%, not less than 80%, not less than 82%, or not less than 83%, and particularly preferably not less than 84%. Particularly in applications requiring a certain degree of clear and colorless, such as a display, the higher the transmittance at a wavelength of 380 nm, the more preferred it is. If the transmittance at a wavelength of 380 nm is too low, the glass is colored yellow and, therefore, a desired degree of clear and colorless is less likely to be obtained. On the other hand, in applications requiring low translucency in the near-ultraviolet region, the transmittance at a thickness of 4 mm and a wavelength of 380 nm is preferably not more than 50%, not more than 40%, not more than 30%, not more than 20%, not more than 10%, not more than 4%, not more than 3%, or not more than 2%, and particularly preferably not more than 1%. Particularly when the glass is used in a chemical container or for the purpose of shielding ultraviolet light to blue light or like purpose or required to have a colored appearance in a cooker top plate or the like, the lower the transmittance at a wavelength of 380 nm, the more preferred it is. However, the preferred transmittance varies depending on application and is therefore not limited to the above-mentioned specific ranges of values.

In applications requiring high translucency in the visible light region, the transmittance of the glass according to the present invention at a thickness of 4 mm and a wavelength of 555 nm is preferably not less than 0.1%, not less than 1%, not less than 5%, not less than 10%, not less than 20%, not less than 30%, not less than 40%, not less than 50%, not less than 60%, not less than 70%, not less than 80%, not less than 82%, not less than 84%, not less than 85%, not less than 86%, or not less than 87%, and particularly preferably not less than 88%. A region of wavelengths around 555 nm is a wavelength region where human can easily percept light as brightness. Particularly in applications requiring high brightness, such as a display, the higher the transmittance at a wavelength of 555 nm, the more preferred it is. On the other hand, in applications requiring low translucency in the visible light region, the transmittance at a thickness of 4 mm and a wavelength of 555 nm is preferably not more than 50%, not more than 40%, not more than 30%, not more than 20%, not more than 10%, not more than 8%, not more than 6%, not more than 4%, not more than 3%, or not more than 2%, and particularly preferably not more than 1%. Particularly when the glass is used in a chemical container or for the purpose of shielding ultraviolet light to green light or like purpose or required to have a colored appearance in a cooker top plate or the like, the lower the transmittance at a wavelength of 555 nm, the more preferred it is. However, the preferred transmittance varies depending on application and is therefore not limited to the above-mentioned specific ranges of values.

In applications requiring high translucency in the near-infrared region, the transmittance of the glass according to the present invention at a thickness of 4 mm and a wavelength of 800 nm is preferably not less than 0.1%, not less than 1%, not less than 5%, not less than 10%, not less than 20%, not less than 30%, not less than 40%, not less than 50%, not less than 60%, not less than 70%, not less than 80%, not less than 82%, not less than 84%, not less than 85%, not less than 86%, or not less than 87%, and particularly preferably not less than 88%. Particularly, when the glass is used in medical applications, such as vein authentication, the higher the transmittance at a wavelength of 800 nm, the more preferred it is. On the other hand, in applications requiring low translucency in the near-infrared region, the transmittance at a thickness of 4 mm and a wavelength of 800 nm is preferably not more than 50%, not more than 40%, not more than 30%, not more than 20%, not more than 10%, not more than 8%, not more than 6%, not more than 4%, not more than 3%, or not more than 2%, and particularly preferably not more than 1%. Particularly when the glass is used in a chemical container or for the purpose of shielding visible light or like purpose or required to have a colored appearance in a cooker top plate or the like, the lower the transmittance at a wavelength of 800 nm, the more preferred it is. However, the preferred transmittance varies depending on application and is therefore not limited to the above-mentioned specific ranges of values.

In applications requiring high translucency in the infrared region, the transmittance of the glass according to the present invention at a thickness of 4 mm and a wavelength of 1200 nm is preferably not less than 0.1%, not less than 1%, not less than 5%, not less than 10%, not less than 20%, not less than 30%, not less than 40%, not less than 50%, not less than 60%, not less than 70%, not less than 80%, not less than 81%, not less than 83%, not less than 85%, not less than 86%, or not less than 87%, and particularly preferably not less than 88%. Particularly, when the glass is used in an infrared camera or applications for infrared communication, such as a remote controller, the higher the transmittance at a wavelength of 1200 nm, the more preferred it is. On the other hand, in applications requiring low translucency in the infrared region, the transmittance at a thickness of 4 mm and a wavelength of 1200 nm is preferably not more than 50%, not more than 40%, not more than 30%, not more than 20%, not more than 10%, not more than 8%, not more than 6%, not more than 4%, not more than 3%, or not more than 2%, and particularly preferably not more than 1%. Particularly when the glass is used for the purpose of shielding infrared light or like purpose, the lower the transmittance at a wavelength of 1200 nm, the more preferred it is. However, the preferred transmittance varies depending on application and is therefore not limited to the above-mentioned specific ranges of values.

In the glass according to the present invention, the Young's modulus is preferably not less than 65 GPa, not less than 67 GPa, not less than 70 GPa, not less than 72 GPa, not less than 75 GPa, or not less than 78 GPa, and particularly preferably not less than 80 GPa. By doing so, even when the surface of the glass according to the present invention is provided with a reflective film or so on, the glass is less likely to warp, resulting in an increased functionality of a product according to the present invention.

In the glass according to the present invention, the modulus of rigidity is preferably 20 to 55 GPa, 25 to 50 GPa, 27 to 48 GPa, or 29 to 46 GPa, and particularly preferably 30 to 45 GPa. If the modulus of rigidity is too low or too high, the glass becomes susceptible to breakage.

In the glass according to the present invention, the Poisson's ratio is preferably not more than 0.35, not more than 0.32, not more than 0.3, not more than 0.28, or not more than 0.26, and particularly preferably not more than 0.25. If the Poisson's ratio is too high, the glass becomes susceptible to breakage.

In the glass according to the present invention, the density is preferably 2.20 to 3.50 $g/cm^3$, 2.30 to 3.40 $g/cm^3$, 2.40 to 3.35 $g/cm^3$, or 2.50 to 3.30 $g/cm^3$, and particularly preferably 2.55 to 3.25 $g/cm^3$. If the density is too small, the gas permeability of the glass increases and, thus, the glass may be contaminated during a long-term storage. On the other hand, if the density is too large, the weight per unit area of the glass becomes large and, therefore, the glass becomes difficult to handle.

Generally, when phase separation due to spinodal decomposition (a mode of phase separation in which second and subsequent phases of composition are present intruding a first phase having the maximum volume fraction and are continuously mixed into the first phase) occurs, irregularities are easily formed on the glass surface because of differences in chemical durability and others from phase to phase. The inventors conducted intensive studies and, as a result, found out that when the glass according to the present invention is annealed at a temperature not lower than the glass transition point, it can be separated into two or more different phases and the state of the phase separation, in many cases, takes on binodal decomposition (a mode of phase separation in which second and subsequent phases of composition are scattered across a first phase having the maximum volume fraction and are mixed in spherical or like form into the first phase). In addition, the inventors found that when the glass composition, the annealing conditions, and so on are suitably controlled, phase separation via binodal decomposition can be developed facultatively and, thus, the glass can be finished to have a surface likely to obtain a desired translucency. In view of this situation, the glass according to the present invention may be composed only of a single glass phase or may be in a state containing two or more phases. For example, when desired to have a white or milky white appearance in an application as a cooker top plate, the glass according to the present invention is particularly preferably in a state containing two or more phases. In this case, by suitably controlling the annealing conditions or so on, a glass having a white or milky white appearance can be easily obtained. The second and subsequent phases may be in any of a glass state, a crystalized state, a gaseous state, and a liquid state. The second and subsequent phases may be composed of a metal oxide, a metal, an organic substance or others and the compositions of them are not limited. The shape of the second and subsequent phases is preferably a sheet-like, granular, spherical, circular, elliptical or linear shape and these shapes may appear singly or in combination of them. How phase separation occurs can be grasped by etching the glass with hydrofluoric acid or like liquid and then measuring its surface profiles with a SEM (scanning electron microscope), an AFM (atomic force microscope) or the like. Alternatively, by checking the state of chemical bonds in a sample using the FT-IR spectroscopy, the Raman spectroscopy or the like, information on phase separation can be acquired non-destructively. The state of phase separation described herein can be grasped in any way that can be easily imagined by the person skilled in the art.

The size of the second and subsequent phases is, in terms of each of their longest portions, preferably not more than 100 $\mu$m, not more than 50 $\mu$m, not more than 30 $\mu$m, not more than 10 $\mu$m, not more than 5 $\mu$m, not more than 4 $\mu$m, not more than 3 $\mu$m, not more than 2 $\mu$m, not more than 1 $\mu$m, not more than 0.5 $\mu$m, not more than 0.3 $\mu$m, or not more than 0.2 $\mu$m, and particularly preferably not more than 0.1 $\mu$m. If the longest portion of each of the second and subsequent phases is too long, the surface roughness of the glass becomes large, which makes it difficult to obtain a desired translucency. The lower limit of the size of the longest portion of each of the second and subsequent phases is not particularly limited, but is actually not less than 0.01 nm.

When the second and subsequent phases are in a crystallized state, the crystal system of crystals is preferably one of the hexagonal system, the trigonal system, the cubic system, the tetragonal system, the orthorhombic system, and the monoclinic system. Alternatively, the crystal system can be the triclinic system, in which case birefringence is likely to occur in the crystals and, as a result, light is likely to scatter in the crystals and a desired translucency is less likely to be obtained. In the case of the triclinic system, the composition of the first phase needs to be designed to make the refractive index difference of the crystals from the first phase small.

When the glass according to the present invention is in a state containing two or more phases, a large refractive index difference of the second and subsequent phases from the first phase causes light to scatter at the boundary between the phases and, therefore, makes it difficult to obtain a desired translucency. The difference in refractive index between the phases is, at each of nd (587.6 nm), nC (656.3 nm), nF (486.1 nm), ne (546.1 nm), ng (435.8 nm), nh (404.7 nm), ni (365.0 nm), nF' (480.0 nm), n785 (785 nm), n1310 (1310 nm), and n1550 (1550 nm) as representative wavelengths for measurement of refractive index, preferably within 1.5, within 1.3, within 1.1, within 0.9, within 0.7, within 0.5, within 0.3, within 0.1, within 0.09, within 0.07, within 0.05, within 0.03, within 0.01, within 0.008, within 0.006, within 0.004, within 0.002, within 0.0009, within 00.0007, within 0.0005, within 0.0003, or within 0.0002, and particularly preferably within 0.0001. The refractive indices of the phases can be measured with a precision refractometer (KPR-2000 manufactured by Shimadzu Corporation) or so on.

The refractive index nd (587.6 nm) of the glass according to the present invention is preferably not more than 2.50, not more than 2.40, not more than 2.20, not more than 2.00, not more than 1.80, not more than 1.70, not more than 1.60, not more than 1.58, not more than 1.55, or not more than 1.54, and particularly preferably not more than 1.53. Furthermore, the refractive index nd is preferably not less than 1.20, not less than 1.25, not less than 1.30, not less than 1.35, not less than 1.38, not less than 1.40, or not less than 1.42, and particularly preferably not less than 1.43. If the refractive index is too high, light scatters at the surface and the end surface and, thus, a desired translucency may be less likely to be obtained. On the other hand, if the refractive index is too low, the refractive index difference between the glass according to the present invention and the air becomes small, which makes it difficult to visually recognize the glass according to the present invention and, therefore, may make it difficult to handle the glass during production.

The lightness L* of the glass according to the present invention should be controlled suitably according to application. In applications requiring a high lightness, the lightness L* at a thickness of 4 mm is preferably not less than 5, not less than 10, not less than 20, not less than 30, not less than 40, not less than 50, not less than 60, not less than 70, not less than 80, not less than 85, not less than 90, not less than 94, not less than 95, not less than 96, not less than 96.1, or not less than 96.3, and particularly preferably not less than 96.5. If the lightness L* is too small, the glass tends to become grayish and look dark in appearance regardless of the magnitude of chromaticity. Therefore, particularly in applications requiring high brightness, such as a display, the greater the lightness L*, the more preferred it is. On the other hand, in applications requiring a low lightness, the lightness L* at a thickness of 4 mm is preferably not more than 45, not more than 40, not more than 35, not more than 30, not more than 25, not more than 20, or not more than 15, and particularly preferably not more than 10. Particularly when the glass is used in a chemical container or for the purpose of shielding visible light or like purpose or required to have a black appearance in a cooker top plate or the like, the lower the lightness L*, the more preferred it is. However, the preferred lightness L* varies depending on application and is therefore not limited to the above-mentioned specific ranges of values.

Regarding the glass according to the present invention, in applications requiring a high degree of clear and colorless, the chromaticity a* at a thickness of 4 mm is preferably within $\pm 50$, within $\pm 40$, within $\pm 30$, within $\pm 20$, within $\pm 10$, within $\pm 5$, within $\pm 3$, within $\pm 1$, within $\pm 0.9$, within $\pm 0.8$, within $\pm 0.7$, or within $\pm 0.6$, and particularly preferably within $\pm 0.5$. If the lightness a* is too negatively large, the glass tends to look greenish. If the lightness a* is too positively large, the glass tends to look reddish. On the other hand, when the glass needs to be intensely colored green or red, the chromaticity a* at a thickness of 4 mm is preferably not less than $\pm 6$, more preferably not less than $\pm 7$, even more preferably not less than $\pm 8$, and particularly preferably not less than $\pm 9$. Alternatively, in the case where the glass is colored black, the chromaticity a* at a thickness of 4 mm is preferably not less than +10, not less than +12, not less than +14, not less than +16, not less than +17, not less than +18, or not less than +19, and particularly preferably not less than +20. However, the preferred chromaticity a* varies depending on application and is therefore not limited to the above-mentioned specific ranges of values.

Regarding the glass according to the present invention, in applications requiring a high degree of clear and colorless, the chromaticity b* at a thickness of 4 mm is preferably within $\pm 50$, within $\pm 45$, within $\pm 40$, within $\pm 30$, within $\pm 20$, within $\pm 10$, within $\pm 5$, within $\pm 3$, within $\pm 1$, within $\pm 0.9$, within $\pm 0.8$, within $\pm 0.7$, or within $\pm 0.6$, and particularly preferably within $\pm 0.5$. If the lightness b* is too negatively large, the glass tends to look blueish. If the lightness b* is too positively large, the glass tends to look yellowish. On the other hand, when the glass needs to be intensely colored blue or yellow, the chromaticity b* at a thickness of 4 mm is preferably not less than $\pm 6$, more preferably not less than $\pm 7$, even more preferably not less than $\pm 8$, and particularly preferably not less than $\pm 9$. Alternatively, in the case where the glass is colored black, the chromaticity b* at a thickness of 4 mm is preferably not less than +10, not less than +12, not less than +16, not less than +20, not less than +24, not less than +28, not less than +32, not less than +36, not less than +40, not less than +42, not less than +44, not less than +46, or not less than +48, and particularly preferably not less than +50. However, the preferred chromaticity b* varies depending on application and is therefore not limited to the above-mentioned specific ranges of values.

In the glass according to the present invention, the temperature at which the slope of the thermal expansion curve of glass changes is assumed to be the glass transition point (glass transition temperature). In the glass according to the present invention, the glass transition point is preferably not lower than 710°C, not lower than 712°C, not lower than 714°C, not lower than 716°C, not lower than 718°C, not lower than 720°C, not lower than 722°C, not lower than 724°C, not lower than 726°C, or not lower than 728°C, and particularly preferably not lower than 730°C. If the glass transition point is too low, the glass excessively flows, which makes it difficult to form the glass into a desired shape. In addition, if the glass transition point is too low, the glass is likely to be deformed when used under high temperature.

In the glass according to the present invention, the temperature at which the slope of the thermal expansion curve of glass changes under temperature higher than the glass transition point is assumed to be the deformation point. In the glass according to the present invention, the deformation point is preferably not lower than 750°C, not lower than 752°C, not lower than 754°C, not lower than 758°C, not lower than 762°C, not lower than 764°C, not lower than 766°C, or not lower than 768°C, and particularly preferably not lower than 770°C. If the deformation point is too low, the glass excessively flows, which makes it difficult to form the glass into a desired shape. In addition, if the deformation point is too low, the glass is likely to be deformed when used under high temperature.

The liquidous temperature of the glass according to the present invention is preferably not higher than 1600°C, not higher than 1580°C, not higher than 1560°C, not higher than 1540°C, not higher than 1520°C, not higher than 1500°C, not higher than 1480°C, not higher than 1460°C, not higher than 1440°C, not higher than 1420°C, not higher than 1410°C, not higher than 1400°C, not higher than 1380°C, not higher than 1360°C, not higher than 1340°C, not higher than 1320°C, not higher than 1300°C, not higher than 1290°C, not higher than 1280°C, not higher than 1270°C, not higher than 1260°C, not higher than 1250°C, not higher than 1240°C, not higher than 1230°C, not higher than 1200°C, or not higher than 1190°C, and particularly preferably not higher than 1180°C. If the liquidus temperature is too high, devitrification is likely to occur during production. On the other hand, when the liquidus temperature is 1480°C or lower, the glass can be easily produced by a roll process or the like. When the liquidus temperature is 1410°C or lower, the glass can be easily produced by an overflow process or the like. When the liquidus temperature is 1350°C or lower, the glass can be easily produced by a bushing process or the like. When the liquidus temperature is 1300°C or lower, the glass can be easily produced by a Danner process or the like. The liquidus viscosity of the glass according to the present invention is preferably not less than $10^{2.7}$ dPa·s, not less than $10^{2.8}$ dPa·s, not less than $10^{3.0}$ dPa·s, not less than $10^{3.2}$ dPa·s, not less than $10^{3.4}$ dPa·s, not less than $10^{3.6}$ dPa·s, not less than $10^{3.8}$ dPa·s, not less than $10^{4.0}$ dPa·s, not less than $10^{4.2}$ dPa·s, not less than $10^{4.4}$ dPa·s, not less than $10^{4.6}$ dPa·s, not less than $10^{4.8}$ dPa·s, not less than $10^{5.0}$ dPa·s, not less than $10^{5.2}$ dPa·s, not less than $10^{5.4}$ dPa·s, not less than $10^{5.6}$ dPa·s, not less than $10^{5.8}$ dPa·s, or not less than $10^{5.9}$ dPa·s, and particularly preferably not less than $10^{6.0}$ dPa·s. By doing so, the glass is less likely to devitrify during forming into shape.

The glass according to the present invention is preferably high in water resistance which is a representative chemical durability. Specifically, when the amount of alkali eluted is measured by a method based on JIS R 3502 (1995), each of the amounts of $Li_2O$, $Na_2O$, and $K_2O$ eluted is preferably not more than 2 mg, not more than 1.8 mg, not more than 1.6 mg, not more than 1.4 mg, not more than 1.2 mg, not more than 1.0 mg, not more than 0.8 mg, not more than 0.6 mg, not more than 0.4 mg, not more than 0.2 mg, not more than 0.1 mg, or not more than 0.005 mg, and particularly preferably not more than 0.003 mg. If the water resistance is low, ion exchange between alkali metals and protons on the glass surface is likely to progress and, thus, portions of the glass surface where ion exchange has progressed are likely to alter and become susceptible to breakage or the like.

In the glass according to the present invention, the average surface roughness Ra of the principal surface is preferably not more than 50 nm, not more than 25 nm, not more than 15 nm, not more than 10 nm, not more than 9 nm, not more than 8 nm, not more than 7 nm, not more than 6 nm, not more than 5 nm, not more than 4 nm, not more than 3 nm, or not more than 2 nm, and particularly preferably not more than 1 nm. If the surface roughness Ra is too large, light incident on the glass surface from the outside is likely to be scattered, light is less likely to be emitted from the inside of the glass toward the outside, and a desired translucency is less likely to be obtained. In addition, the glass becomes susceptible to breakage. On the other hand, if the surface roughness Ra of the flat surface is too small, the glass surface is likely to be charged, which increases the attractive force between the glass and an object brought into contact with the glass surface becomes large and may make it difficult to obtain a desired mold releasability. In addition, because of the charged glass surface, a desired electrical responsiveness may be less likely to be obtained. In view of the above circumstances, the surface roughness Ra of the flat surface of the glass according to the present invention is preferably not less than 0.01 nm, not less than 0.03 nm, not less than 0.05 nm, not less than 0.07 nm, or not less than 0.09 nm, and particularly preferably not less than 0.1 nm.

In the glass according to the present invention, the average surface roughness Ra of the end surface is preferably not more than 100 nm, not more than 50 nm, not more than 25 nm, not more than 15 nm, not more than 10 nm, not more than 9 nm, not more than 8 nm, not more than 7 nm, not more than 6 nm, not more than 5 nm, not more than 4 nm, not more than 3 nm, or not more than 2 nm, and particularly preferably not more than 1 nm. If the surface roughness Ra of the end surface is too large, light is less likely to enter the inside of the glass through the end surface of the glass, light is less likely to be emitted from the inside of the glass toward the outside, and a desired translucency is less likely to be obtained. In addition, the glass becomes susceptible to breakage. On the other hand, if the surface roughness Ra of the end surface is too small, in physically holding the glass at the end surface thereof, the contact area between the glass and an holder becomes small and the frictional resistance becomes small, which may make it difficult to surely hold the glass. In view of the above circumstances, the surface roughness Ra of the end surface of the glass according to the present invention is preferably not less than 0.01 nm, not less than 0.03 nm, not less than 0.05 nm, not less than 0.07 nm, or not less than 0.09 nm, and particularly preferably not less than 0.1 nm.

The glass according to the present invention preferably has a unpolished surface. The theoretical strength of glass is originally very high, but the glass is often broken even under a much lower stress than the theoretical strength. The reason for this is that nanoscopic defects called Griffth flaws are produced in the glass surface in processes after the forming of glass into shape, such as, for example, a polishing process. Therefore, when the surface of the glass according to the present invention is unpolished, the original mechanical strength is less likely to be impaired and, thus, the glass becomes less likely to be broken. In addition, since the polishing process can be bypassed, the production cost can be reduced. For example, when the glass according to the present invention has a sheet-like shape and, in this case, the entire effective surfaces of both the principal surfaces of the glass are unpolished, the glass according to the present invention becomes even less likely to be broken. In order to make the entire effective surfaces into unpolished surfaces, it is effective to make, at the time of forming into shape, surface portions corresponding to the effective surfaces into free surfaces. Furthermore, even if the surface portions corresponding to the effective surfaces make contact with a solid member or the like at the time of forming into shape, the portions having made contact with the solid member or the like only have to be heated again at a temperature of the glass transition point or higher after the forming into shape. Thus, smooth surfaces similar to free surfaces can be created.

The waviness of the glass according to the present invention is preferably not more than 10 $\mu$m, not more than 5 $\mu$m, not more than 4 $\mu$m, not more than 3 $\mu$m, not more than 2 $\mu$m, not more than 1 $\mu$m, not more than 0.8 $\mu$m, not more than 0.7 $\mu$m, not more than 0.6 $\mu$m, not more than 0.5 $\mu$m, not more than 0.4 $\mu$m, not more than 0.3 $\mu$m, not more than 0.2 $\mu$m, not more than 0.1 $\mu$m, not more than 0.08 $\mu$m, not more than 0.05 $\mu$m, not more than 0.03 $\mu$m, or not more than 0.02 $\mu$m, and particularly preferably not more than 0.01 $\mu$m. If the waviness is too large, a distribution of incident angles of light incident on the glass surface at a specific location is likely to be generated and the amount of light scattered on the glass surface becomes large on average, which makes it difficult to obtain a desired translucency. The lower limit of the waviness is not particularly limited, but is actually not less than 0.01 nm.

The thickness of the glass according to the present invention is preferably not more than 10 mm, not more than 9 mm, not more than 8 mm, not more than 7 mm, not more than 6 mm, or not more than 5 mm, and particularly preferably not more than 4 mm. If the thickness of a sample is too large, the attenuation rate of light in the inside of the glass becomes large, which makes it difficult to obtain a desired translucency. Furthermore, with use of the glass according to the present invention as a display, the thickness is preferably not more than 1000 $\mu$m, 500 $\mu$m, not more than 200 $\mu$m, not more than 100 $\mu$m, not more than 70 $\mu$m, not more than 50 $\mu$m, not more than 30 $\mu$m, or 1 to 20 $\mu$m, and particularly preferably 5 to 10 $\mu$m.

The difference between the maximum thickness and the minimum thickness of the glass according to the present invention is preferably not more than 50 $\mu$m, not more than 25 $\mu$m, not more than 10 $\mu$m, not more than 5 $\mu$m, not more than 1 $\mu$m, not more than 500 nm, not more than 300 nm, not more than 100 nm, not more than 50 nm, not more than 25 nm, not more than 15 nm, not more than 10 nm, not more than 9 nm, not more than 8 nm, not more than 7 nm, not more than 6 nm, not more than 5 nm, not more than 4 nm, not more than 3 nm, or not more than 2 nm, and particularly preferably not more than 1 nm. If the difference between the maximum thickness and the minimum thickness is too large, the incident angle of light having entered the glass from a direction of one of the front and back surfaces thereof becomes different from the exit angle of light when exiting from the other surface, which causes the light to scatter undesirably and makes it likely that the surface appearance looks dazzling.

The surface roughnesses Ra of the principal surface and end surface of the glass can be measured by a method based on JIS B 0601:2001. The waviness can be measured with a stylus surface profile measurement device by a method based on SEMI STD D15-1296 "measurement method for surface waviness of FPD glass substrate". The thickness can be measured with a general device, such as a digital caliper or a point-contact roughness meter.

The glass according to the present invention may be subjected to chemical strengthening or other treatments. Regarding the conditions for chemical strengthening treatment, the treatment time and the treatment temperature are sufficient to be appropriately selected in consideration of the glass composition, the volume fraction of each phase, the type of molten salt, and so on. For example, for the purpose of facilitating chemical strengthening, a glass composition containing much $Na_2O$, which is likely to be contained in the remaining glass phase, may be selected. Furthermore, as to the molten salt, monovalent cations of Li, Na, K, and so on or divalent cations of Mg, Ca, Sr, Ba, Zn, and so on may be contained singly or in combination. Moreover, aside from an ordinary single-step strengthening process, a multistep chemical strengthening process may be selected. The molten salt that can be used is a nitrate (such as potassium nitrate, sodium nitrate or lithium nitrate), a carbonate (such as potassium carbonate, sodium carbonate or lithium carbonate), a sulfate (such as potassium sulfate, sodium sulfate or lithium sulfate), a chloride salt (such as potassium chloride, sodium chloride or lithium chloride) or any combination of them. Among them, a nitrate or so on having a low melting point is preferably used as the molten salt and sodium nitrate is particularly preferably used. The temperature for ion exchange is preferably 330 to 550°C, more preferably 350 to 500°C, and particularly preferably 390 to 450°C, and the time for ion exchange is preferably 30 minutes to 12 hours and more preferably 45 minutes to 10 hours. The above-described conditions for strengthening may be arbitrarily changed depending on the application or strength required and the preferred conditions are not necessarily limited to the above.

In giving a compressive stress to the glass according to the present invention by chemical strengthening or other treatments, the compressive stress value (CS) is preferably not less than 50 MPa, not less than 100 MPa, not less than 150 MPa, not less than 200 MPa, not less than 230 MPa, or not less than 260 MPa, and particularly preferably not less than 300 MPa. If the compressive stress value is too small, the Vickers hardness and the bending strength may be low.

In giving a compressive stress to the glass according to the present invention by chemical strengthening or other treatments, the depth of compressive stress (DOC) is preferably not less than 10 $\mu$m, not less than 50 $\mu$m, not less than 100 $\mu$m, or not less than 110 $\mu$m, and particularly preferably not less than 120 $\mu$m. If the depth of compressive stress is too small, the fracture strength may be low. The compressive stress value (CS) and the depth of compressive stress (DOC) can be measured with a scattered light photoelastic stress meter SLP-1000 (manufactured by Orihara Industrial Co., Ltd.) and a surface stress meter FSM-6000 (manufactured by Orihara Industrial Co., Ltd.).

In the glass according to the present invention, the abraded four-point bending strength is preferably not less than 150 MPa, more preferably not less than 200 MPa, even more preferably not less than 235 MPa, still even more preferably not less than 245 MPa, and particularly preferably not less than 250 MPa. If the abraded four-point bending strength is too low, the glass is susceptible to breakage upon dropping when used as a smartphone cover glass or the like. The upper limit of the abraded four-point bending strength is not particularly limited, but is actually not more than 1500 MPa. The abraded four-point bending strength can be measured in the following manner. First, in a state that a glass sheet processed to a size of 50 mm × 50 mm and a thickness of 0.6 mm is erected, 1.5 mm thick SUS sheets are applied to the principal surface and opposite surface of the glass sheet to immobilize the glass sheet. The tip of a pendulum arm is allowed to hit the glass sheet through a P180 sand paper, thus abrading the glass sheet. The arm tip is formed of a 5 mm diameter iron cylinder and the weight of the arm is 550 g. The height from which the arm is swung down is set at 5 mm above the hitting point. The abraded glass sheet is measured in terms of four-point bending strength.

Also when the glass according to the present invention is a crystallized glass, it preferably has the same characteristics as described above.

The shape of the glass according to the present invention is normally a sheet-like shape (particularly, a flat sheet-like shape), but is not limited to this, and can be appropriately selected according to application.

Next, a description will be given of a method for producing a glass according to the present invention.

The method for producing a glass according to the present invention includes the steps of: melting a glass raw material to obtain molten glass; and forming the molten glass into shape.

Specifically, first, a batch of raw materials (a glass raw material) prepared to provide a glass having the above-described composition is loaded into a glass melting furnace, melted at 1200 to 1800°C to obtain molten glass, and the molten glass is then formed into shape. In melting the glass, one or a combination of two or more of a flame fusion process using a burner or the like, an electric melting process by electrical heating, a melting process using laser irradiation, a melting process using plasma, a solution phase synthesis, and a gas phase synthesis may be used.

The forming process is preferably at least one selected from among an overflow process, a float process, a down-draw process, a slot down process, a redraw process, a containerless process, a blow process, a press forming process, a roll process, a bushing process, and a tube draw process. Furthermore, after the forming into shape, the glass may be reheated at a temperature of the glass transition point or higher. By doing so, a glass according to the present invention having a good surface quality can be produced.

In forming the glass into shape by an overflow process, the glass viscosity at the bottom end of a trough-shaped refractory is preferably $10^{3.5}$ to $10^{5.0}$ dPa·s. If any force is not applied to the bottom end of the trough-shaped structure, the glass falls down while contracting by surface tension. To avoid this, it is necessary to nip both sides of the glass dough with rollers to draw out the glass dough in a widthwise direction against contraction. In forming the glass according to the present invention into shape, because of a small quantity of heat of the glass itself, the cooling rate of the glass increases rapidly from the moment the glass leaves the trough-shaped refractory. Therefore, the glass viscosity at the bottom end of the trough-shaped refractory is preferably not more than $10^{5.0}$ dPa·s, not more than $10^{4.8}$ dPa·s, not more than $10^{4.6}$ dPa·s, not more than $10^{4.4}$ dPa·s, or not more than $10^{4.2}$ dPa·s, and particularly preferably not more than $10^{4.0}$ dPa·s. By doing so, when given a tensile stress in the widthwise direction, the glass can be increased in sheet width while being prevented from breakage and can be stably drawn out downward.

Next, the obtained glass is annealed. The purpose of annealing is mainly to remove strain and remaining stress. In this case, the glass is preferably subjected to heat treatment by allowing it to stay in a temperature range from room temperature to the strain point (approximately equal to a temperature 5 to 20°C lower than the glass transition point) for at least one minute, more preferably for not less than 3 minutes, even more preferably for not less than 16 minutes, and most preferably for more than 30 minutes. By doing so, a glass composed only of a single glass phase can be easily obtained. As a result, the chemical durability of the glass can be increased, the glass surface can be controlled arbitrarily, and a desired translucency can be easily obtained. Alternatively, by the annealing, it is possible to not only remove strain and remaining stress, but also form phase separation in the glass. In this case, the glass is preferably subjected to heat treatment by allowing it to stay in a temperature range higher than the strain point for at least one minute, more preferably for not less than 3 minutes, even more preferably for not less than 16 minutes, and most preferably for more than 30 minutes. By doing so, the glass can be separated into phases and the state of phase separation takes on, in many cases, binodal decomposition. When the glass according to the present invention is separated in phases, it is separated into a first phase containing a high proportion of $SiO_2$ and second and subsequent phases and the chemical durability of the second and subsequent phases is, in many cases, lower than that of the first phase. In these cases, irregularities are easily formed on the glass surface because of differences in chemical durability and so on from phase to phase. However, by designing the above-described preferred glass composition, the degree of irregularities can be reduced to the extent that a desired translucency can be obtained. Furthermore, when given fine irregularities, the glass according to the present invention can be increased in releasability from an object in contact with the glass according to the present invention. In addition, the surface area of the glass becomes larger than that of glass with a free surface and, thus, the frictional force and the physical and chemical adsorbability can be increased, resulting in an increased functionality of the glass according to the present invention. The annealing may be conducted with application of sonic waves or electromagnetic waves.

As described previously, when desired to have a white or milky white appearance in an application as a cooker top plate or so on, the glass according to the present invention is preferably separated into two or more phases. In order to obtain a glass having a white or milky white appearance, the glass according to the present invention after being formed into shape is preferably subjected to heat treatment by allowing it to stay in a temperature range higher than the strain point for at least one minute. Specifically, the temperature for the heat treatment is preferably not lower than 700°C, more preferably not lower than 800°C, even more preferably not lower than 850°C, and particularly preferably not lower than 900°C, preferably not higher than 1500°C, more preferably not higher than 1200°C, and even more preferably not higher than 1100°C. If the temperature for the heat treatment is too high, the glass is transformed from a solid state to a melt state, which makes it difficult to obtain a desired shape. On the other hand, if the temperature for the heat treatment is too low, this makes it difficult to efficiently progress phase separation, resulting in increased production cost. The time for the heat treatment is preferably not less than 1 minute, not less than 1 hour, not less than 5 hours, not less than 10 hours, or not less than 20 hours, and particularly preferably not less than 24 hours, preferably not more than 1000 hours, not more than 500 hours, not more than 100 hours, or not more than 50 hours. If the time for the heat treatment is out of the above range, a glass having desired characteristics is less likely to be obtained.

The cooling rate during cooling of the glass according to the present invention in a high-temperature state may have a specific temperature gradient or two or more levels of temperature gradients. In the case where the glass is desired to obtain a sufficient thermal shock resistance, it is desirable to control the cooling rate to sufficiently structurally relax the remaining glass phase. In this case, the average cooling rate from the maximum temperature of annealing to 25°C is, in an innermost portion of the glass according to the present invention farthest from the surface thereof, preferably 3000°C/min, not higher than 1000°C/min, not higher than 500°C/min, not higher than 400°C/min, not higher than 300°C/min, not higher than 200°C/min, not higher than 100°C/min, not higher than 50°C/min, not higher than 25°C/min, or not higher than 10°C/min, and particularly preferably not higher than 5°C/min. In the case where the glass is desired to obtain dimensional stability over a long period, the above average cooling rate is preferably not higher than 2.5°C/min, not higher than 1°C/min, not higher than 0.5°C/min, not higher than 0.1°C/min, or not higher than 0.05°C/min, and particularly preferably not higher than 0.01°C/min. Except for the case where physical strengthening treatment by air cooing, water cooling or the like is performed, the cooling rate of the low thermal expansion glass at the glass surface and the cooling rate thereof in the innermost portion of the glass thickness farthest from the glass surface preferably approximate to each other. The value of the cooling rate in the innermost portion farthest from the surface divided by the cooling rate at the surface is preferably 0.0001 to 1, 0.001 to 1, 0.01 to 1, 0.1 to 1, 0.5 to 1, 0.8 to 1, or 0.9 to 1, and particularly preferably 1. As the above value is closer to 1, residual strain is less likely to occur in all locations of the glass according to the present invention and long-term dimensional stability is more likely to be obtained. The cooling rate at the surface can be estimated by contact thermometry or with a radiation thermometer. The temperature of the inner portions of the glass can be estimated by immersing the low thermal expansion glass in a high-temperature state into a cooling medium, measuring the heat quantity and rate of heat quantity change of the cooling medium, and making an estimate from the numeric data obtained by the measurement, the respective specific heats of the low thermal expansion glass and the cooling medium, the thermal conductivity, and so on.

The obtained glass according to the present invention may be cut. For example, in cutting with a wire saw, cutting is preferably performed along with the supply of a slurry containing polishing grains to the wire saw.

The method for producing a glass according to the present invention may further include the step of subjecting a glass obtained in the step of forming the molten glass into shape to heat treatment to crystallize the glass.

Specifically, a crystallized glass can be obtained by subjecting the glass after being annealed to heat treatment to crystallize it. The conditions of crystallization are as follows. First, nucleation is performed at 700°C to 1200°C (preferably 750 to 900°C) for 0.1 to 60 hours (preferably 0.25 to 50 hours and more preferably 1 to 40 hours) and crystal growth is then performed at 800 to 1300°C (preferably 850 to 1100°C) for 0.1 to 50 hours (preferably 0.2 to 10 hours and more preferably 0.25 to 5 hours). The heat treatment in each of the nucleation process and crystal growth process may be performed at a specific temperature only, may be performed stepwise by holding the glass in two or more temperature levels or may be performed by the application of heat with a temperature gradient. Alternatively, without nucleation, only the heat treatment after the crystal growth may be performed. By doing so, for example, a crystallized glass in which crystals as described below are precipitated can be obtained. Specifically, examples of the type of crystals include: $ZnAl_2O_4$ (gahnite), willemite (zinc silicate), $Al_2SiO_5$ (aluminum silicate), zirconia, zirconia titanate, a tin-containing zirconia-based oxide, titania, aluminotitanate, β-quartz solid solution, α-quartz, β-quartz, β-spodumene solid solution, spodumene, zircon, cordierite, enstatite, mica, nepheline, anorthite, lithium disilicate, lithium metasilicate, wollastonite, diopside, cristobalite, tridymite, feldspar, spinel-based crystals, and metal colloid. These types of crystals may be contained singly or in combination of two or more of them.

The crystals may be precipitated by annealing or the crystallization may be promoted by applying sonic waves or electromagnetic waves to the glass. The cooling rate during cooling of the crystallized glass according to the present invention in a high-temperature state may have a specific temperature gradient or two or more levels of temperature gradients. The cooling rate is preferably the same as the above-described cooling rate for the glass.

[Examples]

Next, the present invention will be described with reference to examples, but the present invention is not limited to the following examples. Tables 1 to 6 and 14 to 16 show the compositions (Sample Nos. 1 to 36 and 41 to 58) of glasses (amorphous glasses before being crystallized) according to examples of the present invention, Tables 7 to 12 and 17 to 19 show the characteristic values of each glass in Tables 1 to 6 and 14 to 16, Table 13 shows the characteristic values of crystallized glasses Nos. 37 to 40 obtained by subjecting each of the glasses of Nos. 1 to 4 in Table 1 to heat treatment, and Table 20 shows the characteristic values of a glass obtained by subjecting Sample No. 55 in Table 16 to heat treatment.

[Table 1]

| | unit | No.1 | No.2 | No.3 | No.4 | No.5 | No.6 |
|---|---|---|---|---|---|---|---|
| $SiO_2$ | | 49.1 | 49.1 | 41.8 | 42.5 | 54.6 | 46.3 |
| $Al_2O_3$ | | 28.0 | 28.0 | 26.6 | 27.0 | 25.0 | 34.2 |
| $ZnO$ | | 22.4 | 22.3 | 21.2 | 21.6 | 20.0 | 19.1 |
| $SnO_2$ | | 0 | 0.26 | 0.22 | 0.25 | 0.26 | 0.26 |
| $TiO_2$ | | 0.01 | 0.0001 | 0.03 | 3.18 | 0 | 0 |
| $ZrO_2$ | | 0.01 | 0.0001 | 9.64 | 4.90 | 0.03 | 0 |
| $HfO_2$ | | 0.0002 | 0 | 0.17 | 0.08 | 0.0005 | 0 |
| $Li_2O$ | | 0.0005 | 0.01 | 0.02 | 0.12 | 0.0002 | 0.0003 |
| $Na_2O$ | | 0.23 | 0.10 | 0.09 | 0.09 | 0.09 | 0.12 |
| $K_2O$ | | 0.002 | 0.21 | 0 | 0.01 | 0.002 | 0.0008 |
| $MgO$ | | 0.0001 | 0 | 0 | 0.15 | 0 | 0 |
| $CaO$ | | 0.17 | 0 | 0.007 | 0.004 | 0 | 0 |
| $SrO$ | % by mass | 0 | 0.0003 | 0 | 0.1 | 0 | 0.001 |
| $BaO$ | | 0 | 0 | 0.24 | 0 | 0.002 | 0 |
| $P_2O_5$ | | 0 | 0 | 0.01 | 0.02 | 0 | 0 |
| $B_2O_3$ | | 0.11 | 0 | 0 | 0.001 | 0 | 0 |
| $Fe_2O_3$ | | 0.035 | 0.02 | 0.019 | 0.011 | 0.003 | 0.004 |
| $V_2O_5$ | | 0 | 0.00031 | 0.00007 | 0.00022 | 0 | 0 |
| $Cr_2O_3$ | | 0.00006 | 0.000001 | 0 | 0.00005 | 0.00015 | 0.00007 |
| $MoO_3$ | | 0.0001 | 0.0002 | 0.00015 | 0 | 0.00001 | 0.00038 |
| $NiO$ | | 0 | 0 | 0.00001 | 0.00046 | 0 | 0.000001 |
| $CuO$ | | 0 | 0 | 0 | 0 | 0 | 0 |
| $MnO_2$ | | 0 | 0 | 0 | 0 | 0 | 0 |
| $Nd_2O_3$ | | 0 | 0 | 0 | 0 | 0 | 0 |
| $WO_3$ | | 0 | 0 | 0 | 0 | 0 | 0 |
| $CoO$ | | 0 | | 0 | 0 | 0 | 0 |
| $Sb_2O_3$ | | 0.3 | 0.03 | 0.6 | 1.5 | 0 | 0.7 |
| $As_2O_3$ | | 0.3 | 0.03 | 0.3 | 2.2 | 0.1 | 0.4 |
| $SO_3$ | ppm | 1.7 | 18.5 | 1.6 | 32.0 | 0 | 2.1 |
| $Pt$ | | 0 | 0 | 0.1 | 15 | 2.1 | 3.4 |
| $Rh$ | | 0 | 0 | 0.1 | 0.05 | 0.02 | 1.5 |
| $Li+Na+K$ | % by mass | 0.2325 | 0.32 | 0.11 | 0.22 | 0.0922 | 0.1211 |
| $Al/Zn$ | - | 1.25 | 1.26 | 1.25 | 1.25 | 1.25 | 1.79 |
| $Zn/(Si+B)$ | - | 0.46 | 0.45 | 0.51 | 0.51 | 0.37 | 0.41 |
| $(Li+Na+K)/Fe$ | - | 6.64 | 16.00 | 5.79 | 20.00 | 30.73 | 30.28 |
| $Mg/(Mg+B)$ | - | 0 00091 | - | - | 099 | - | - |
| $Zn+B+P$ | - | 22.51 | 223 | 2121 | 21 621 | 20 | 191 |
| $(Zn+B+P)/Zn$ | - | 1.005 | 1.000 | 1.000 | 1.001 | 1.000 | 1.000 |

(continued)

| | unit | No.1 | No.2 | No.3 | No.4 | No.5 | No.6 |
|---|---|---|---|---|---|---|---|
| Cr+V | % by mass | 0.00006 | 0.000311 | 0.00007 | 0.00027 | 0.00015 | 0.00007 |
| Ti+Fe+V+C r+Mo+Ni+C u+Mn+Nd+W+Co | % by mass | 0.4516 | 0.020611 | 0.04923 | 3.19173 | 0.00316 | 0.004451 |
| (Si+Al)/ (Ti+Fe+V+Cr+Mo+Ni +Cu+Mn+Nd+W+Co) | - | 1707.3 | 3740.7 | 1389.4 | 21.8 | 25189.9 | 18085.8 |

[Table 2]

| | unit | No.7 | No.8 | No.9 | No.10 | No.11 | No.12 |
|---|---|---|---|---|---|---|---|
| $SiO_2$ | % by mass | 47.3 | 60.2 | 66.0 | 72.1 | 78.6 | 67.3 |
| $Al_2O_3$ | | 24.5 | 21.9 | 18.7 | 15.3 | 11.8 | 19.1 |
| $ZnO$ | | 27.9 | 17.5 | 14.9 | 12.2 | 9.4 | 115 |
| $SnO_2$ | | 0.26 | 0.27 | 0.27 | 0.28 | 0.28 | 0.22 |
| $TiO_2$ | | 0 | 0 | 0 | 0 | 0 | 0.015 |
| $ZrO_2$ | | 0 | 0 | 0 | 0 | 0 | 0.0001 |
| $HfO_2$ | | 0 | 0 | 0 | 0 | 0 | 0 |
| $Li_2O$ | | 0 | 0 | 0 | 0 | 0 | 0 |
| $Na_2O$ | | 0.08 | 0.08 | 0.07 | 0.05 | 0 | 0.0001 |
| $K_2O$ | | 0.002 | 0.002 | 0.002 | 0.002 | 0.002 | 0 |
| $MgO$ | | 0.007 | 0 | 0 | 0 | 0 | 1.85 |
| $CaO$ | | 0 | 0 | 0 | 0 | 0 | 0.02 |
| $SrO$ | | 0 | 0 | 0 | 0 | 0 | 0.0001 |
| $BaO$ | | 0 | 0 | 0.007 | 0 | 0 | 0 |
| $P_2O_5$ | | 0 | 0 | 0 | 0 | 0 | 0.015 |
| $B_2O_3$ | | 0 | 0 | 0 | 0 | 0 | 0 |
| $Fe_2O_3$ | | 0.003 | 0.003 | 0 | 0.0002 | 0.001 | 0.006 |
| $V_2O_5$ | | 0 | 0.000001 | 0.000003 | 0 | 0 | 0.001 |
| $Cr_2O_3$ | | 0.00005 | 0.00059 | 0.00004 | 0.00003 | 0.0008 | 0.001 |
| $MoO_3$ | | 0.00057 | 0.00102 | 000153 | 0.000001 | 00005 | 0.0001 |
| $NiO$ | | 0 | 0 | 0 | 0 | 0 | 0.001 |
| $CuO$ | | 0 | 0 | 0 | 0 | 0 | 0.001 |
| $MnO_2$ | | 0 | 0 | 0 | 0 | 0 | 0.001 |
| $Nd_2O_3$ | | 0 | 0 | 0 | 0 | 0 | 0.001 |
| $WO_3$ | | 0 | 0 | 0 | 0 | 0 | 0.001 |
| $CoO$ | | 0 | 0 | 0 | 0 | 0 | 0.001 |

(continued)

|  | unit | No.7 | No.8 | No.9 | No.10 | No.11 | No.12 |
|---|---|---|---|---|---|---|---|
| $Sb_2O_3$ |  | 0.6 | 0 | 0.01 | 0.5 | 0 | 0.001 |
| $As_2O_3$ |  | 03 | 0.01 | 0 | 02 | 0 | 0.001 |
| $SO_3$ | ppm | 15 | 0 | 0 | 10 | 0 | 1 |
| Pt |  | 0.01 | 0.09 | 0.7 | 1.4 | 10.2 | 0 |
| Rh |  | 0.01 | 11.0 | 0.8 | 0.03 | 5.3 | 0 |
| Li+Na+K | % by mass | 0.082 | 0.082 | 0.072 | 0.052 | 0.002 | 0.0001 |
| Al/Zn | - | 0.88 | 125 | 126 | 125 | 126 | 1.66 |
| Zn/ (Si+B) | - | 059 | 029 | 023 | 0.17 | 0.12 | 0.17 |
| (Li+Na+K)/Fe | - | 2733 | 2733 | - | 26000 | 2.00 | 0.02 |
| Mg/(Mg+B) | - | 1 | - | - | - | - | 1 |
| Zn+B+P | - | 27.9 | 17.5 | 14.9 | 12.2 | 9.4 | 11.515 |
| (Zn+B+P)/ Zn | - | 1.000 | 1.000 | 1.000 | 1.000 | 1.000 | 1.001 |
| Cr+V | % by mass | 0.00005 | 0.000591 | 0.000043 | 0.00003 | 0.0008 | 0.002 |
| Ti+Fe+V+Cr+Mo+Ni+Cu+M n+N d+W +Co | % by mass | 0.00362 | 0.004611 | 0.001573 | 0.000231 | 0.0023 | 0.0291 |
| (Si+Al)/ (Ti+Fe+V+Cr+Mo+Ni +Cu+M n+N d+W +Co) | - | 19834.3 | 17805.2 | 53846.2 | 378355.0 | 39304.3 | 2969.1 |

[Table 3]

|  | unit | No.13 | No.14 | No.15 | No.16 | No17 | No.18 |
|---|---|---|---|---|---|---|---|
| $SiO_2$ |  | 68.1 | 69.1 | 67.0 | 53.2 | 591 | 59 .6 |
| $Al_2O_3$ |  | 14.5 | 149 | 143 | 20.7 | 19.4 | 22.7 |
| ZnO |  | 11.5 | 11.9 | 11.4 | 11.0 | 0.01 | 0.02 |
| $SnO_2$ |  | 0.22 | 0.23 | 0.22 | 0.20 | 0.24 | 0.24 |
| $TiO_2$ |  | 0.024 | 0.015 | 0.014 | 0.011 | 0.021 | 0.021 |
| $ZrO_2$ |  | 0.002 | 0.002 | 0.002 | 0 | 0 | 0 |
| $HfO_2$ |  | 0.0001 | 0 | 0 | 0 | 0 | 0 |
| $Li_2O$ |  | 0 | 0.0001 | 0 | 0 | 0 | 0 |
| $Na_2O$ |  | 0 | 0 | 0.0001 | 0 | 0.0001 | 0.0001 |
| $K_2O$ |  | 0 | 0 | 0 | 0.0001 | 0 | 0 |
| MgO |  | 1.84 | 3.78 | 0.02 | 0.02 | 5.94 | 6.03 |
| CaO |  | 0.02 | 0.03 | 0 | 0.02 | 0.04 | 0.05 |
| SrO | % by mass | 0 | 0 | 0 | 0 | 0 | 0.011 |
| BaO |  | 0.0001 | 0 | 0 | 0 | 0 | 0 |
| $P_2O_3$ |  | 0.007 | 0.008 | 0.017 | 9.67 | 10.4 | 6.28 |
| $B_2O_3$ |  | 38 | 0 | 7 | 52 | 48 | 5 |
| $Fe_2O_3$ |  | 0.006 | 0.007 | 0.005 | 0.007 | 0.007 | 0.008 |
| $V_2O_5$ |  | 0.001 | 0.0001 | 0.001 | 0.001 | 0.001 | 0.001 |

(continued)

|  | unit | No.13 | No.14 | No.15 | No.16 | No17 | No.18 |
|---|---|---|---|---|---|---|---|
| $Cr_2O_3$ |  | 0.0001 | 0.001 | 0.001 | 0.001 | 0.001 | 0.001 |
| $MoO_3$ |  | 0.001 | 0.001 | 0.001 | 0.001 | 0.001 | 0.001 |
| N iO |  | 0.001 | 0.001 | 0.0001 | 0.001 | 0.001 | 0.001 |
| CuO |  | 0.001 | 0.001 | 0.001 | 0.0001 | 0.001 | 0.001 |
| $MnO_2$ |  | 0.001 | 0.001 | 0.001 | 0.001 | 0.0001 | 0.001 |
| $Nd_2O_3$ |  | 0.001 | 0.001 | 0.001 | 0.001 | 0.001 | 0.0001 |
| $WO_3$ |  | 0.001 | 0.001 | 0.001 | 0.001 | 0.001 | 0.001 |
| CoO |  | 0.001 | 0.001 | 0.001 | 0.001 | 0.001 | 0.001 |
| $Sb_2O_3$ |  | 0.001 | 0.001 | 0.001 | 0.001 | 0.001 | 0.001 |
| $As_2O_3$ |  | 0.001 | 0.001 | 0.001 | 0.001 | 0.001 | 0.001 |
| $SO_3$ | ppm | 1 | 1 | 1 | 1 | 1 | 1 |
| Pt |  | 0 | 0 | 0 | 0 | 0 | 0 |
| Rh |  | 0 | 0 | 0 | 0 | 0 | 0 |
| Li+Na+K | % by mass | 0 | 0.0001 | 0.0001 | 0.0001 | 0.0001 | 0.0001 |
| Al/Zn | - | 12.6 | 1.25 | 1.25 | 1.88 | 1940.00 | 1135.00 |
| Zn/ (Si+B) | - | 0.16 | 0.17 | 0.15 | 019 | 0.00 | 0.00 |
| (Li+Na+K)/Fe | - | 0 | 0.01 | 0.02 | 0.01 | 0.01 | 0.01 |
| Mg/(Mg+B) | - | 033 | 1 | 0.0028 | 0.0038 | 055 | 055 |
| Zn+B+P | - | 15.307 | 11.908 | 18.417 | 25.87 | 1521 | 113 |
| (Zn+B+P)/Zn | - | 1.331 | 1.001 | 1.616 | 2.352 | 1521 | 565 |
| Cr+V | % by mass | 0.0011 | 0.0011 | 0.002 | 0.002 | 0.002 | 0002 |
| Ti+Fe+V+Cr+Mo+Ni+Cu+Mn+Nd+W+Co | % by mass | 0.0381 | 0.0301 | 00271 | 0.0261 | 0.0361 | 0.0371 |
| (Si+Al)/ CTi+Fe+V+Cr+Mo+Ni+Cu+Mn+Nd+W+Co) | - | 2168.0 | 2790.7 | 30000 | 2831.4 | 2174.5 | 22183 |

[Table 4]

|  | unit | No.19 | No.20 | No.21 | No.22 | No.23 | No.24 |
|---|---|---|---|---|---|---|---|
| $SiO_2$ |  | 56.4 | 53.1 | 64.9 | 60.3 | 51.1 | 44.3 |
| $Al_2O_3$ |  | 22.2 | 20.9 | 23.7 | 22.0 | 21.7 | 20.6 |
| ZnO |  | 0.01 | 11.0 | 0.03 | 11.7 | 5.7 | 5.4 |
| $SnO_2$ |  | 0.22 | 0.20 | 0.23 | 0.20 | 0.38 | 0.37 |
| $TiO_2$ |  | 0.014 | 0.013 | 0.018 | 0.015 | 0.001 | 0.001 |
| $Z_rO_2$ |  | 0 | 0 | 0 | 0 | 0 | 0 |
| $HfO_2$ |  | 0 | 0 | 0 | 0 | 0 | 0 |
| $Li_2O$ |  | 0 | 0 | 0 | 0 | 0 | 0 |
| $Na_2O$ |  | 0.0001 | 0.0001 | 0.0001 | 0.0001 | 0.0001 | 0.0001 |
| $K_2O$ |  | 0 | 0 | 0 | 0 | 0 | 0 |
| MgO |  | 5.87 | 0.02 | 6.3 | 0.01 | 5.75 | 5.44 |
| CaO |  | 0.05 | 0.01 | 0.05 | 0.02 | 0.04 | 0.04 |

(continued)

| | unit | No.19 | No.20 | No.21 | No.22 | No.23 | No.24 |
|---|---|---|---|---|---|---|---|
| SrO | % by mass | 0 | 0 | 0 | 0 | 0 | 0 |
| BaO | | 0 | 0 | 0 | 0 | 0 | 0 |
| $P_2O_5$ | | 10.2 | 9.72 | 0.01 | 0.008 | 10.3 | 19.2 |
| $B_2O_3$ | | 5 | 5 | 4.7 | 5.7 | 5.1 | 4.7 |
| $Fe_2O_3$ | | 0.008 | 0.008 | 0.008 | 0.007 | 0.008 | 0.008 |
| $V_2O_5$ | | 0.001 | 0.001 | 0.001 | 0.001 | 0.001 | 0.001 |
| $Cr_2O_3$ | | 0.001 | 0.001 | 0.001 | 0.001 | 0.001 | 0.001 |
| $McO_3$ | | 0.001 | 0.001 | 0.001 | 0.001 | 0.001 | 0.001 |
| NiO | | 0.001 | 0.001 | 0.001 | 0.001 | 0.001 | 0.001 |
| CuO | | 0.001 | 0.001 | 0.001 | 0.001 | 0.001 | 0.001 |
| $MnO_2$ | | 0.001 | 0.001 | 0.001 | 0.001 | 0.001 | 0.001 |
| $Nd_2O_3$ | | 0.001 | 0.001 | 0.001 | 0.001 | 0.001 | 0.001 |
| $WO_3$ | | 0.0001 | 0.001 | 0.001 | 0.001 | 0.001 | 0.001 |
| CoO | | 0.001 | 0.0001 | 0.001 | 0.001 | 0.001 | 0.001 |
| $Sb_2O_3$ | | 0.001 | 0.001 | 0.0001 | 0.001 | 0.001 | 0.001 |
| $As_2O_3$ | | 0.001 | 0.001 | 0.001 | 0.0001 | 0.001 | 0.001 |
| $SO_3$ | ppm | 1 | 1 | 1 | 1 | 1 | 1 |
| Pt | | 0 | 0 | 0 | 0 | 0 | 0 |
| Rh | | 0 | 0 | 0 | 0 | 0 | 0 |
| Li+Na+K | % by mass | 0.0001 | 0.0001 | 0 0001 | 0 0001 | 0.0001 | 0.0001 |
| Al/Zn | - | 2220.00 | 1.90 | 790.00 | 1.88 | 3.81 | 3.81 |
| Zn/ (Si+B) | - | 0.00 | 0.19 | 0.00 | 0.18 | 0.10 | 0.11 |
| (Li+Na+K)/Fe | - | 0.01 | 0.01 | 0.01 | 0.01 | 0.01 | 0.01 |
| Mg/(Mg+B) | - | 0.54 | 0 | 0.573 | 0 | 0.53 | 0.54 |
| Zn+B+P | - | 15.21 | 25.72 | 4.7 | 17.408 | 21.1 | 29.3 |
| (Zn+B+P)/ Zn | - | 1521 | 2338 | 158 | 1.488 | 3.702 | 5.426 |
| Cr+V | % by mass | 0.002 | 0.002 | 0.002 | 0.002 | 0.002 | 0.002 |
| Ti+Fe+V+Cr+Mo+Ni+C u+M n+N d+W +Co | % by mass | 0.0301 | 0.0291 | 0.035 | 0.031 | 0.018 | 0.018 |
| (Si+Al)/ (Ti+Fe+V+Cr+Mo+Ni +Cu+Mn+Nd+W+Co) | - | 2611.3 | 2543.0 | 2531.4 | 2654.8 | 4044.4 | 3605.6 |

[Table 5]

| | unit | No.25 | No.26 | No.27 | No.28 | No.29 | No.30 |
|---|---|---|---|---|---|---|---|
| $SiO_2$ | | 54.3 | 47.6 | 54.7 | 548 | 54.7 | 54.6 |
| $Al_2O_3$ | | 21.4 | 20.2 | 21.5 | 21.5 | 21.5 | 21.6 |
| ZnO | | 5.7 | 5.3 | 5.7 | 5.7 | 5.7 | 5.7 |
| $SnO_2$ | | 0.41 | 0.38 | 0.41 | 0.40 | 0.40 | 0.40 |
| $TiO_2$ | | 0.001 | 0.001 | 0.002 | 0.002 | 0.002 | 0.002 |
| $ZrO_2$ | | 0 | 0 | 0 | 0 | 0 | 0 |

(continued)

| | unit | No.25 | No.26 | No.27 | No.28 | No.29 | No.30 |
|---|---|---|---|---|---|---|---|
| $HfO_2$ | | 0 | 0 | 0 | 0 | 0 | 0 |
| $Li_2O$ | | 0 | 0 | 0 | 0 | 0 | 0 |
| $Na_2O$ | | 0.0001 | 0.0001 | 0.0001 | 0.0001 | 0.0001 | 0.0001 |
| $K_2O$ | | 0 | 0 | 0 | 0 | 0 | 0.000 |
| MgO | | 2.89 | 2.74 | 2.87 | 2.88 | 2.87 | 2.88 |
| CaO | | 0.03 | 0.03 | 0.03 | 0.03 | 0.03 | 0.02 |
| SrO | % by mass | 0 | 0 | 0 | 0 | 0 | 0 |
| BaO | | 0 | 0 | 0 | 0 | 0 | 0 |
| $P_2O_5$ | | 10.1 | 18.9 | 10.1 | 10.1 | 10.1 | 10.1 |
| $B_2O_3$ | | 5.2 | 4.8 | 4.7 | 4.6 | 4.7 | 4.7 |
| $Fe_2O_3$ | | 0.007 | 0.007 | 0.006 | 0.007 | 0.008 | 0.007 |
| $V_2O_5$ | | 0.0008 | 0.001 | 0.001 | 0.001 | 0.001 | 0.001 |
| $Cr_2O_3$ | | 0.0003 | 0.001 | 0.001 | 0.001 | 0.001 | 0.001 |
| $MoO_3$ | | 0.005 | 0.001 | 0.001 | 0.001 | 0.001 | 0.001 |
| NiO | | 0.001 | 0.001 | 0.001 | 0.001 | 0.001 | 0.001 |
| CuO | | 0.001 | 0.001 | 0.001 | 0.001 | 0.001 | 0.001 |
| $MnO_2$ | | 0.001 | 0.001 | 0.001 | 0.001 | 0.001 | 0.001 |
| $Nd_2O_3$ | | 0.001 | 0.001 | 0.001 | 0.001 | 0.001 | 0.001 |
| $WO_3$ | | 0.001 | 0.001 | 0.001 | 0.001 | 0.001 | 0.001 |
| CoO | | 0.001 | 0.001 | 0.001 | 0.001 | 0.001 | 0.001 |
| $Sb_2O_3$ | | 0.0007 | 0.001 | 0.001 | 0.001 | 0.001 | 0.001 |
| $As_2O_3$ | | 0.001 | 0.001 | 0.001 | 0.001 | 0.001 | 0.001 |
| $SO_3$ | ppm | 1 | 0.001 | 0.001 | 0.001 | 0.001 | 0.001 |
| Pt | | 0 | 0 | 0 | 0 | 0.001 | 0.01 |
| Rh | | 0 | 0 | 0 | 0 | 0 | 0 |
| Li+Na+K | % by mass | 0.0001 | 0.0001 | 0.0001 | 0.0001 | 0.0001 | 0.0001 |
| Al/Zn | - | 3.75 | 381 | 3.77 | 3.77 | 3.77 | 3.79 |
| Zn/ (Si+B) | - | 0.10 | 0.10 | 0.10 | 010 | 0.10 | 010 |
| (Li+Na+K)/Fe | - | 0.01 | 001 | 0.02 | 001 | 0.01 | 001 |
| Mg/(Mg+B) | - | 036 | 036 | 038 | 039 | 038 | 038 |
| Zn+B+P | - | 210 | 29.0 | 20.5 | 20.4 | 20.5 | 205 |
| (Zn+B+P)/ Zn | - | 3 68 | 5.47 | 3 60 | 3.58 | 3 60 | 3.60 |
| Cr+V | % by mass | 00011 | 0002 | 0.002 | 0002 | 0.002 | 0002 |
| Ti+Fe+V+Cr+Mo+Ni+Cu+Mn+Nd+W+Co | % by mass | 0.0201 | 0017 | 0017 | 0.018 | 0019 | 0.018 |
| (Si+Al)/ CTi+Fe+V+Cr+Mo+Ni+Cu+Mn+Nd+W+Co) | - | 37662 | 39882 | 4482.4 | 42389 | 40105 | 42333 |

[Table 6]

| | unit | No.31 | No.32 | No.33 | No.34 | No.35 | No.36 |
|---|---|---|---|---|---|---|---|
| SiO$_2$ | | 56.6 | 60.6 | 68.6 | 69.9 | 67.4 | 70.3 |
| Al$_2$O$_3$ | | 21.6 | 20.8 | 15.3 | 15.6 | 15.2 | 14.8 |
| ZnO | | 0.22 | 0.12 | 0.25 | 0.14 | 11.7 | 11.0 |
| SnO$_2$ | | 0.41 | 0.22 | 0.43 | 0.46 | 0.41 | 0.65 |
| TiO$_2$ | | 0.001 | 0.002 | 0.002 | 0.002 | 0.002 | 0.002 |
| ZrO$_2$ | | 0 | 0 | 0 | 0 | 0 | 0 |
| Hf$_2$O | | 0 | 0 | 0 | 0 | 0 | 0 |
| Li$_2$O | | 0 | 0 | 0 | 0 | 0 | 0 |
| Na$_2$O | | 0.0001 | 0.0001 | 0 | 0 | 0 | 0 |
| K$_2$O | | 0 | 0 | 0.0001 | 0.0001 | 0.0001 | 0 |
| MgO | | 0.9 | 2.02 | 1.85 | 1.56 | 0.02 | 1.31 |
| CaO | | 2.14 | 0.72 | 1.18 | 2.22 | 0 | 0.43 |
| SrO | | 1.03 | 0.16 | 0.002 | 0.002 | 0 | 0 |
| BaO | % by mass | 0 | 0 | 3.03 | 2.13 | 0 | 0 |
| P$_2$O$_5$ | | 14.9 | 10.4 | 0.005 | 0.005 | 0.005 | 0.44 |
| B$_2$O$_3$ | | 2.2 | 4.9 | 9.3 | 8 | 5.2 | 1.1 |
| Fe$_2$O$_3$ | | 0.007 | 0.007 | 0.006 | 0.006 | 0.006 | 0.007 |
| V$_2$O$_5$ | | 0.001 | 0.001 | 0.001 | 0.001 | 0.001 | 0.001 |
| Cr$_2$O$_3$ | | 0.001 | 0.001 | 0.001 | 0.001 | 0.001 | 0.001 |
| MoO$_3$ | | 0.001 | 0.001 | 0.001 | 0.001 | 0.001 | 0.001 |
| NiO | | 0.001 | 0.001 | 0.001 | 0.001 | 0.001 | 0.001 |
| CuO | | 0.001 | 0.001 | 0.001 | 0.001 | 0.001 | 0.001 |
| MnO$_2$ | | 0.001 | 0.001 | 0.001 | 0.001 | 0.001 | 0.001 |
| Nd$_2$O$_3$ | | 0.001 | 0.001 | 0.001 | 0.001 | 0.001 | 0.001 |
| WO$_3$ | | 0.001 | 0.001 | 0.001 | 0.001 | 0.001 | 0.001 |
| CoO | | 0.001 | 0.001 | 0.001 | 0.001 | 0.001 | 0.001 |
| Sb$_2$O$_3$ | | 0.001 | 0.001 | 0.001 | 0.001 | 0.001 | 0.001 |
| As$_2$O$_3$ | | 0.001 | 0.001 | 0.001 | 0.001 | 0.001 | 0.001 |
| SO$_3$ | ppm | 0.001 | 0.001 | 0.001 | 0.001 | 0.001 | 0.001 |
| Pt | | 0.1 | 0.5 | 1.0 | 1.5 | 2.0 | 2.5 |
| Rh | | 0 | 0.001 | 0.001 | 0.01 | 0.01 | 0.01 |
| Li+Na+K | % by mass | 0.0001 | 0.0001 | 0.0001 | 0.0001 | 0.0001 | 0 |
| Al/Zn | - | 98.18 | 173.33 | 61.20 | 111.43 | 1.30 | 1.35 |
| Zn/ (Si+B) | - | 0.00 | 0.00 | 0.00 | 0.00 | 0.16 | 0.15 |
| (Li+Na+K)/Fe | - | 0.01 | 0.01 | 0.02 | 0.02 | 0.02 | 0 |
| Mg/(Mg+B) | - | 0.29 | 0.29 | 0.17 | 0.16 | 0 | 0.54 |
| Zn+B+P | - | 17.32 | 15.42 | 9.555 | 8.145 | 16.905 | 12.54 |
| (Zn+B+P)/Zn | - | 78.73 | 128.50 | 38.22 | 58.18 | 1.44 | 1.14 |
| Cr+V | % by mass | 0.002 | 0.002 | 0.002 | 0.002 | 0.002 | 0.002 |

(continued)

|  | unit | No.31 | No.32 | No.33 | No.34 | No.35 | No.36 |
|---|---|---|---|---|---|---|---|
| Ti+Fe+V+Cr+M o+Ni+C u+Mn+Nd+W+Co | % by mass | 0.017 | 0.018 | 0.017 | 0.017 | 0.017 | 0.018 |
| (Si+Al)/ (Ti+Fe+V+Cr+Mo+Ni +Cu+Mn+Nd+W +Co) | - | 4600.0 | 4522.2 | 4935.3 | 5029.4 | 4858.8 | 4727.8 |

[Table 7]

| | unit | No.1 | No2 | No3 | No.4 | No5 | No6 |
|---|---|---|---|---|---|---|---|
| | | Glass | | | | | |
| Density | g/cm$^3$ | 2845 | 2851 | 3070 | 3.007 | 2.767 | 2844 |
| β-OH | /mm | 0.15 | 0.05 | 0.01 | 035 | 0.10 | 0.18 |
| CLTE 30-380°C | ×10$^{-7}$/°C | 27.5 | 27.1 | 31.9 | 31.6 | 25.2 | 28.4 |
| CLTE 30-750°C | | 33.0 | 328 | 38.2 | 42.0 | 29.7 | 33.1 |
| Glass Transition Point Tg | °C | 747 | 750 | 751 | 732 | 755 | 773 |
| Deformation Point Tf | | 789 | 790 | 790 | 777 | 797 | 808 |
| 10$^4$ | | unmeasured | 1484 | unmeasured | unmeasured | unmeasured | unmeasured |
| 10$^{35}$ | | unmeasured | 1497 | unmeasured | unmeasured | unmeasured | unmeasured |
| 10$^3$ | | unmeasured | 1515 | 1454 | unmeasured | unmeasured | unmeasured |
| 10$^{25}$ | | unmeasured | 1539 | 1458 | unmeasured | unmeasured | unmeasured |
| 10$^2$ | | unmeasured | 1574 | 1469 | 1454 | unmeasured | unmeasured |
| Liquidus Temperature | | unmeasured | unmeasured | 1450 | unmeasured | unmeasured | unmeasured |
| Permittivity 1MHz ε | - | unmeasured | unmeasured | unmeasured | unmeasured | 5.7 | 62 |
| Dielectric Tangent 1MHz tanδ | 10$^{-3}$ | unmeasured | unmeasured | unmeasured | unmeasured | 1.60 | 190 |
| 1MHz ε × tanδ | | unmeasured | unmeasured | unmeasured | unmeasured | 9.1 | 11.8 |
| Volume Resistance @ 150°C | Ω·cm | unmeasured | unmeasured | unmeasured | unmeasured | 14.4 | 169 |
| Volume Resistance @ 250°C | | unmeasured | unmeasured | unmeasured | unmeasured | 11.8 | 13.7 |
| Volume Resistance @ 350°C | | unmeasured | unmeasured | unmeasured | unmeasured | 10.1 | 11.5 |
| Young's Modulus (E) | GPa | unmeasured | unmeasured | unmeasured | unmeasured | 93.1 | 100.9 |
| Modulus of Rigidity (G ) | | unmeasured | unmeasured | unmeasured | unmeasured | 37.7 | 40.7 |
| Poisson's Ratio (v ) | - | unmeasured | unmeasured | unmeasured | unmeasured | 0.24 | 024 |

(continued)

| | unit | No.1 | No2 | No3 | No.4 | No5 | No6 |
|---|---|---|---|---|---|---|---|
| Glass | | | | | | | |
| Specific Modulus | GPa · cm$^3$/g | unmeasured | unmeasured | unmeasured | unmeasured | 33.6 | 355 |
| Transmittance @ 120 nm | % | unmeasured | unmeasured | unmeasured | unmeasured | 90.5 | 898 |
| Transmittance @ 800 nm | | unmeasured | unmeasured | unmeasured | unmeasured | 91.5 | 90.7 |
| Transmittance @ 555 nm | | unmeasured | unmeasured | unmeasured | unmeasured | 91 3 | 90.5 |
| Transmittance @ 380 nm | | unmeasured | unmeasured | unmeasured | unmeasured | 91.3 | 90.4 |
| Transmittance @ 300 nm | | unmeasured | unmeasured | unmeasured | unmeasured | 92.2 | 91.4 |
| L* | - | unmeasured | unmeasured | unmeasured | unmeasured | 96.3 | 95.9 |
| a* | | unmeasured | unmeasured | unmeasured | unmeasured | -0.1 | - 0.1 |
| b* | | unmeasured | unmeasured | unmeasured | unmeasured | 0.4 | 0.4 |
| Appearance | - | clear and colorless | clear and colorless | clear and colorless | clear and colorless | clear and colorless | clear and colorless |
| Surface Roughness of Principal Surface Ra | nm | unmeasured | unmeasured | unmeasured | unmeasured | 15 | 20 |
| Surface Roughness of End Surface Ra | | unmeasured | unmeasured | unmeasured | unmeasured | 0.0002 | 9.0 |
| Waviness | μm | unmeasured | unmeasured | unmeasured | unmeasured | 0.004 | 0.12 |

[Table 8]

| | unit | No.7 | No.8 | No9 | No.10 | No.11 | No.12 |
|---|---|---|---|---|---|---|---|
| Glass | | | | | | | |
| Density | g/cm$^3$ | 2965 | 2681 | 2592 | unm easured | unmeasured | 25582 |
| β-OH | /mm | 022 | 062 | 0.13 | 0.40 | 028 | 0.10 |
| CLTE 30-380°C | ×10-7/°C | 289 | 228 | 20.3 | 170 | 14.1 | 20.8 |
| CLTE 30-750°C | | 38.2 | 268 | 229 | 199 | 153 | 25.0 |
| Glass Transition Point Tg | °C | 729 | 751 | >900 | >900 | >900 | 764 |
| Deformation Point Tf | | 768 | 815 | >900 | >900 | >900 | unmeasured |
| 10$^4$ | | unmeasured | unmeasured | unmeasured | unmeasured | unmeasured | 1377 |
| 10$^{35}$ | | unmeasured | unmeasured | unmeasured | unmeasured | unmeasured | 1458 |
| 10$^3$ | | unmeasured | unmeasured | unmeasured | unmeasured | unmeasured | 1551 |
| 10$^{25}$ | | unmeasured | unmeasured | unmeasured | unmeasured | unmeasured | 1685 |
| 10$^2$ | | unmeasured | unmeasured | unmeasured | unmeasured | unmeasured | 1783 |
| Liquidus Temperature | | unmeasured | unmeasured | unmeasured | unmeasured | unmeasured | 1522 |
| Permittivity 1MHz ε | - | 66 | unmeasured | unmeasured | unmeasured | unmeasured | unmeasured |
| Dielectric Tangent 1MHz tans | 10$^{-3}$ | 1.60 | unmeasured | unmeasured | unmeasured | unmeasured | unmeasured |
| IMHz ε × tanδ | | 10.6 | unmeasured | unmeasured | unmeasured | unmeasured | unmeasured |
| Volume Resistance @ 150°C | Ω·cm | 17.4 | unmeasured | unmeasured | unmeasured | unmeasured | unmeasured |
| Volume Resistance @ 250°C | | 14.1 | unmeasured | unmeasured | unmeasured | unmeasured | unmeasured |
| Volume Resistance @ 350°C | | 11.8 | unmeasured | unmeasured | unmeasured | unmeasured | unmeasured |
| Young's Modulus (E) | GPa | 93.1 | unmeasured | unmeasured | unmeasured | unmeasured | unmeasured |
| Modulus of Rigidity (G) | | 38.7 | unmeasured | unmeasured | unmeasured | unmeasured | unmeasured |
| Poisson's Ratio (v ) | - | 0.20 | unmeasured | unmeasured | unmeasured | unmeasured | unmeasured |

EP 4 538 241 A1

(continued)

| | unit | No.7 | No.8 | No9 | No.10 | No.11 | No.12 |
|---|---|---|---|---|---|---|---|
| Glass | | | | | | | |
| Specific Modulus | GPa · cm$^3$/g | 31.4 | unmeasured | unmeasured | unmeasured | unmeasured | unmeasured |
| Transmittance @ 1200 nm | % | 89.7 | unmeasured | unmeasured | unmeasured | unmeasured | unmeasured |
| Transmittance @ 800 nm | | 90.7 | unmeasured | unmeasured | unmeasured | unmeasured | unmeasured |
| Transmittance @ 555 nm | | 90.7 | unmeasured | unmeasured | unmeasured | unmeasured | unmeasured |
| Transmittance @ 380 nm | | 90.6 | unmeasured | unmeasured | unmeasured | unmeasured | unmeasured |
| Transmittance @ 300 nm | | 91.6 | unmeasured | unmeasured | unmeasured | unmeasured | unmeasured |
| L* | - | 96.0 | unmeasured | unmeasured | unmeasured | unmeasured | unmeasured |
| a* | | -0.1 | unmeasured | unmeasured | unmeasured | unmeasured | unmeasured |
| b* | | 0.4 | unmeasured | unmeasured | unmeasured | unmeasured | unmeasured |
| Appearance | - | clear and colorless | clear and colorless | clear and colorless | clear and colorless | clear and colorless | clear and colorless |
| Surface Roughness of Princinal Surface Ra | nm | 220 | unmeasured | unmeasured | unmeasured | unmeasured | unmeasured |
| Surface Roughness of End Surface Ra | | 45 | unmeasured | unmeasured | unmeasured | unmeasured | 0.0001 |
| Waviness | μm | 0.03 | unmeasured | unmeasured | unmeasured | unmeasured | 0.001 |

[Table 9]

| | unit | No.13 | No.14 | No.15 | No.16 | No.17 | No.18 |
|---|---|---|---|---|---|---|---|
| | | Glass | | | | | |
| Density | g/cm$^3$ | 2.506 | 2.561 | 2.461 | 2.4804 | 2.3421 | 2.3857 |
| $\beta$ -OH | /mm | 0.10 | unmeasured | unmeasured | unmeasured | unmeasured | unmeasured |
| CLTE 30- 380°C | $\times 10^{-7}$/°C | 20.8 | 234 | 196 | 19.1 | 220 | 24.1 |
| CLTE 30-750°C | | 27.2 | 273 | 273 | 268 | 260 | 27.6 |
| Glass Transition Point Tg | °C | 710 | 754 | 688 | 701 | 740 | 761 |
| Deformation Point Tf | | unmeasured | 801 | 826 | 815 | 828 | 859 |
| 10$^4$ | | 1374 | 1380 | 1377 | 1320 | 1370 | 1330 |
| 10$^{35}$ | | 1454 | 1459 | 1458 | 1396 | 1447 | 1401 |
| 10$^3$ | | 1546 | 1551 | 1551 | 1482 | 1535 | 1484 |
| 10$^{25}$ | | 1655 | 1659 | 1658 | 1583 | 1636 | 1583 |
| 10$^2$ | | 1785 | 1790 | 1783 | 1700 | 1753 | 1702 |
| Liquidus Temperature | | 1400 | 1518 | 1392 | 1340 | 1319 | 1438 |
| Permittivity 1MHz $\varepsilon$ | - | unmeasured | unmeasured | unmeasured | unmeasured | unmeasured | unmeasured |
| Dielectric Tangent 1MHz tans | 10$^{-3}$ | unmeasured | unmeasured | unmeasured | unmeasured | unmeasured | unmeasured |
| 1MHz $\varepsilon \times$ tan$\delta$ | | unmeasured | unmeasured | unmeasured | unmeasured | unmeasured | unmeasured |
| Volume Resistance @ 150°C | $\Omega \cdot$ cm | unmeasured | unmeasured | unmeasured | unmeasured | unmeasured | unmeasured |
| Volume Resistance @ 250°C | | unmeasured | unmeasured | unmeasured | unmeasured | unmeasured | unmeasured |
| Volume Resistance @ 350°C | | unmeasured | unmeasured | unmeasured | unmeasured | unmeasured | unmeasured |
| Young's Modulus (E) | GPa | unmeasured | unmeasured | unmeasured | unmeasured | unmeasured | unmeasured |
| Modulus of Rigidity (G) | | unmeasured | unmeasured | unmeasured | unmeasured | unmeasured | unmeasured |
| Poisson's Ratio (v ) | - | unmeasured | unmeasured | unmeasured | unmeasured | unmeasured | unmeasured |

(continued)

| | unit | No.13 | No.14 | No.15 | No.16 | No.17 | No.18 |
|---|---|---|---|---|---|---|---|
| Glass | | | | | | | |
| Specific Modulus | GPa · cm$^3$/g | unmeasured | unmeasured | unmeasured | unmeasured | unmeasured | unmeasured |
| Transmittance @ 1200 nm | % | unmeasured | unmeasured | unmeasured | unmeasured | unmeasured | unmeasured |
| Transmittance @ 800 nm | | unmeasured | unmeasured | unmeasured | unmeasured | unmeasured | unmeasured |
| Transmittance @ 555 nm | | unmeasured | unmeasured | unmeasured | unmeasured | unmeasured | unmeasured |
| Transmittance @ 380 nm | | unmeasured | unmeasured | unmeasured | unmeasured | unmeasured | unmeasured |
| Transmittance @ 300 nm | | unmeasured | unmeasured | unmeasured | unmeasured | unmeasured | unmeasured |
| L* | - | unmeasured | unmeasured | unmeasured | unmeasured | unmeasured | unmeasured |
| a* | | unmeasured | unmeasured | unmeasured | unmeasured | unmeasured | unmeasured |
| b* | | unmeasured | unmeasured | unmeasured | unmeasured | unmeasured | unmeasured |
| Appearance | - | clear and colorless | clear and colorless | clear and colorless | clear and colorless | clear and colorless | clear and colorless |
| Surface Roughness of Principal Surface Ra | nm | 00 | unmeasured | unmeasured | unmeasured | unmeasured | unmeasured |
| Surface Roughness of End Surface Ra | | unmeasured | unmeasured | unmeasured | unmeasured | unmeasured | unmeasured |
| Waviness | μm | unmeasured | unmeasured | unmeasured | unmeasured | unmeasured | unmeasured |

[Table 10]

| | unit | No.19 | No.20 | No.21 | No22 | No23 | No24 |
|---|---|---|---|---|---|---|---|
| | | Glass | | | | | |
| Density | g/cm$^3$ | 2364 | 2.479 | 2.414 | 25417 | 2.4753 | 2.4245 |
| $\beta$-OH | /mm | unmeasured | unmeasured | unmeasured | unmeasured | unmeasured | unmeasured |
| CLTE 30-380°C | $\times 10^{-7}$/°C | 23.1 | 19.4 | 25.0 | 22.2 | 26.2 | 25.5 |
| CLTE 30-750°C | | 26.6 | 25.7 | 28.5 | 293 | 35.9 | unmeasured |
| Glass Transition Point Tg | °C | 752 | 705 | 787 | 730 | 717 | 691 |
| Deformation Point Tf | | 843 | 825 | 896 | 810 | 773 | 736 |
| $10^4$ | | 1336 | 1321 | 1355 | 1328 | 1251 | 1272 |
| $10^{35}$ | | 1410 | 1395 | 1410 | 1383 | 1320 | 1343 |
| $10^3$ | | 1496 | 1480 | 1480 | 1452 | 1399 | 1425 |
| $10^{25}$ | | 1596 | 1580 | 1575 | 1542 | 1493 | 1521 |
| $10^2$ | | 1713 | 1696 | 1708 | 1661 | 1605 | 1636 |
| Liquidus Temperature | | 1359 | 1341 | unmeasured | 1489 | 1265 | 1374 |
| Permittivity 1MHz ε | - | unmeasured | unmeasured | unmeasured | unmeasured | unmeasured | unmeasured |
| Dielectric Tangent 1MHz tans | $10^{-3}$ | unmeasured | unmeasured | unmeasured | unmeasured | unmeasured | unmeasured |
| 1MHz ε $\times$ tanδ | | unmeasured | unmeasured | unmeasured | unmeasured | unmeasured | unmeasured |
| Volume Resistance @ 150 °C | $\Omega \cdot$ cm | unmeasured | unmeasured | unmeasured | unmeasured | unmeasured | unmeasured |
| Volume Resistance @ 250 °C | | unmeasured | unmeasured | unmeasured | unmeasured | unmeasured | unmeasured |
| Volume Resistance @ 350 °C | | unmeasured | unmeasured | unmeasured | unmeasured | unmeasured | unmeasured |
| Young's Modulus (E) | GPa | unmeasured | unmeasured | unmeasured | unmeasured | unmeasured | unmeasured |
| Modulus of Rigidity (G) | | unmeasured | unmeasured | unmeasured | unmeasured | unmeasured | unmeasured |
| Poisson's Ratio (v) | - | unmeasured | unmeasured | unmeasured | unmeasured | unmeasured | unmeasured |

EP 4 538 241 A1

(continued)

| | unit | No.19 | No.20 | No.21 | No22 | No23 | No24 |
|---|---|---|---|---|---|---|---|
| Glass | | | | | | | |
| Specific Modulus | GPa · cm$^3$/g | unmeasured | unmeasured | unmeasured | unmeasured | unmeasured | unmeasured |
| Transmittance @ 1200 nm | % | unmeasured | unmeasured | unmeasured | unmeasured | unmeasured | unmeasured |
| Transmittance @ 800 nm | | unmeasured | unmeasured | unmeasured | unmeasured | unmeasured | unmeasured |
| Transmittance @ 555 nm | | unmeasured | unmeasured | unmeasured | unmeasured | unmeasured | unmeasured |
| Transmittance @ 380 nm | | unmeasured | unmeasured | unmeasured | unmeasured | unmeasured | unmeasured |
| Transmittance @ 300 nm | | unmeasured | unmeasured | unmeasured | unmeasured | unmeasured | unmeasured |
| L* | - | unmeasured | unmeasured | unmeasured | unmeasured | unmeasured | unmeasured |
| a* | | unmeasured | unmeasured | unmeasured | unmeasured | unmeasured | unmeasured |
| b* | | unmeasured | unmeasured | unmeasured | unmeasured | unmeasured | unmeasured |
| Appearance | - | clear and colorless | clear and colorless | clear and colorless | clear and colorless | clear and colorless | clear and colorless |
| Surface Roughness of Princinal Surface Ra | nm | unmeasured | unmeasured | unmeasured | unmeasured | unmeasured | unmeasured |
| Surface Roughness of End Surface Ra | | unmeasured | unmeasured | unmeasured | unmeasured | unmeasured | unmeasured |
| Waviness | μ m | unmeasured | unmeasured | unmeasured | unmeasured | unmeasured | unmeasured |

[Table 11]

| | unit | No25 | No26 | No27 | No28 | No29 | No30 |
|---|---|---|---|---|---|---|---|
| Glass | | | | | | | |
| Density | g/cm$^3$ | 2.425 | 2.367 | 2.428 | 2.4282 | 2.4289 | 2.4311 |
| β -OH | /mm | unmeasured | unmeasured | unmeasured | unmeasured | unmeasured | unmeasured |
| CLTE 30-380°C | ×10$^{-7}$/°C | 21.2 | 21.1 | 21.0 | 21.0 | 20.8 | 21.2 |
| CLTE 30-750°C | | 27.7 | 25.1 | 27.3 | 27.6 | 27.6 | 289 |
| Glass Transition Point Tg | °C | 721 | 801 | 728 | 727 | 724 | 723 |
| Deformation Point Tf | | 832 | unmeasured | 803 | 799 | 797 | 838 |
| 10$^4$ | | 1326 | 1357 | 1335 | 1330 | 1331 | unmeasured |
| 10$^{35}$ | | 1401 | 1434 | 1408 | 1405 | 1405 | unmeasured |
| 10$^3$ | | 1487 | 1521 | 1492 | 1490 | 1491 | unmeasured |
| 10$^{25}$ | | 1587 | 1622 | 1589 | 1590 | 1591 | unmeasured |
| 10$^2$ | | 1705 | 1740 | 1702 | 1708 | 1709 | unmeasured |
| Liquidus Temperature | | 1328 | 1536 | unmeasured | 1344 | unmeasured | 1355 |
| Permittivity 1MHz ε | - | unmeasured | unmeasured | unmeasured | unmeasured | unmeasured | unmeasured |
| Dielectric Tangent 1MHz tans | 10$^{-3}$ | unmeasured | unmeasured | unmeasured | unmeasured | unmeasured | unmeasured |
| IMHz ε × tanδ | | unmeasured | unmeasured | unmeasured | unmeasured | unmeasured | unmeasured |
| Volume Resistance @150°C | Ω · cm | unmeasured | unmeasured | unmeasured | unmeasured | unmeasured | unmeasured |
| Volume Resistance @250°C | | unmeasured | unmeasured | unmeasured | unmeasured | unmeasured | unmeasured |
| Volume Resistance @350°C | | unmeasured | unmeasured | unmeasured | unmeasured | unmeasured | unmeasured |
| Young's Modulus (E) | GPa | unmeasured | unmeasured | unmeasured | unmeasured | unmeasured | unmeasured |
| Modulus of Rigidity (G) | | unmeasured | unmeasured | unmeasured | unmeasured | unmeasured | unmeasured |
| Poisson's Ratio (v ) | - | unmeasured | unmeasured | unmeasured | unmeasured | unmeasured | unmeasured |
| Specific Modulus | GPa · cm$^3$/g | unmeasured | unmeasured | unmeasured | unmeasured | unmeasured | unmeasured |

(continued)

|  | unit | No25 | No26 | No27 | No28 | No29 | No30 |
|---|---|---|---|---|---|---|---|
| Glass | | | | | | | |
| Transm it-tance @ 1200nm | % | unmeasured | unmeasured | unmeasured | unmeasured | unmeasured | unmeasured |
| Transm ittance @800nm | | unmeasured | unmeasured | unmeasured | unmeasured | unmeasured | unmeasured |
| Transm ittance @555nm | | unmeasured | unmeasured | unmeasured | unmeasured | unmeasured | unmeasured |
| Transm ittance @ 380nm | | unmeasured | unmeasured | unmeasured | unmeasured | unmeasured | unmeasured |
| Transm ittance @ 300nm | | unmeasured | unmeasured | unmeasured | unmeasured | unmeasured | unmeasured |
| L* | - | unmeasured | unmeasured | unmeasured | unmeasured | unmeasured | unmeasured |
| a* | | unmeasured | unmeasured | unmeasured | unmeasured | unmeasured | unmeasured |
| b* | | unmeasured | unmeasured | unmeasured | unmeasured | unmeasured | unmeasured |
| Appearance | - | clear and colorless | clear and colorless | clear and colorless | clear and colorless | clear and colorless | clear and colorless |
| Surface Roughness of Princinal Surface Ra | nm | unmeasured | unmeasured | unmeasured | unmeasured | unmeasured | unmeasured |
| Surface Roughness of End Surface Ra | | unmeasured | unmeasured | unmeasured | unmeasured | unmeasured | unmeasured |
| Waviness | $\mu$m | unmeasured | unmeasured | unmeasured | unmeasured | unmeasured | unmeasured |

[Table 12]

|  | unit | No31 | No32 | No33 | No34 | No35 | No36 |
|---|---|---|---|---|---|---|---|
| Glass | | | | | | | |
| Density | g/cm$^3$ | 2331 | 2313 | 2350 | 23459 | 2.4853 | 25133 |
| $\beta$-OH | /mm | unmeasured | unmeasured | unmeasured | unmeasured | unmeasured | unmeasured |
| CLTE 30-380°C | $\times 10^{-7}$/°C | 195 | 18.1 | unmeasured | unmeasured | unmeasured | unmeasured |
| CLTE 30-750°C | | 20.8 | 20.0 | unmeasured | unmeasured | unmeasured | unmeasured |

(continued)

| | unit | No31 | No32 | No33 | No34 | No35 | No36 |
|---|---|---|---|---|---|---|---|
| Glass | | | | | | | |
| Glass Transition Point Tg | °C | 794 | 766 | unmeasured | unmeasured | unmeasured | unmeasured |
| Deformation Point Tf | | 851 | 898 | unmeasured | unmeasured | unmeasured | unmeasured |
| $10^4$ | | unmeasured | unmeasured | unmeasured | unmeasured | unmeasured | unmeasured |
| $10^{35}$ | | unmeasured | unmeasured | unmeasured | unmeasured | unmeasured | unmeasured |
| $10^3$ | | unmeasured | unmeasured | unmeasured | unmeasured | unmeasured | unmeasured |
| $10^{25}$ | | unmeasured | unmeasured | unmeasured | unmeasured | unmeasured | unmeasured |
| $10^2$ | | unmeasured | unmeasured | unmeasured | unmeasured | unmeasured | unmeasured |
| Liquidus Temperature | | unmeasured | unmeasured | unmeasured | unmeasured | unmeasured | unmeasured |
| Permittivity 1MHz ε | - | unmeasured | unmeasured | unmeasured | unmeasured | unmeasured | unmeasured |
| Dielectric Tangent 1MHz tans | $10^{-3}$ | unmeasured | unmeasured | unmeasured | unmeasured | unmeasured | unmeasured |
| IMHz ε $\times$ tanδ | | unmeasured | unmeasured | unmeasured | unmeasured | unmeasured | unmeasured |
| Volume Resistance @150°C | Ω·cm | unmeasured | unmeasured | unmeasured | unmeasured | unmeasured | unmeasured |
| Volume Resistance @250°C | | unmeasured | unmeasured | unmeasured | unmeasured | unmeasured | unmeasured |
| Volume Resistance @350°C | | unmeasured | unmeasured | unmeasured | unmeasured | unmeasured | unmeasured |
| Young's Modulus (E) | GPa | unmeasured | unmeasured | unmeasured | unmeasured | unmeasured | unmeasured |
| Modulus of Rigidity (G) | | unmeasured | unmeasured | unmeasured | unmeasured | unmeasured | unmeasured |
| Poisson's Ratio (v ) | - | unmeasured | unmeasured | unmeasured | unmeasured | unmeasured | unmeasured |
| Specific Modulus | GPa · $cm^3$/g | unmeasured | unmeasured | unmeasured | unmeasured | unmeasured | unmeasured |

(continued)

| | unit | No31 | No32 | No33 | No34 | No35 | No36 |
|---|---|---|---|---|---|---|---|
| Glass | | | | | | | |
| Transm it-tance @ 1200nm | % | unmeasured | unmeasured | unmeasured | unmeasured | unmeasured | unmeasured |
| Transm ittance @800nm | | unmeasured | unmeasured | unmeasured | unmeasured | unmeasured | unmeasured |
| Transm ittance @555nm | | unmeasured | unmeasured | unmeasured | unmeasured | unmeasured | unmeasured |
| Transm ittance @ 380nm | | unmeasured | unmeasured | unmeasured | unmeasured | unmeasured | unmeasured |
| Transm ittance @ 300nm | | unmeasured | unmeasured | unmeasured | unmeasured | unmeasured | unmeasured |
| L* | - | unmeasured | unmeasured | unmeasured | unmeasured | unmeasured | unmeasured |
| a* | | unmeasured | unmeasured | unmeasured | unmeasured | unmeasured | unmeasured |
| b* | | unmeasured | unmeasured | unmeasured | unmeasured | unmeasured | unmeasured |
| Appearance | - | clear and colorless | clear and colorless | clear and colorless | clear and colorless | clear and colorless | clear and colorless |
| Surface Roughness of Princinal Surface Ra | nm | unmeasured | unmeasured | unmeasured | unmeasured | unmeasured | unmeasured |
| Surface Roughness of End Surface Ra | | unmeasured | unmeasured | unmeasured | unmeasured | unmeasured | unmeasured |
| Waviness | μm | unmeasured | unmeasured | unmeasured | unmeasured | unmeasured | unmeasured |

[Table 13]

| | unit | No37 | No38 | No39 | No.40 |
|---|---|---|---|---|---|
| Crystallized Glass (Crystallization Conditions 1000°C -2h) | | | | | |
| Density | g/cm$^3$ | unmeasured | unm easured | 3212 | 3143 |
| CLTE 30-380°C | $\times 10^{-7}$/°C | unmeasured | unmeasured | 50.1 | 47.6 |
| CLTE 30-750°C | | unmeasured | unmeasured | 523 | 499 |
| Transmittance @1200nm | % | unmeasured | unmeasured | unmeasured | unmeasured |
| Transmittance@800nm | | unmeasured | unmeasured | unmeasured | unmeasured |
| Transmittance@555nm | | unmeasured | unmeasured | unmeasured | unmeasured |
| Transmittance @380nm | | unmeasured | unmeasured | unmeasured | unmeasured |
| Transmittance@300nm | | unmeasured | unmeasured | unmeasured | unmeasured |

(continued)

| | unit | No37 | No38 | No39 | No.40 |
|---|---|---|---|---|---|
| Crystallized Glass (Crystallization Conditions 1000°C -2h) | | | | | |
| L* | | unmeasured | unmeasured | unmeasured | unmeasured |
| a* | - | unmeasured | unmeasured | unmeasured | unmeasured |
| b* | | unmeasured | unmeasured | unmeasured | unmeasured |
| Appearance | - | white | white | white | white |
| Type of Crystals | | unmeasured | unmeasured | $ZnAl_2O_4$ ,$ZrO_2$ | $ZnAl_2O_4$,$ZrO_2$ |
| Crystallized Glass (Crystallization Conditions 775°C -24h → 900°C -2h) | | | | | |
| Density | $g/cm^3$ | 3.064 | 3.035 | 3212 | 3143 |
| CLTE 30-380°C | $\times 10^{-7}$/°C | 43.2 | 43.5 | 49.6 | 47.5 |
| CLTE 30-750°C | | 46.1 | 463 | 522 | 50.2 |
| Transmittance@1200nm | | 20.4 | 226 | 86.6 | 82.3 |
| Transmittance@800nm | | 83 | 8.0 | 828 | 642 |
| Transmittance@555nm | % | 1.6 | 1.1 | 64.4 | 23.2 |
| Transmittance@380nm | | 0.0 | 0.0 | 51 | 0.1 |
| Transmittance@300nm | | 0.0 | 0.0 | 05 | 0.1 |
| L* | | 143 | 112 | 83.5 | 563 |
| a* | - | 73 | 86 | -18 | 99 |
| b* | | 20.2 | 172 | 342 | 440 |
| Appearance | - | clear and color-lesss | clear and col-orless | white | white |
| Type of Crystals | | $ZnAl_2O_4$,$Al_2SiO_5$ | $ZnAl_2O_4$,$Al_2SiO_5$ | $ZnAl_2O_4$,$ZrO_2$ | $ZnAl_2O_4$,$ZrO_2$ |
| Crystallized Glass (Crystallization Conditions 775°C -24h → 1000°C -2h) | | | | | |
| Density | $g/cm^3$ | 3 004 | 3.008 | 3215 | 3142 |
| CLTE 30-380°C | $\times 10^{-7}$/°C | 43.6 | 43.4 | 499 | 48.8 |
| CLTE 30-750°C | | 459 | 45.8 | 523 | 513 |
| Transmittance@1200nm | | 28.6 | 311 | 850 | 82.8 |
| Transmittance@800nm | | 139 | 160 | 81.4 | 64.7 |
| Transmittance@555nm | % | 45 | 52 | 68.7 | 21.4 |
| Transmittance@380nm | | 0.1 | 0.1 | 120 | 0.0 |
| Transmittance@300nm | | 0.0 | 02 | 05 | 0.0 |
| L* | | 25.7 | 279 | 85.8 | 54.6 |
| a* | - | 5.0 | 58 | -26 | 115 |
| b* | | 233 | 269 | 23.8 | 483 |
| Appearance | - | white | white | yellow | ginger |
| Type of Crystals | | $ZnAl_2O_4$,$Al_2SiO_5$ | $ZnAl_2O_4$, $Al_2O_3$, $SiO_2$, | $ZnAl_2O_4$ ,$ZrO_2$ | $ZnAl_2O_4$ ,$Al_2SiO_5$ |

[Table 14]

| | unit | No.41 | No.42 | No.43 | No.44 | No.45 | No.46 |
|---|---|---|---|---|---|---|---|
| $SiO_2$ | | 59.8 | 59.8 | 59.8 | 59.8 | 59.8 | 59.8 |
| $Al_2O_3$ | | 20.0 | 20.0 | 20.0 | 20.0 | 20.0 | 20.0 |
| $ZnO$ | | 20.0 | 20.0 | 20.0 | 20.0 | 20.0 | 20.0 |
| $SnO_2$ | | 0.1 | 0.1 | 0.1 | 0.1 | 0.1 | 0.1 |
| $TiO_2$ | | 0 | 0 | 0 | 0.1 | 0 | 0 |
| $ZrO_2$ | | 0 | 0 | 0 | 0 | 0 | 0 |
| $HfO_2$ | | 0 | 0 | 0 | 0 | 0 | 0 |
| $Li_2O$ | | 0 | 0 | 0 | 0 | 0 | 0 |
| $Na_2O$ | | 0 | 0 | 0 | 0 | 0 | 0 |
| $K_2O$ | | 0 | 0 | 0 | 0 | 0 | 0 |
| $MgO$ | | 0 | 0 | 0 | 0 | 0 | 0 |
| $CaO$ | | 0 | 0 | 0 | 0 | 0 | 0 |
| $SrO$ | % by mass | 0 | 0 | 0 | 0 | 0 | 0 |
| $BaO$ | | 0 | 0 | 0 | 0 | 0 | 0 |
| $P_2O_5$ | | 0 | 0 | 0 | 0 | 0 | 0 |
| $B_2O_3$ | | 0 | 0 | 0 | 0 | 0 | 0 |
| $Fe_2O_3$ | | 0.002 | 0.002 | 0002 | 0.002 | 0.100 | 0002 |
| $V_2O_5$ | | 0.001 | 0 | 0 | 0 | 0 | 0 |
| $Cr_2O_3$ | | 0 | 0 | 0 | 0 | 0 | 0.1 |
| $MoO_3$ | | 0 | 0 | 0 | 0 | 0 | 0 |
| $NiO$ | | 0 | 0.1 | 0 | 0 | 0 | 0 |
| $CuO$ | | 0.1 | 0 | 0 | 0 | 0 | 0 |
| $MnO_2$ | | 0 | 0 | 0.1 | 0 | 0 | 0 |
| $Nd_2O_3$ | | 0 | 0 | 0 | 0 | 0 | 0 |
| $WO_3$ | | 0 | 0 | 0 | 0 | 0 | 0 |
| $CoO$ | | 0 | 0 | 0 | 0 | 0 | 0 |
| $Sb_2O_3$ | | 0.1 | 0 | 0.001 | 0 | 15 | 30.0 |
| $As_2O_3$ | | 0 | 0.10 | 0 | 0.001 | 30.0 | 70.0 |
| $SO_3$ | ppm | 30.0 | 20 | 100 | 50 | 40 | 100.0 |
| $Pt$ | | 0.001 | 02 | 0.4 | 0.6 | 08 | 1 |
| $Rh$ | | 0.01 | 02 | 0.4 | 06 | 08 | 0.001 |
| Li+Na+K | % by mass | 0 | 0 | 0 | 0 | 0 | 0 |
| Al/Zn | - | 1 | 1 | 1 | 1 | 1 | 1 |
| Zn/ (Si+B) | - | 033 | 033 | 033 | 033 | 033 | 033 |
| (Li+Na+K)/Fe | - | 0 | 0 | 0 | 0 | 0 | 0 |
| Mg/(Mg+B) | - | - | - | - | - | - | - |
| Zn+B+P | - | 20 | 20 | 20 | 20 | 20 | 20 |
| (Zn+B+P)/Zn | - | 1.000 | 1000 | 1000 | 1.000 | 1000 | 100.0 |
| Cr+V | % by mass | 0.001 | 0 | 0 | 0 | 0 | 0.1 |

(continued)

|  | unit | No.41 | No.42 | No.43 | No.44 | No.45 | No.46 |
|---|---|---|---|---|---|---|---|
| Ti+Fe+V+Cr+Mo+Ni+Cu+ Mn+Nd+W+Co | % by mass | 0.103 | 0.102 | 0102 | 0.102 | 0.100 | 0102 |
| (Si+Al)/ (Ti+Fe+V+Cr+Mo+Ni+Cu+Mn+Nd+W+Co) | - | 774.8 | 782.4 | 782.4 | 782.4 | 798.0 | 782.4 |

[Table 15]

|  | unit | No.47 | No.48 | No.49 | No.50 | No.51 | No52 |
|---|---|---|---|---|---|---|---|
| $SiO_2$ | % by mass | 59.8 | 59.8 | 59.8 | 59.8 | 59.8 | 589 |
| $Al_2O_3$ | | 200 | 200 | 200 | 200 | 200 | 20.0 |
| $ZnO$ | | 20.0 | 20.0 | 20.0 | 20.0 | 20.0 | 20.0 |
| $SnO_2$ | | 0.1 | 0.1 | 0.1 | 0.1 | 0.1 | 0.1 |
| $TiO_2$ | | 0 | 0 | 0 | 0 | 0 | 0.1 |
| $ZrO_2$ | | 0 | 0 | 0 | 0 | 0 | 0 |
| $HfO_2$ | | 0 | 0 | 0 | 0 | 0 | 0 |
| $Li_2O$ | | 0 | 0 | 0 | 0 | 0 | 0 |
| $Na_2O$ | | 0 | 0 | 0 | 0 | 0 | 0 |
| $K_2O$ | | 0 | 0 | 0 | 0 | 0 | 0 |
| $MgO$ | | 0 | 0 | 0 | 0 | 0 | 0 |
| $CaO$ | | 0 | 0 | 0 | 0 | 0 | 0 |
| $SrO$ | | 0 | 0 | 0 | 0 | 0 | 0 |
| $BaO$ | | 0 | 0 | 0 | 0 | 0 | 0 |
| $P_2O_5$ | | 0 | 0 | 0 | 0 | 0 | 0 |
| $B_2O_3$ | | 0 | 0 | 0 | 0 | 0 | 0 |
| $Fe_2O_3$ | | 0.002 | 0.002 | 0.002 | 0.002 | 0.002 | 0.002 |
| $V_2O_5$ | | 0 | 0 | 0 | 0.1 | 0 | 0.1 |
| $Cr_2O_3$ | | 0 | 0 | 0 | 0 | 0 | 0.1 |
| $MoO_3$ | | 0 | 0.1 | 0 | 0 | 0 | 0.1 |
| $NiO$ | | 0 | 0 | 0 | 0 | 0 | 0.1 |
| $CuO$ | | 0 | 0 | 0 | 0 | 0 | 0.1 |
| $MnO_2$ | | 0 | 0 | 0 | 0 | 0 | 0.1 |
| $Nd_2O_3$ | | 0.1 | 0 | 0 | 0 | 0 | 0.1 |
| $WO_3$ | | 0 | 0 | 0.1 | 0 | 0 | 0.1 |
| $CoO$ | | 0 | 0 | 0 | 0 | 0.1 | 0.1 |
| $Sb_2O_3$ | ppm | 100 | 0 | 0 | 0 | 0 | 0 |
| $As_2O_3$ | | 150 | 0 | 0 | 0 | 0 | 0 |
| $SO_3$ | | 150 | 300 | 450 | 500 | 25 | 10 |
| $Pt$ | | 13 | 1.6 | 1.8 | 001 | 2 | 25 |
| $Rh$ | | 13 | *02* | 45 | *02* | 2.1 | 0.2 |
| $Li+Na+K$ | % by mass | 0 | 0 | 0 | 0 | 0 | 0 |
| $Al/Zn$ | - | 1.00 | 1.00 | 1.00 | 1.00 | 1.00 | 1.00 |

(continued)

|  | unit | No.47 | No.48 | No.49 | No.50 | No.51 | No52 |
|---|---|---|---|---|---|---|---|
| Zn/ (Si+B) | - | 033 | 033 | 033 | 033 | 033 | 03396 |
| (Li+Na+K)/Fe | - | 0 | 0 | 0 | 0 | 0 | 0 |
| Mg/(Mg+B) | - |  | - | - | - | - | - |
| Zn+B+P | - | 20.00 | 20.00 | 20.00 | 20.00 | 20.00 | 20.00 |
| (Zn+B+P)/Zn | - | 1.000 | 1.000 | 1.000 | 1.000 | 100.0 | 1.000 |
| Cr+V | % by mass | 0 | 0 | 0 | 0.1 | 0 | 0.2 |
| Ti+Fe+V+Cr+Mo+Ni+Cu+ Mn+Nd+W+Co | % by mass | 0.102 | 0.102 | 0.102 | 0.102 | 0.102 | 1.002 |
| (Si+Al)/ (Ti+Fe+V+Cr+Mo+Ni+C u+Mn+Nd+W+Co) | - | 782.4 | 782.4 | 782.4 | 782.4 | 782.4 | 78.7 |

[Table 16]

|  | unit | No53 | No54 | No55 | No56 | No57 | No58 |
|---|---|---|---|---|---|---|---|
| $SiO_2$ |  | 58.9 | 58.7 | 55.6 | 55.2 | 50.2 | 40.4 |
| $Al_2O_3$ |  | 20.0 | 20.0 | 22.1 | 22.1 | 22.1 | 22.1 |
| ZnO |  | 20.0 | 20.0 | 001 | 02 | 52 | 15.0 |
| $SnO_2$ |  | 0.1 | 0.1 | 02 | 02 | 02 | 02 |
| $TiO_2$ |  | 0 | 0 | 0 | 0 | 0 | 0 |
| $ZrO_2$ |  | 0 | 0 | 0 | 0 | 0 | 0 |
| $HfO_2$ |  | 0 | 0 | 0 | 0 | 0 | 0 |
| $Li_2O$ |  | 0 | 0 | 0 | 0 | 0 | 0 |
| $Na_2O$ |  | 0 | 0 | 002 | 0.02 | 002 | 002 |
| $K_2O$ |  | 0 | 0 | 001 | 0.01 | 001 | 001 |
| MgO |  | 0 | 0 | 58 | 58 | 58 | 58 |
| CaO |  | 0 | 0 | 0 | 0 | 0 | 0 |
| SrO | % by mass | 0 | 0 | 0 | 0 | 0 | 0 |
| BaO |  | 0 | 0 | 0 | 0 | 0 | 0 |
| $P_2O_5$ |  | 0 | 0 | 103 | 103 | 103 | 103 |
| $B_2O_3$ |  | 0 | 0 | 5 | 5 | 5 | 5 |
| $Fe_2O_3$ |  | 0.002 | 0002 | 0002 | 0.002 | 0002 | 0002 |
| $V_2O_5$ |  | 0.25 | 08 | 025 | 08 | 08 | 08 |
| $Cr_2O_3$ |  | 0.75 | 02 | 0.75 | 02 | 02 | 02 |
| $MoO_3$ |  | 0 | 0 | 0 | 0 | 0 | 0 |
| NiO |  | 0 | 0 | 0 | 0 | 0 | 0 |
| CuO |  | 0 | 0 | 0 | 0 | 0 | 0 |
| $MnO_2$ |  | 0 | 0 | 0 | 0 | 0 | 0 |
| $Nd_2O_3$ |  | 0 | 0 | 0 | 0 | 0 | 0 |
| $WO_3$ |  | 0 | 0 | 0 | 0 | 0 | 0 |
| CoO |  | 0 | 02 | 0 | 02 | 02 | 02 |

(continued)

| | unit | No53 | No54 | No55 | No56 | No57 | No58 |
|---|---|---|---|---|---|---|---|
| $Sb_2O_3$ | | 0 | 0 | 0 | 0 | 0 | 0 |
| $As_2O_3$ | | 0 | 0 | 0 | 0 | 0 | 0 |
| $SO_3$ | ppm | 30 | 30 | 50 | 50 | 50 | 50.0 |
| Pt | | 4 | 65 | 08 | 08 | 08 | 08 |
| Rh | | 02 | 12 | 1.1 | 11 | 1.1 | 1.1 |
| Li+Na+K | % by mass | 0 | 0 | 003 | 0.03 | 003 | 003 |
| Al/Zn | - | 1 | 1 | 2210.00 | 11050 | 425 | 1.47 |
| Zn/ (Si+B) | - | 034 | 034 | 0.00017 | 000332 | 009 | 033 |
| (Li+Na+K)/Fe | - | 0 | 0 | 15.00 | 15.00 | 15.00 | 15.00 |
| Mg/(Mg+B) | - | - | - | 054 | 054 | 054 | 054 |
| Zn+B+P | - | 20 | 20 | 1531 | 155 | 20.5 | 30.3 |
| (Zn+B+P)/Zn | - | 1.000 | 1000 | 1531 | 77.5 | 3942 | 2020 |
| Cr+V | % by mass | 1 | 1 | 1 | 1 | 1 | 1 |
| Ti+Fe+V+Cr+Mo+Ni+Cu+ Mn+Nd+W+Co | % by mass | 1.002 | 1202 | 1002 | 1.202 | 1202 | 1202 |
| (Si+Al)/ (Ti+Fe+V+Cr+Mo+Ni+Cu+Mn+Nd+W+Co) | - | 78.7 | 65.5 | 77.5 | 643 | 60.1 | 52.0 |

[Table 17]

| | unit | No.41 | No.42 | No.43 | No.44 | No.45 | No.46 |
|---|---|---|---|---|---|---|---|
| Glass | | | | | | | |
| Density | g/cm$^3$ | unmeasured | unmeasured | unmeasured | unmeasured | unmeasured | unmeasured |
| β -OH | /mm | 0.05 | 005 | 005 | 005 | 005 | 005 |
| CLTE 30-380°C | ×10$^{-7}$/°C | 23.9 | 23.6 | 240 | 23.8 | 23.7 | 23.7 |
| CLTE 30-750°C | | 27.8 | 28.2 | 274 | 28.7 | 28.9 | 27.7 |
| Glass Transition Point Tg | °C | 736 | 740 | 735 | 737 | 740 | 743 |
| Deformation Point Tf | | 779 | 774 | 777 | 779 | 778 | 779 |
| 10$^4$ | | unmeasured | unmeasured | unmeasured | unmeasured | unmeasured | unmeasured |
| 10$^{35}$ | | unmeasured | unmeasured | unmeasured | unmeasured | unmeasured | unmeasured |
| 10$^3$ | | unmeasured | unmeasured | unmeasured | unmeasured | unmeasured | unmeasured |
| 10$^{25}$ | | unmeasured | unmeasured | unmeasured | unmeasured | unmeasured | unmeasured |
| 10$^2$ | | unmeasured | unmeasured | unmeasured | unmeasured | unmeasured | unmeasured |
| Liquidus Temperature | | unmeasured | unmeasured | unmeasured | unmeasured | unmeasured | unmeasured |
| Permittivity 1MHz ε | - | unmeasured | unmeasured | unmeasured | unmeasured | unmeasured | unmeasured |
| Dielectric Tangent 1MHz tanδ | 10$^{-3}$ | unmeasured | unmeasured | unmeasured | unmeasured | unmeasured | unmeasured |
| 1MHz ε × tanδ | | unmeasured | unmeasured | unmeasured | unmeasured | unmeasured | unmeasured |
| Volume Resistance @150°C | Ω·cm | unmeasured | unmeasured | unmeasured | unmeasured | unmeasured | unmeasured |
| Volume Resistance @250°C | | unmeasured | unmeasured | unmeasured | unmeasured | unmeasured | unmeasured |
| Volume Resistance @350°C | | unmeasured | unmeasured | unmeasured | unmeasured | unmeasured | unmeasured |
| Young's Modulus (E) | GPa | unmeasured | unmeasured | unmeasured | unmeasured | unmeasured | unmeasured |
| Modulus of Rigidity (G) | | unmeasured | unmeasured | unmeasured | unmeasured | unmeasured | unmeasured |
| Poisson's Ratio (v ) | - | unmeasured | unmeasured | unmeasured | unmeasured | unmeasured | unmeasured |
| Specific Modulus | GPa·cm$^3$/g | unmeasured | unmeasured | unmeasured | unmeasured | unmeasured | unmeasured |

47

(continued)

| | unit | No.41 | No.42 | No.43 | No.44 | No.45 | No.46 |
|---|---|---|---|---|---|---|---|
| Glass | | | | | | | |
| Transmittance @ 1200nm | % | 90.3 | 90.2 | 76.4 | 90.6 | 90.6 | 719 |
| Transmittance @ 800nm | | 90.5 | 89.9 | 77.2 | 90.8 | 90.8 | 824 |
| Transmittance @ 555nm | | 90.1 | 90.0 | 64.0 | 90.3 | 90.2 | 89.7 |
| Transmittance @ 380nm | | 818 | 793 | 784 | 79.6 | 768 | 64.2 |
| Transmittance @ 300nm | | 28.1 | 5.7 | 25.9 | 23.5 | 129 | 0.4 |
| L* | - | 95.9 | 84.1 | 96.1 | 960 | 958 | 75.5 |
| a* | | -05 | 08 | -05 | -06 | -10 | -14.7 |
| b* | | 15 | 343 | 1.8 | 23 | 1.7 | 199 |
| Appearance | - | clear and colorless | brown | clear and colorless | clear and colorless | light green | green |
| Surface Roughness of Principal Surface Ra | nm | 001 | unmeasured | unmeasured | unmeasured | unmeasured | unmeasured |
| Surface Roughness of End Surface Ra | | 0.0001 | unmeasured | unmeasured | unmeasured | unmeasured | unmeasured |
| Waviness | μm | 0.001 | unmeasured | unmeasured | unmeasured | unmeasured | unmeasured |

[Table 18]

| | unit | No.47 | No.48 | No.49 | No.50 | No.51 | No.52 |
|---|---|---|---|---|---|---|---|
| | | Glass | | | | | |
| Density | g/cm$^3$ | unmeasured | unmeasured | unmeasured | unmeasured | unmeasured | unmeasured |
| $\beta$ -OH | /mm | 005 | 005 | 0.05 | 007 | 007 | 004 |
| CLTE 30-380°C | $\times 10^{-7}$/°C | 24.2 | 239 | 23.8 | 23.8 | 240 | unmeasured |
| CLTE 30-750°C | | 28.0 | 27.7 | 28.1 | 27.6 | 27.6 | unmeasured |
| Glass Transition Point Tg | °C | 739 | 739 | 737 | 743 | 738 | 738 |
| Deformation Point Tf | | 780 | 777 | 773 | 779 | 785 | 785 |
| $10^4$ | | unmeasured | unmeasured | unmeasured | unmeasured | unmeasured | unmeasured |
| $10^{35}$ | | unmeasured | unmeasured | unmeasured | unmeasured | unmeasured | unmeasured |
| $10^3$ | | unmeasured | unmeasured | unmeasured | unmeasured | unmeasured | unmeasured |
| $10^{25}$ | | unmeasured | unmeasured | unmeasured | unmeasured | unmeasured | unmeasured |
| $10^2$ | | unmeasured | unmeasured | unmeasured | unmeasured | unmeasured | unmeasured |
| Liquidus Temperature | | unmeasured | unmeasured | unmeasured | unmeasured | unmeasured | unmeasured |
| Permittivity 1MHz $\varepsilon$ | - | unmeasured | unmeasured | unmeasured | unmeasured | unmeasured | unmeasured |
| Dielectric Tangent 1MHz tan$\delta$ | $10^{-3}$ | unmeasured | unmeasured | unmeasured | unmeasured | unmeasured | unmeasured |
| 1MHz $\varepsilon \times$ tan$\delta$ | | unmeasured | unmeasured | unmeasured | unmeasured | unmeasured | unmeasured |
| Volume Resistance @ 150 °C | $\Omega\cdot$cm | unmeasured | unmeasured | unmeasured | unmeasured | unmeasured | unmeasured |
| Volume Resistance @ 250 °C | | unmeasured | unmeasured | unmeasured | unmeasured | unmeasured | unmeasured |
| Volume Resistance @ 350 °C | | unmeasured | unmeasured | unmeasured | unmeasured | unmeasured | unmeasured |
| Young's Modulus (E) | GPa | unmeasured | unmeasured | unmeasured | unmeasured | unmeasured | unmeasured |
| Modulus of Rigidity (G) | | unmeasured | unmeasured | unmeasured | unmeasured | unmeasured | unmeasured |
| Poisson's Ratio (v ) | - | unmeasured | unmeasured | unmeasured | unmeasured | unmeasured | unmeasured |
| Specific Modulus | GPa $\cdot$ cm$^3$/g | unmeasured | unmeasured | unmeasured | unmeasured | unmeasured | unmeasured |

| | unit | No.47 | No.48 | No.49 | No.50 | No.51 | No.52 |
|---|---|---|---|---|---|---|---|
| Glass | | | | | | | |
| Transmittance @ 1200nm | % | 87.7 | 903 | 90.0 | 904 | 81.9 | 73.8 |
| Transmittance @ 800nm | | 63.5 | 86.4 | 901 | 90.5 | 81.1 | 885 |
| Transmittance @ 555nm | | 554 | 90.1 | 89.7 | 901 | 791 | 323 |
| Transmittance @ 380nm | | 680 | 813 | 765 | 779 | 388 | 82.7 |
| Transmittance @ 300nm | | 14.4 | 27.2 | 2.7 | 181 | 0.1 | 290 |
| L* | - | 95.3 | 95.8 | 960 | 91.1 | 628 | 359 |
| a* | | -02 | -05 | -05 | -20 | 10.7 | -104 |
| b* | | 03 | 20 | 20 | 32 | -34.4 | 166 |
| Appearance | - | light aqua | clear and colorless | clear and colorless | green | blue | ultramarine to black |
| Surface Roughness of Principal Surface Ra | nm | unmeasured | unmeasured | unmeasured | unmeasured | unmeasured | unmeasured |
| Surface Roughness of End Surface Ra | | unmeasured | unmeasured | unmeasured | unmeasured | unmeasured | unmeasured |
| Waviness | μm | unmeasured | unmeasured | unmeasured | unmeasured | unmeasured | unmeasured |

[Table 19]

| | unit | No.53 | No54 | No55 | No56 | No57 | No58 |
|---|---|---|---|---|---|---|---|
| Glass | | | | | | | |
| Density | g/cm$^3$ | unmeasured | unmeasured | unmeasured | unmeasured | unmeasured | unmeasured |
| β -OH | /mm | 005 | 009 | 006 | 0.15 | 0.12 | 009 |
| CLTE 30-380°C | $\times 10^{-7}$/°C | unmeasured | unmeasured | unmeasured | 196 | unmeasured | unmeasured |
| CLTE 30-750°C | | unmeasured | unmeasured | unmeasured | 273 | unmeasured | unm easured |
| Glass Transition Point Tg | °C | 738 | 738 | 738 | unmeasured | unmeasured | unm easured |
| Deformation Point Tf | | 785 | 785 | 785 | unmeasured | unmeasured | unmeasured |
| 10$^4$ | | unmeasured | unmeasured | unmeasured | 1377 | unmeasured | unmeasured |
| 10$^{35}$ | | unmeasured | unmeasured | unmeasured | 1458 | unmeasured | unmeasured |
| 10$^3$ | | unmeasured | unmeasured | unmeasured | 1551 | unmeasured | unmeasured |
| 10$^{25}$ | | unmeasured | unmeasured | unmeasured | 1658 | unmeasured | unmeasured |
| 10$^2$ | | unmeasured | unmeasured | unmeasured | 1783 | unmeasured | unmeasured |
| Liquidus Temperature | | unmeasured | unmeasured | unmeasured | 1395 | unmeasured | unmeasured |
| Perm ittivity 1MHz ε | - | unmeasured | unmeasured | unmeasured | unmeasured | unmeasured | unmeasured |
| Dielectric Tangent 1MHz tanδ | 10$^{-3}$ | unmeasured | unmeasured | unmeasured | unmeasured | unmeasured | unmeasured |
| 1MHz ε × tanδ | | unmeasured | unmeasured | unmeasured | unmeasured | unmeasured | unmeasured |
| Volume Res is tance @150°C | Ω·cm | unmeasured | unmeasured | unmeasured | unmeasured | unmeasured | unmeasured |
| Volume Res is tance @ 250°C | | unmeasured | unmeasured | unmeasured | unmeasured | unmeasured | unmeasured |
| Volume Res is tance @ 350°C | | unmeasured | unmeasured | unmeasured | unmeasured | unmeasured | unmeasured |
| Young's M odulus (E) | GPa | unmeasured | unmeasured | unmeasured | unmeasured | unmeasured | unmeasured |
| Modulus of R igidity (G) | | unmeasured | unmeasured | unmeasured | unmeasured | unmeasured | unmeasured |
| Poisson's Ratio (v ) | - | unmeasured | unmeasured | unmeasured | unmeasured | unmeasured | unmeasured |
| Specific Modulus | GPa·cm$^3$/g | unmeasured | unmeasured | unmeasured | unmeasured | unmeasured | unmeasured |

(continued)

| | unit | No.53 | No54 | No55 | No56 | No57 | No58 |
|---|---|---|---|---|---|---|---|
| Glass | | | | | | | |
| Transmittance @ 1200nm | % | 44.5 | 609 | 512 | 708 | unmeasured | unmeasured |
| Transmittance @ 800nm | | 41.7 | 381 | 319 | 105 | unmeasured | unmeasured |
| Transmittance @ 555nm | | 11.1 | 5.4 | 38 | 2.1 | unmeasured | unmeasured |
| Transmittance @ 380nm | | 6.7 | 48.4 | 45.8 | 02 | unmeasured | unmeasured |
| Transmittance @ 300nm | | 00 | 29 | 2.7 | 00 | unmeasured | unmeasured |
| L* | - | 23.6 | 18.7 | 11.7 | 128 | unmeasured | unmeasured |
| a* | | -11.2 | -125 | -20.3 | -9.1 | unmeasured | unmeasured |
| b* | | -42 | 79 | 176 | -24 | unmeasured | unmeasured |
| Appearance | - | ultramarine to black | ultramarine to black | ultramarine to black | ultramarine to black | ultramarine to black | ultramarine to black |
| Surface Roughness of Principal Surface Ra | nm | unmeasured | unmeasured | unmeasured | unmeasured | unmeasured | 02 |
| Surface Roughness of End Surface Ra | | unmeasured | unmeasured | unmeasured | unmeasured | unmeasured | 00 |
| Waviness | μm | unmeasured | unmeasured | unmeasured | unmeasured | unmeasured | 0003 |

**EP 4 538 241 A1**

[Table 20]

|  | unit | No59 |
|---|---|---|
| Glass (Heat Treatment Conditions 950°C -24h) | | |
| Density | g/cm$^3$ | unmeasured |
| CLTE 30-380°C | $\times 10^{-7}$/°C | unmeasured |
| CLTE 30-750°C | | unmeasured |
| Transmittance @ 1200nm | % | 89.9 |
| Transmittance @ 800nm | | 86.0 |
| Transmittance @ 555nm | | 47.8 |
| Transmittance @ 380nm | | 9.7 |
| Transmittance @ 300nm | | 3.8 |
| L* | - | 75.2 |
| a* | | 65 |
| b* | | 316 |
| Appearance | - | milky white |
| Type of Crystals | | not found |

First, raw materials were formulated in the form of an oxide, a hydroxide, a carbonate, a nitrate or other forms to provide each of glasses having respective compositions shown in the tables, thus obtaining a glass batch (where the compositions shown in Tables 1 to 6 and 14 to 16 are analysis values of actually produced glasses, the analysis was performed with a scanning X-ray fluorescence spectrometer ZSX series manufactured by Rigaku Corporation, and the sums of components and the ratios between components in the tables are represented by omitting oxygen elements and subscripts, such as, for example, "Li+Na+K".) The obtained glass batch was melted at 1200 to 1800°C for 0.5 to 400 hours and the obtained molten glass was drawn by a roll process while being cooled, thus forming it into shape to have a width of 100 mm and a thickness of 5 mm. Thereafter, the glass was subjected to heat treatment at a temperature 150 to 50°C lower than the glass transition point for 30 minutes using a slow cooling furnace and the slow cooling furnace was then cooled to room temperature at -100°C/h, thus obtaining the glasses Nos. 1 to 36 and 41 to 58.

Each of the glasses Nos. 1 to 4 shown in Table 1 was subjected to heat treatment under conditions shown in Table 13 and thus crystallized. Thereafter, the glass was subjected to heat treatment at 700°C for 30 minutes and then cooled to room temperature at -100°C/h, thus obtaining crystallized glasses Nos. 37 to 40.

The glass batch having the composition No. 55 shown in Table 16 was formed into shape in the same manner as described above and then subjected to heat treatment at 950°C for 24 hours using a slow cooling furnace, and the slow cooling furnace was then cooled to room temperature at -100°C/h, thus obtaining the glass No. 59 shown in Table 20.

The produced glass samples were processed by physical polishing, chemical polishing, chemical etching, fire blasting or other types of processing to produce samples for use in evaluations for β-OH value, viscosity, liquidus temperature, liquidus viscosity, density, coefficient of linear thermal expansion, Young's modulus, modulus of rigidity, Poisson's ratio, and so on, and the evaluations were made on these samples for evaluations. Furthermore, the obtained molten glasses were each formed into shape to have a lengthwise dimension of 400 mm by an overflow process and then subjected to heat treatment at a temperature 150 to 50°C lower than the glass transition point for 30 minutes using a slow cooling furnace, and the slow cooling furnace was then cooled to room temperature at -100°C/h, thus obtaining glass sheets. The obtained glass sheets were measured in terms of surface roughness Ra of their principal surfaces, surface roughness Ra of their end surfaces, and waviness.

The respective contents of Pt and Rh in the produced samples were analyzed in the following manner with an ICP-MS instrument (Agilent 8800 manufactured by Agilent Technologies, Inc.). First, the produced glass samples were each ground and wetted with pure water and, then, perchloric acid, nitric acid, sulfuric acid, hydrofluoric acid or the like was added to the glass sample to fuse the glass sample with the acid. Thereafter, the respective contents of Pt and Rh in the sample were measured with ICP-MS (inductively coupled plasma mass spectrometry). Based on calibration curves made using prepared Pt and Rh solutions the concentrations of which had been known, the respective contents of Pt and Rh in each measurement sample were determined. The measurement modes were a He gas/HMI (low mode) for Pt and a HEHe gas/HMI (middle mode) for Rh. The mass numbers were 198 for Pt and 103 for Rh. The content of $Li_2O$ in the produced samples was analyzed with an atomic absorption spectrometer (contrAA 600 manufactured by Analytik Jena). The manner of the analysis for this component was fundamentally the same as the analysis for Pt and Rh, such as the procedure of fusion of the glass sample and the use of the calibration curve. The other components were measured, like Pt, Rh, and $Li_2O$, by ICP-MS or atomic absorption spectrometry. Otherwise, a calibration curve was made with an XRF (X-ray fluorescence) analyzer (ZSX Primus IV manufactured by Rigaku Corporation) using, as a sample for determining the calibration curve, a glass sample the concentration of which had been known by previously examining it with an ICP-MS or atomic absorption spectrometer, and the actual content of the component was determined from an XRF analysis value of the measurement sample based on the calibration curve. In doing XRF analysis, the tube voltage, the tube current, the exposure time, and so on were adjusted according to the analytical component as needed.

The β-OH value was determined by measuring the transmittance of glass with an infrared spectrophotometer (FT-IR Frontier manufactured by PerkinElmer Inc.) and using the following equation. The scan speed was 100 μm/min, the sampling pitch was 1 cm$^{-1}$, and the scan times were ten per measurement.

$$\beta\text{-OH value} = (1/X)\log(T_1/T_2)$$

X: glass thickness
T1: transmittance at a reference wavenumber of 3846 cm$^{-1}$
T2: minimum transmittance at a hydroxyl group absorption wavenumber of around 3600 cm$^{-1}$

The coefficient of linear thermal expansion was evaluated, using a sample processed to a length of 20 mm and a diameter of 3.8 mm, from its average coefficients of linear thermal expansion measured in a temperature range of 30 to 380°C and a temperature range of 30 to 750°C. A dilatometer manufactured by NETZSCH was used for the measurement. Furthermore, each glass sample was evaluated in terms of glass transition point and deformation point by measuring the thermal expansion curve in a temperature range of 30 to 750°C of the glass sample with the same measurement instrument and calculating the inflection points of the curve.

The transmittance, the lightness, and the chromaticity were evaluated with a spectro-photometer using a 4 mm thick sample having s surface roughness equivalent to an optically polished glass surface. A spectro-photometer V-670 manufactured by JASCO Corporation was used for the measurement. The spectro-photometer V-670 was fitted with an integrating sphere unit "ISN-723" and, therefore, the measured transmittance corresponds to the total transmittance. Furthermore, the measurement wavelength region was 200 to 2500 nm, the scan speed was 200 nm/min, the sampling pitch was 1 nm, and the band widths were 5 nm in a wavelength region of 200 to 800 nm and 20 nm in the other wavelength region. Prior to the measurement, a baseline correction (adjustment to 100%) and a dark measurement (adjustment to 0%) were performed. The dark measurement was conducted in a state where a barium sulfate plate attached to ISN-723 was removed. Using the measured transmittance, tristimulus values X, Y, and Z were calculated based on JIS Z 8781-4:2013 and its corresponding International Standard. The lightness and chromaticity were calculated from each stimulus value (light source C/10°).

The Young's modulus, the modulus of rigidity, and the Poisson's ratio were measured, using a plate-like sample (40 mm $\times$ 20 mm $\times$ 20 mm) surface-polished with a polishing solution containing 1200 mesh alumina powder dispersed therein, with a free resonance elastic modulus measurement device (JE-RT3 manufactured by Nihon Techno-Plus Corporation) in a room temperature environment. The specific modulus was calculated by dividing the obtained Young's modulus by density.

The density was evaluated by the Archimedes' method.

The high-temperature viscosity was evaluated in the following manner by the platinum ball pulling-up method. A mass of glass sample was crushed to an appropriate size and loaded into an alumina-made crucible. Subsequently, the alumina crucible was heated to turn the sample into a melt, the measured values of the glass viscosity at a plurality of temperatures were determined, the constant of the Vogel-Fulcher equation was calculated, a viscosity curve was created, and the temperature at each of viscosities ($10^4$ dPa·s, $10^{3.5}$ dPa·s, $10^3$ dPa·s, $10^{2.5}$ dPa·s, and $10^2$ dPa·s,) was calculated from the viscosity curve.

The liquidus temperature was evaluated in the following manner. First, glass powder sized between 300 micrometers and 500 micrometers was filled in a platinum boat with approximately 120 $\times$ 20 $\times$ 10 mm, the boat was put into an electric furnace, and the glass powder was melted at 1400 to 1800°C for 30 minutes in the furnace. Thereafter, the platinum boat was moved into an electric furnace having a linear temperature gradient and held therein for 20 hours to precipitate devitrification. The measurement sample was air cooled to room temperature, the devitrification precipitated at the interface between the platinum boat and the glass was observed, and the temperature at the portion where the devitrification was precipitated was calculated as a liquidus temperature from the temperature gradient graph of the electric furnace. Furthermore, the obtained liquidus temperature was interpolated into the high-temperature viscosity curve of the glass and the viscosity in the viscosity curve corresponding to the liquidus temperature was evaluated as a liquidus viscosity.

The permittivity, the dielectric tangent, and the low-temperature volume resistance were measured, using a sheet-like sample (50 mm × 50 mm × 3 mm) surface-polished with a polishing solution containing 1200 mesh alumina powder dispersed therein, with an impedance analyzer at a frequency of 1 MHz in a room temperature environment.

The surface roughnesses Ra of the principal surface and end surface of glass were measured by a method based on JIS B 0601:2001.

The waviness was a value measured in terms of WCA (filtered-wave center line waviness) described in JIS B 0601:2001 with a stylus surface profile measurement device. This measurement was conducted by a method based on SEMI STD D15-1296 "measurement method for surface waviness of FPD glass substrate". The cutoff value during measurement was 0.8 to 8 mm and measurement was made for a length of 300 mm in a direction perpendicular to the direction of drawing of the glass during forming into shape.

Most of the glasses in Examples Nos. 1 to 59 of the present invention were materials having a small coefficient of thermal expansion, high thermal resistance, and high thermal shock resistance. Particularly, Nos. 1 to 36, 41, 43 to 44, and 48 to 49 exhibited a high degree of clear and colorless. Nos. 42, 45 to 47, and 50 to 58 were colored brown, ultramarine to black or like. No. 59 glass was confirmed to be separated into two or more phases and its appearance took on a milky white color.

[Industrial Applicability]

The $ZnO-Al_2O_3-SiO_2$-based glass according to the present invention is preferably used for a cooker top plate, a fireproof window, a heat-resistant plate or utensil or a construction member. Specifically, the glass according to the present invention is suitable as a front window of an oil stove, a wood stove or the like, a substrate for high-technology products, such as a color filter substrate or an image sensor substrate, a setter for firing electronic components, a light diffuser plate, a furnace core tube for producing semiconductors, a mask for producing semiconductors, an optical lens, a dimension measurement member, a communication member, a construction member, a chemical reaction container, an electromagnetic cooker top plate, a heat-resistant plate or utensil, a heat-resistant cover, a fire door window, a member for astrometric telescopes, a member for space optics, a coloring material, a light absorber, a temperature regulating material, a sound insulator, a dielectric member, a linear thermal expansion coefficient adjusting material, a battery member, a member for increasing the strength of resin or other materials, a display member, a member for chemical strengthening, and so on. Furthermore, when the $ZnO-Al_2O_3-SiO_2$-based glass according to the present invention is a crystallized glass, it is preferably used for a cooker top plate, a fireproof window, a heat-resistant plate or utensil or a construction member. However, the applications of the $ZnO-Al_2O_3-SiO_2$-based glass according to the present invention are not limited to the above. Furthermore, the $ZnO-Al_2O_3-SiO_2$-based glass according to the present invention may be used in only one of the above applications or in a combination of them. Examples of the combination include an electromagnetic cooker top plate having a display function and a smartphone with a display subjected to chemical strengthening treatment.

**Claims**

1. A $ZnO-Al_2O_3-SiO_2$-based glass containing, in terms of % by mass, 40 to 90% $SiO_2$, 5 to 35% $Al_2O_3$, more than 0 to 35% ZnO, and 0% to 5% $Li_2O+Na_2O+K_2O$.

2. The $ZnO-Al_2O_3-SiO_2$-based glass according to claim 1, containing, in terms of % by mass, more than 0% $Fe_2O_3$.

3. The $ZnO-Al_2O_3-SiO_2$-based glass according to claim 1, containing, in terms of % by mass, not more than 10% $HfO_2$.

4. The $ZnO-Al_2O_3-SiO_2$-based glass according to claim 1, containing not more than 30 ppm Pt and not more than 30 ppm Rh.

5. The $ZnO-Al_2O_3-SiO_2$-based glass according to claim 1, containing, in terms of % by mass, more than 0% $MoO_3$.

6. The $ZnO-Al_2O_3-SiO_2$-based glass according to claim 1, containing, in terms of % by mass, more than 0% $SnO_2$.

7. The $ZnO-Al_2O_3-SiO_2$-based glass according to claim 1, containing, in terms of % by mass, more than 0% $Cr_2O_3$.

8. The $ZnO-Al_2O_3-SiO_2$-based glass according to claim 1, wherein $Al_2O_3/ZnO$ is 0.14 to 2300 in terms of mass ratio.

9. The $ZnO-Al_2O_3-SiO_2$-based glass according to claim 1, wherein $ZnO/(SiO_2+B_2O_3)$ is more than 0 to 0.75 in terms of mass ratio.

**10.** The ZnO-Al$_2$O$_3$-SiO$_2$-based glass according to claim 1, wherein (Li$_2$O+Na$_2$O+K$_2$O)/Fe$_2$O$_3$ is not more than 10000 in terms of mass ratio.

**11.** The ZnO-Al$_2$O$_3$-SiO$_2$-based glass according to claim 1, wherein ZnO+B$_2$O$_3$+P$_2$O$_5$ is, in terms of % by mass, more than 0 to 55%.

**12.** The ZnO-Al$_2$O$_3$-SiO$_2$-based glass according to claim 1, wherein (ZnO+B$_2$O$_3$+P$_2$O$_5$)/ZnO is not less than 1.001 in terms of mass ratio.

**13.** The ZnO-Al$_2$O$_3$-SiO$_2$-based glass according to claim 1, wherein a coefficient of linear thermal expansion at 30 to 750°C is not more than $60 \times 10^{-7}$/°C.

**14.** The ZnO-Al$_2$O$_3$-SiO$_2$-based glass according to claim 1, wherein a transmittance at a thickness of 4 mm and a wavelength of 555 nm is not less than 0.1%.

**15.** The ZnO-Al$_2$O$_3$-SiO$_2$-based glass according to claim 1, the glass having a Young's modulus of not less than 65 Gpa.

**16.** The ZnO-Al$_2$O$_3$-SiO$_2$-based glass according to any one of claims 1 to 15, the glass being a crystallized glass.

**17.** A method for producing the ZnO-Al$_2$O$_3$-SiO$_2$-based glass according to any one of claims 1 to 15, the method comprising the steps of: melting a glass raw material to obtain a molten glass; and forming the molten glass into shape, wherein a process of forming the molten glass into shape is at least one selected from among an overflow process, a float process, a down-draw process, a slot down process, a redraw process, a containerless process, a blow process, a press forming process, a roll process, a bushing process, and a tube draw process.

**18.** The method for producing a ZnO-Al$_2$O$_3$-SiO$_2$-based glass according to claim 17, further comprising the step of subjecting a glass obtained in the step of forming the molten glass into shape to heat treatment to crystallize the glass.

**19.** The ZnO-Al$_2$O$_3$-SiO$_2$-based glass according to any one of claims 1 to 15, the glass being for use in a cooker top plate, a fireproof window, a heat-resistant tableware or a construction member.

**20.** The ZnO-Al$_2$O$_3$-SiO$_2$-based glass according to claim 16, the glass being for use in a cooker top plate, a fireproof window, a heat-resistant tableware or a construction member.

# INTERNATIONAL SEARCH REPORT

| International application No. |
| --- |
| **PCT/JP2023/020637** |

**A. CLASSIFICATION OF SUBJECT MATTER**

*C03C 3/085*(2006.01)i; *C03C 3/093*(2006.01)i; *C03C 3/097*(2006.01)i; *C03C 10/02*(2006.01)i
FI: C03C3/085; C03C3/093; C03C3/097; C03C10/02

According to International Patent Classification (IPC) or to both national classification and IPC

**B. FIELDS SEARCHED**

Minimum documentation searched (classification system followed by classification symbols)

C03C1/00-14/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

INTERGLAD

**C. DOCUMENTS CONSIDERED TO BE RELEVANT**

| Category* | Citation of document, with indication, where appropriate, of the relevant passages | Relevant to claim No. |
| --- | --- | --- |
| X | JP 2019-112295 A (SCHOTT AG) 11 July 2019 (2019-07-11)<br>paragraphs [0001], [0058], [0065]-[0067], examples | 1-6, 8-20 |
| X | US 2014/0238971 A1 (EUROKERA) 28 August 2014 (2014-08-28)<br>paragraph [0007], fig. 1, 2 | 1-4, 6-11, 13-20 |
| X | WO 2020/264229 A1 (CORNING INC.) 30 December 2020 (2020-12-30)<br>paragraphs [0066]-[0100], examples, fig. 2 | 1-4, 8-11, 13-20 |
| X | JP 2014-500844 A (CORNING INC.) 16 January 2014 (2014-01-16)<br>paragraphs [0042]-[0048], examples, fig. 1 | 1-4, 6, 8-11, 13-20 |
| X | JP 2006-36625 A (NIPPON ELECTRIC GLASS CO., LTD.) 09 February 2006 (2006-02-09)<br>paragraphs [0001], [0040], examples | 1-4, 6-15, 17, 19 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **04 August 2023** | **15 August 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/020637**

| Patent document cited in search report | | | Publication date (day/month/year) | Patent family member(s) | | | Publication date (day/month/year) |
|---|---|---|---|---|---|---|---|
| JP | 2019-112295 | A | 11 July 2019 | US 2019/0194060 A1 paragraphs [0002], [0055], [0062]-[0064], examples EP 3502069 A1 CN 109956669 A KR 10-2019-0076883 A | | | |
| US | 2014/0238971 | A1 | 28 August 2014 | JP 2016-516650 A paragraph [0007], fig. 1, 2 WO 2014/132122 A2 CN 105143126 A KR 10-2015-0123884 A | | | |
| WO | 2020/264229 | A1 | 30 December 2020 | JP 2022-538415 A paragraphs [0061], [0096], examples, fig. 2 US 2020/0407268 A1 CN 114258387 A | | | |
| JP | 2014-500844 | A | 16 January 2014 | WO 2012/061464 A1 paragraphs [0039], [0045], examples, figures US 2012/0114955 A1 EP 2450320 A1 CN 103298760 A KR 10-2014-0005168 A | | | |
| JP | 2006-36625 | A | 09 February 2006 | (Family: none) | | | |

Form PCT/ISA/210 (patent family annex) (January 2015)

**REFERENCES CITED IN THE DESCRIPTION**

**Patent documents cited in the description**

- JP S3921049 B
- JP S4020182 B
- JP H01308845 A